# EUROPÄISCHE PATENTSCHRIFT

(11) **EP 3 107 383 B1**
(45) Veröffentlichungstag und Bekanntmachung des Hinweises auf die Patenterteilung: **10.04.2019**
(21) Anmeldenummer: 15715964.1
(22) Anmeldetag: 18.02.2015
(51) Int. Cl.: A01M 25/00, A01M 31/00

(54) **VORRICHTUNG ZUR HÄLTERUNG EINES KÖDERS, INSBESONDERE EINES KÖDERS FÜR NAGETIERE**
DEVICE FOR HOLDING A BAIT, IN PARTICULAR A BAIT FOR RODENTS
DISPOSITIF SUPPORT DESTINÉ À UN APPÂT, NOTAMMENT UN APPÂT POUR RONGEURS

(30) Priorität: 18.02.2014 DE 102014102034; 24.07.2014 WO PCT/EP2014/065956; 19.01.2015 WO PCT/EP2015/050852
(43) Veröffentlichungstag der Anmeldung: 28.12.2016
(73) Patentinhaber: Bittlinger, Wolfgang, 90489 Nürnberg (DE); Buchstaller, Jürgen, 90475 Nürnberg (DE)
(72) Erfinder: Bittlinger, Wolfgang, 90489 Nürnberg (DE); Buchstaller, Jürgen, 90475 Nürnberg (DE)
(74) Vertreter: Hafner & Kohl
(86) Internationale Anmeldenummer: PCT/DE2015/000072
(87) Internationale Veröffentlichungsnummer: WO 2015/124137

(56) Entgegenhaltungen:
- GB-A- 2 230 930
- GB-A- 2 333 437
- US-A- 6 016 623
- US-A1- 2002 167 409
- US-A1- 2012 102 820
- LINCOLN ET AL: "University of Nebraska - METHODS OF SEWER RAT CONTROL", METHODS OF SEWER RAT CONTROL, 2. Juli 1962 (1962-07-02), XP055195437,

## Beschreibung

Die Erfindung betrifft eine Vorrichtung zur Halterung eines Köders, insbesondere eines Köders für Nagetiere.

Derartige Vorrichtungen sind zur Schädlingsbekämpfung, d. h. insbesondere der Bekämpfung von Nagetieren, wie z. B. Mäusen und Ratten, welche sich in von Wasser durchströmten Kanälen bzw. Leitungen, d. h. insbesondere Abwasser-, Regenwasser- oder Schmutzwasserkanälen und/oder Kabelkanälen, bzw. entsprechenden Kanal- bzw. Leitungsschächten, d. h. im Allgemeinen in Wasser führenden Einrichtungen, aufhalten und dort beträchtliche Schäden, z. B. an abwassertechnischen und sonstigen infrastrukturellen Anlagen bzw. Einrichtungen, anrichten können, vorgesehen. Entsprechende Vorrichtungen haltern deshalb, typischerweise schädlingsspezifische, Köder, welche besondere Gifte bzw. Wirkstoffe enthalten, die auf verschiedenartige Weise ein Ableben der Schädlinge herbeiführen und/oder eine Vermehrung der Schädlinge verhindern. Eine solche Vorrichtung ist z.B. aus GB 2 230 930 A bekannt.

Die in den Ködern enthaltenen Gifte bzw. Wirkstoffe stellen in der Regel für Mensch und Natur ein Gefährdungspotential dar, so dass darauf zu achten ist, dass diese nicht in das durch entsprechende Kanäle bzw. Kanalschächte strömende Wasser gelangen und dieses kontaminieren. Dies kann bei herkömmlichen Vorrichtungen jedoch, bei großen Wassermengen und somit hohen Wasserständen in den Kanälen bzw. Kanalschächten, was z. B. nach einem Starkregen der Fall ist, vorkommen.

Der Erfindung liegt daher die Aufgabe zugrunde, eine verbesserte Vorrichtung zur Halterung eines Köders, insbesondere eines Köders für Nagetiere, anzugeben.

Die Aufgabe wird durch eine Vorrichtung gemäß Anspruch 1 gelöst. Das erfindungsgemäße Prinzip betrifft eine besonders ausgebildete Vorrichtung zur Halterung eines Köders für Schädlinge, d. h. insbesondere eines Köders für Nagetiere, wie z. B. Mäuse und Ratten. Der Köder enthält bestimmte, typischerweise schädlingsspezifische, Substanzen, wie z. B. Gifte bzw. Wirkstoffe, die auf verschiedenartige Weise ein Ableben der Schädlinge herbeiführen und/oder eine Vermehrung der Schädlinge verhindern. Im Weiteren wird allein der Begriff Schädling verwendet. Hierunter sind insbesondere Nagetiere, wie z. B. Mäuse und Ratten, zu verstehen.

Die erfindungsgemäße Vorrichtung umfasst ein Gehäuseteil. Das Gehäuseteil ist in einen Kanal bzw. einen Kanalschacht, wie z. B. einen Abwasserkanalschacht und/oder einen Kabelkanalschacht einsetzbar. In dem Kanal bzw. Kanalschacht befindet sich typischerweise Wasser bzw. Abwasser respektive kann der Kanal bzw. Kanalschacht zumindest zeitweise von Wasser bzw. Abwasser durchströmt sein. Im Weiteren wird allein der Begriff Kanalschacht verwendet. Hierunter ist ein Teil einer Wasser führenden Einrichtung, wie z. B. einer Kanalisation für Wasser, d. h. z. B. Abwasser, Regenwasser, Schmutzwasser, bzw. Versorgungsleitungen etc. zu verstehen.

Um eine stabile und sichere Anordnung des in den Kanalschacht eingesetzten Gehäuseteils zu realisieren, weist dieses zweckmäßigerweise eine Befestigungseinrichtung auf, über welche es, insbesondere lösbar, an einer Wandung des Kanalschachts bzw. kanalschachtseitigen Steigeinrichtungen, wie z. B. kanalschachtseitigen Steigeisen, befestigbar ist. Die Befestigungseinrichtung kann z. B. haken- oder profilartige Befestigungsmittel umfassen, um das Gehäuseteil und somit die Vorrichtung insgesamt in einer Wandung des Kanalschachts respektive entsprechenden Steigeinrichtungen zu verankern.

Das Gehäuseteil ist typischerweise aus einem korrosionsstabilen Material, wie z. B. einem rostfreien Stahl(blech) und/oder Kunststoff gebildet. Unterschiedliche Abschnitte des Gehäuseteils können sonach aus unterschiedlichen Materialien gebildet sein. Insbesondere für die Ausführung des oder eines Abschnitts des Gehäuseteils aus Kunststoff gilt, dass hier ein transparentes Kunststoffmaterial verwendet werden kann, um ein, z. B. zum Zwecke der Überprüfung eines Köderanbisses, erforderliches Einblicken in das Gehäuseteil zu gewähren.

Das Gehäuseteil ist insbesondere hohlzylindrisch ausgebildet, d. h. es begrenzt einen zylindrischen Aufnahmeraum, in welchem bestimmte Komponenten der Vorrichtung aufnehmbar oder aufgenommen sind.

Das Gehäuseteil kann, z. B. an einer Stirnseite, über ein Deckelelement verschließbar oder verschlossen sein, so dass über ein Entfernen des Deckelelements eine Zugangsmöglichkeit in den gehäuseteilseitigen Aufnahmeraum geschaffen werden kann. Das Deckelelement kann einen Gewindeabschnitt, das Gehäuseteil kann einen hierzu gegengleichen Gewindeabschnitt aufweisen, so dass das Deckelelement mit dem Gehäuseteil verschraubt werden kann.

Innerhalb des Gehäuseteils ist eine Köderplattform angeordnet bzw. ausgebildet. Die Köderplattform begrenzt wenigstens eine Durchgangsöffnung. Die Durchgangsöffnung definiert sonach einen unterhalb dieser liegenden unteren Bereich des Gehäuseteils und einen oberhalb dieser liegenden oberen Bereich des Gehäuseteils. Der Köder ist typischerweise in dem oberen Bereich des Gehäuseteils angeordnet. Der oder ein Köder kann dabei unmittelbar auf der Köderplattform angeordnet sein. Alternativ oder ergänzend kann der oder ein Köder auch an einer Köderhalteeinrichtung zur Halterung eines Köders gehaltert angeordnet sein. Eine solche Köderhalteeinrichtung ist entsprechend typischerweise ebenso oberhalb der Köderplattform angeordnet.

Um den, wie erwähnt, typischerweise in dem oberen Bereich des Gehäuseteils angeordneten Köder zu erreichen, muss ein Schädling zunächst in das Gehäuseteil gelangen. Hierfür ist das Gehäuseteil zweckmäßig mit wenigstens einem Durchgang ausgebildet, über welchen der Schädling in das Gehäuseteil und/oder aus dem Gehäuseteil gelangen kann. Ein entsprechender Durchgang kann alternativ oder ergänzend auch an einem im Weiteren noch zu spezifizierenden Schließkörper ausgebildet sein. Der Durchgang ermöglicht einen Zutritt in den unteren Bereich des Gehäuseteils. Um den Köder zu erreichen, muss der sonach in das Gehäuseteil gelangte Schädling im Weiteren durch die köderplattformseitig begrenzte Durchgangsöffnung auf die Köderplattform und somit in den oberen Bereich des Gehäuseteils gelangen. Nach Anbiss des Köders kann der Schädling durch Passieren der Durchgangsöffnung von dem oberen Bereich des Gehäuseteils in den unteren Bereich des Gehäuseteils gelangen und die Vorrichtung über entsprechende Durchgänge verlassen. Selbstverständlich ist es prinzipiell auch denkbar, dass der oder ein weiterer Durchgang einen Zutritt in den oberen Bereich des Gehäuseteils ermöglicht.

Die erfindungsgemäße Vorrichtung umfasst ferner einen Schließkörper. Der Schließkörper ist relativ zu der typischerweise fest mit dem Gehäuseteil verbundenen Köderplattform bewegbar gelagert. Der Schließkörper kann dabei zwischen einer Offenstellung und einer Schließstellung, sowie gegebenenfalls umgekehrt, relativ zu der Köderplattform bewegt werden. Die Lagerung des Schließkörpers beinhaltet typischerweise eine unverlierbare Anordnung bzw. Verbindung des Schließkörpers an dem bzw. mit dem Gehäuseteil.

In der Offenstellung ist der Schließkörper derart von der Köderplattform weg bewegt, dass die wenigstens eine köderplattformseitig begrenzte Durchgangsöffnung freigegeben ist. Mithin kann ein Schädling in der Offenstellung des Schließkörpers die Durchgangsöffnung passieren, um z. B. von dem unteren Bereich des Gehäuseteils in den oberen Bereich des Gehäuseteils, oder umgekehrt, zu gelangen.

In der Schließstellung ist der Schließkörper derart gegen die Köderplattform bewegt, dass die wenigstens eine köderplattformseitig begrenzte Durchgangsöffnung verschlossen ist. Der Schließkörper dichtet bzw. schließt die Durchgangsöffnung in der Schließstellung typischerweise hermetisch ab. Der oberhalb der Durchgangsöffnung befindliche Bereich des Gehäuseteils ist sonach in der Schließstellung des Schließkörpers typischerweise hermetisch abgedichtet bzw. abgeschlossen. Entsprechend kann ein Schädling in der Schließstellung des Schließkörpers die Durchgangsöffnung nicht passieren, um z. B. von dem unteren Bereich des Gehäuseteils in den oberen Bereich des Gehäuseteils, oder umgekehrt, zu gelangen.

Für das erfindungsgemäße Prinzip ist es dabei wesentlich, dass der obere Bereich des Gehäuseteils in der Schließstellung des Schließkörpers von dem unteren Bereich des Gehäuseteils, wie vorstehend erwähnt typischerweise hermetisch, abgetrennt ist, so dass in der Schließstellung des Schließkörpers ein, z. B. hochwasser- oder schwallwasserbedingtes, Eindringen von Wasser in den oberen Bereich des Gehäuseteils, in welchem, wie erwähnt, typischerweise der Köder angeordnet ist, nicht möglich ist. Derart ist ein Prinzip gegeben, dass der eingangs erwähnten Problematik der Kontamination von Wasser mit in entsprechenden Ködern enthaltenen Substanzen, d. h. Giften bzw. Wirkstoffen, begegnet. Die Bewegung des Schließkörpers von der Schließstellung in die Offenstellung kann verschiedenartig induziert sein. Hierauf wird später näher eingegangen.

Der Schließkörper kann reversibel zwischen der Offenstellung und der Schließstellung bewegbar gelagert sein. Mithin kann der in der Schließstellung befindliche Schließkörper von alleine in die Offenstellung, und umgekehrt, übergehen. Alternativ kann der Schließkörper irreversibel zwischen der Offenstellung und der Schließstellung bewegbar gelagert sein, derart, dass er in der Schließstellung, insbesondere lösbar, über wenigstens eine Schließkörperhalteeinrichtung halterbar oder gehaltert ist. Über die Schließkörperhalteeinrichtung kann der Schließkörper sonach in der Schließstellung gehaltert werden. Der in der Schließstellung befindliche Schließkörper kann hier also nicht von alleine in die Offenstellung übergehen.

Die Schließkörperhalteeinrichtung kann wenigstens ein gehäuseteilseitiges und/oder schließkörperseitiges mechanisches und/oder magnetisches Haltemittel umfassen, welches zu einer mechanischen und/oder magnetischen Halterung des Schließkörpers in der Schließstellung eingerichtet ist. Die gehäuseteilseitigen bzw. schließkörperseitigen mechanischen bzw. magnetischen Haltemittel können sonach derart zusammenwirken, dass der Schließkörper sicher in der Schließstellung gehaltert und ohne weiteres nicht aus dieser lösbar ist.

Das oder ein mechanisches Haltemittel kann z. B. Rast- bzw. Schnappelemente umfassen, welche eine mechanische Halterung des Schließkörpers in der Schließstellung realisieren. Bei den Rast- bzw. Schnappelementen kann es sich z. B. um Vorsprünge und hierzu korrespondierende Ausnehmungen bzw. Hinterschneidungen handeln. Je nach konstruktiver Ausgestaltung der Rast- bzw. Schnappelemente kann die über diese realisierte Halterung lösbar oder unlösbar sein.

Das oder ein magnetisches Haltemittel kann z. B., insbesondere permanentmagnetische, Magnetelemente umfassen, welche aufgrund magnetischer Wechselwirkung eine magnetische Halterung des Schließkörpers in der Schließstellung realisieren. Denkbar ist es in diesem Zusammenhang z. B., dass ein gehäuseteilseitiges Magnetelement derart angeordnet ist, dass es eine den Schließkörper in der Schließstellung halternde magnetische Kraft auf ein schließkörperseitiges Magnetelement ausübt, wenn sich der Schließkörper der Schließstellung annähert bzw. sich in der Schließstellung befindet. Die magnetische Kraft sollte nicht derart hoch sein, dass der in der Offenstellung befindliche Schließkörper allein aufgrund dieser in die Schließstellung bewegt wird. Sofern der Schließkörper aus einem magnetischen oder magnetisierbaren Material gefertigt ist, kann gegebenenfalls auf schließkörperseitiges Magnetelemente verzichtet werden. Grundsätzlich kann das Gehäuseteil und/oder der Schließkörper entsprechende Magnetelemente umfassen.

Die relativ zu der Köderplattform bewegbare Lagerung des Schließkörpers kann konstruktiv durch wenigstens einen gehäuseteilseitigen Führungsabschnitt sowie wenigstens ein schließkörperseitiges Führungselement realisiert sein, wobei der wenigstens eine gehäuseteilseitige Führungsabschnitt mit dem wenigstens einen schließkörperseitigen Führungselement zu einer bewegbar gelagerten Führung des Schließkörpers zwischen der Offenstellung und der Schließstellung, und umgekehrt, zusammenwirken. Im Allgemeinen ist durch das Zusammenwirken des bzw. der gehäuseteilseitigen Führungsabschnitte mit dem bzw. der schließkörperseitigen Führungselemente typischerweise eine Linearführung des Schließkörpers ermöglicht. Ein gehäuseteilseitiger Führungsabschnitt kann an einer Außen- oder Innenseite des Gehäuseteils ausgebildet sein. Ein gehäuseteilseitiger Führungsabschnitt kann z. B. als Führungsschienenaufnahmen, ein schließkörperseitiges Führungselement kann z. B. als Führungsschiene oder Führungssteg ausgebildet sein.

Die konstruktive Ausgestaltung des Schließkörpers betreffend, ist es bevorzugt, dass dieser wenigstens einen kalotten- oder kegelförmigen Schließabschnitt aufweist, welcher in der Schließstellung des Schließkörpers abschnittsweise dichtend an an den köderplattformseitigen Rändern, welche die köderplattformseitig begrenzte Durchgangsöffnung begrenzen, ausgebildeten Anlageabschnitten anliegt. Durch die dichtende Anlage des Schließkörpers, d. h. entsprechender an dem schließkörperseitigen kalotten- oder kegelförmigen Schließabschnitt ausgebildeter Gegenanlageabschnitte, an an entsprechenden köderplattformseitigen, die Durchgangsöffnung begrenzenden Rändern ausgebildeten Anlageabschnitten ist sonach ein Eindringen von in dem die Vorrichtung aufnehmenden Kanalschacht befindlichen Wassers in das Gehäuseteil, d. h. insbesondere in den oberen Bereich des Gehäuseteils, nicht möglich.

Zweckmäßig sind die an an den köderplattformseitigen, die Durchgangsöffnung begrenzenden Rändern ausgebildeten Anlageabschnitte demzufolge wenigstens abschnittsweise mit einem Dichtelement, wie z. B. einem Dichtring, einer Dichtlippe etc., versehen. Gleichermaßen kann der schließkörperseitige Schließabschnitt, d. h. insbesondere entsprechende an diesem ausgebildete Gegenanlageabschnitte, wenigstens abschnittsweise mit einem Dichtelement, wie z. B. einem Dichtring, einer Dichtlippe etc., versehen sein.

Im Weiteren werden beispielhafte Ausführungsformen der Vorrichtung beschrieben, anhand welchen näher erläutert wird, wie eine Bewegung des Schließkörpers von der Offenstellung in die Schließstellung, und umgekehrt, induziert werden kann. Die in diesem Zusammenhang nachfolgend beschriebenen Ausführungsformen können untereinander beliebig kombiniert werden.

Eine Ausführungsform sieht dabei vor, dass der Schließkörper als Schwimmkörper ausgebildet ist oder wenigstens einen Schwimmkörper umfasst. Unter einem Schwimmkörper ist ein Körper zu verstehen, welcher auf einer Wasseroberfläche aufschwimmt und nicht untergeht. Dies kann konstruktiv z. B. durch einen wenigstens einen Hohlraum aufweisenden Schließkörper realisiert sein. Der Hohlraum ist beispielsweise mit Luft gefüllt. Alternativ oder ergänzend kann der Schließkörper auch aus einem Material geringer Dichte gefertigt sein, welches sonach aufgrund des Dichteunterschieds auf einer Wasseroberfläche aufschwimmt und nicht untergeht. Ein solches Material kann z. B. Kunststoff, insbesondere geschäumter, Kunststoff sein. Konkret kann es sich dabei also z. B. um geschäumte Thermoplaste, wie z. B. geschäumtes Polyethylen oder geschäumtes Polystyrol (Styropor) handeln. Eine Bewegung des Schließkörpers von der Offenstellung in die Schließstellung wäre hier automatisch durch einen Anstieg des Wasserstands in dem die Vorrichtung aufnehmenden Kanalschacht induziert. Entsprechend wäre eine Bewegung des Schließkörpers von der Schließstellung in die Offenstellung durch einen Abfall des Wasserstands in dem die Vorrichtung aufnehmenden Kanalschacht induziert.

Eine weitere Ausführungsform sieht vor, dass die Bewegung des Schließkörpers von der Offenstellung in die Schließstellung durch eine mit dem Schließkörper koppelbare oder gekoppelte Antriebseinrichtung induziert wird. Die Antriebseinrichtung ist dazu eingerichtet, den Schließkörper von der Offenstellung in die Schließstellung, und/oder umgekehrt, zu bewegen. Hinsichtlich der Ausbildung bzw. Konzipierung einer solchen Antriebseinrichtung sind zwei prinzipiell unterschiedliche, jedoch wiederum kombinierbare Ausführungsformen vorstellbar.

Eine erste Ausführungsform einer Antriebseinrichtung sieht vor, dass die Antriebseinrichtung als motorische Antriebseinrichtung ausgebildet ist oder wenigstens eine solche umfasst. Mithin kann wenigstens eine mit dem Schließkörper gekoppelte motorische Antriebseinrichtung vorgesehen sein, welche dazu eingerichtet ist, den Schließkörper von der Offenstellung in die Schließstellung, und/oder umgekehrt, zu bewegen. Bei der motorischen Antriebseinrichtung kann es sich z. B. um einen Elektromotor handeln. Die Kopplung zwischen der motorischen Antriebseinrichtung und dem Schließkörper kann z. B. durch geeignete Zugmittel, etwa in Form von Bändern oder Ketten, realisiert sein. Selbstverständlich kann der Schließkörper auch in dieser Ausführungsform als Schwimmkörper ausgebildet sein oder wenigstens einen Schwimmkörper umfassen.

Eine zweite Ausführungsform einer Antriebseinrichtung sieht vor, dass die Antriebseinrichtung als magnetische Antriebseinrichtung ausgebildet ist oder wenigstens eine solche umfasst. Mithin kann wenigstens eine mit dem Schließkörper koppelbare oder gekoppelte magnetische Antriebseinrichtung vorgesehen sein, welche dazu eingerichtet ist, den Schließkörper von der Offenstellung in die Schließstellung, und/oder umgekehrt, zu bewegen. Auch in dieser Ausführungsform kann der Schließkörper als Schwimmkörper ausgebildet sein oder wenigstens einen Schwimmkörper umfassen.

Die magnetische Antriebseinrichtung umfasst typischerweise wenigstens ein magnetisierbares und/oder magnetisches Magnetelement seitens des Gehäuseteils und seitens des Schließkörpers. Es kommen also sowohl elektromagnetische als auch permanentmagnetische Magnetelemente in Betracht. Bei einem magnetisierbaren Magnetelement kann es sich sonach z. B. um einen Elektromagneten, welcher bei Bestromung eine magnetische Anziehungskraft ausübt, handeln. Bei einem magnetischen Magnetelement kann es sich z. B. um einen Permanentmagneten, welcher ein statisches Magnetfeld aufweist, handeln. In jedem Fall können die gehäuseteilseitigen und die schließkörperseitigen Magnetelemente miteinander wechselwirken derart, dass eine hohe magnetische Anziehungskraft ausübbar ist, aufgrund welcher der Schließkörper von der Schließstellung in die Offenstellung bewegt werden kann.

In diesem Zusammenhang sind unterschiedliche Konfigurationen denkbar. Es ist also z. B. möglich, dass gehäuseteilseitig wenigstens ein elektromagnetisches Magnetelement angeordnet ist, welches bedarfsweise bestromt werden kann, und bei Bestromung derart mit wenigstens einem schließkörperseitigen permanentmagnetischen Magnetelement wechselwirkt, dass der Schließkörper aufgrund magnetischer Anziehung von der Offenstellung in die Schließstellung bewegt werden kann. Das oder ein schließkörperseitige(s) Magnetelement kann dabei auf einer freiliegenden Oberfläche des Schließkörpers angeordnet oder in den Schließkörper integriert sein. Selbstverständlich kann der Schließkörper als solcher auch aus einem magnetischen oder magnetisierbaren Material, wie z. B. ferritischem Stahl, oder mit magnetischen oder magnetisierbaren Partikeln gefüllten Kunststoff, gefertigt sein.

Prinzipiell ist es jedoch auch möglich, schließkörperseitig wenigstens ein elektromagnetisches Magnetelement und gehäuseteilseitig wenigstens ein permanentmagnetisches Magnetelement vorzusehen.

Gleichermaßen können sowohl gehäuseteilseitig als auch schließkörperseitig entsprechende elektromagnetische Magnetelemente vorgesehen sein.

Denkbar ist es auch, sowohl gehäuseteilseitig als auch schließkörperseitig wenigstens ein permanentmagnetisches Magnetelement vorzusehen, so dass bei hinreichender Annäherung des schließkörperseitigen Magnetelements an das gehäuseteilseitige Magnetelement der Schließkörper aufgrund magnetischer Anziehung von der Offenstellung in die Schließstellung bewegt wird. Die hinreichende Annäherung kann z. B. dann erreicht sein, wenn ein als Schwimmkörper ausgebildeter oder wenigstens einen solchen umfassender Schließkörper, z. B. hochwasserbedingt, ausgehend von der Offenstellung um ein gewisses Maß in Richtung der Köderplattform, d. h. in eine zwischen der Offenstellung und der Schließstellung liegende Stellung, bewegt ist. Selbstverständlich ist in dieser Ausführungsform darauf zu achten, dass die zwischen den jeweiligen permanentmagnetischen Magnetelementen bestehende magnetische Anziehung bzw. Wechselwirkung nicht derart hoch ist, dass der in der Offenstellung befindliche Schließkörper allein aufgrund dieser in die Schließstellung bewegt wird.

Bezogen auf die beschriebenen Ausführungsformen einer motorischen und/oder einer elektromagnetischen Antriebseinrichtung ist es denkbar, dass eine zugeordnete Steuereinrichtung vorgesehen ist, über welche die Steuerung des Betriebs der Antriebseinrichtung(en) erfolgt. Die Steuereinrichtung ist sonach zur Erzeugung von den Betrieb der motorischen und/oder elektromagnetischen Antriebseinrichtung(en) steuernden Steuerinformationen eingerichtet.

Die Steuereinrichtung kann im Weiteren dazu eingerichtet sein, die Steuerinformationen in Abhängigkeit einer von einer Wasserstandserfassungseinrichtung zur Erfassung des Wasserstands in dem die Vorrichtung aufnehmenden Kanalschacht gelieferten, den oder einen Wasserstand in dem die Vorrichtung aufnehmenden Kanalschacht beschreibenden Wasserstandsinformation zu erzeugen. Mithin kann eine Steuerung des Betriebs der motorischen und/oder elektromagnetischen Antriebseinrichtung in Abhängigkeit des über eine entsprechende Wasserstandserfassungseinrichtung erfassten und in einer entsprechenden Wasserstandsinformation abgebildeten Wasserstands in dem die Vorrichtung aufnehmenden Kanalschacht erfolgen. Seitens der Steuereinrichtung können dabei bestimmte kritische Wasserstände berücksichtigt werden, bei deren Erreichen ein Eindringen von Wasser in das Gehäuseteil und insbesondere in den oberen Bereich des Gehäuseteils, d. h. allgemein den Bereich des Gehäuseteils, in welchem der Köder angeordnet ist, prinzipiell möglich ist, so dass die Steuereinrichtung rechtzeitig entsprechende Steuerinformationen an die motorische und/oder elektromagnetische Antriebseinrichtung liefert, um ein Eindringen von Wasser in das Gehäuseteil respektive den Bereich des Gehäuseteils, in welchem der Köder angeordnet ist, zu verhindern.

Die Wasserstandserfassungseinrichtung kann einen Teil der Vorrichtung bilden. Dies ist jedoch nicht zwingend erforderlich, vielmehr kann die Steuereinrichtung auch dazu eingerichtet sein, mit wenigstens einer externen, d. h. zu der Vorrichtung räumlich getrennt angeordneten, Wasserstandserfassungseinrichtung zu kommunizieren. Hierbei kann es sich insbesondere um eine bezüglich der Position der Vorrichtung in dem Kanalschacht stromabwärts befindliche Wasserstandserfassungseinrichtung handeln, so dass ein bevorstehender hoher Wasserstand rechtzeitig erfasst werden kann. Selbstverständlich weist die Vorrichtung respektive die Steuereinrichtung hierfür geeignete Empfangseinrichtungen auf, welche einen, insbesondere funkbasierten, d. h. z. B. per Bluetooth, WLAN etc. realisierten, Daten- bzw. Informationsaustausch mit einer Wasserstandserfassungseinrich-tung ermöglichen.

Die Vorrichtung kann ferner eine Schließstellungserfassungseinrichtung zur Erfassung der Schließstellung des Schließkörpers umfassen. Die typischerweise in dem Gehäuseteil angeordnete Schließstellungserfassungseinrichtung ist dazu eingerichtet, bei Erfassung der Schließstellung des Schließkörpers wenigstens eine akustische und/oder optische Schließstellungsinformation zu erzeugen und über wenigstens ein Ausgabemittel auszugeben. Derart ist es ermöglicht, das Erreichen der Schließstellung zu erfassen und über akustische und/oder optische Signale auf einfache Weise anzuzeigen, was im Falle von Service- oder Reparaturarbeiten zweckmäßig sein kann. Dem Service- oder Reparaturpersonal kann sonach angezeigt werden, dass in dem Kanal ein hoher Wasserstand erreicht ist oder wurde, aufgrund dessen der Schließkörper in die Schließstellung bewegt wurde oder weiterhin in der Schließstellung gehaltert ist. Die Schließstellungserfassungseinrichtung umfasst demzufolge eine geeignete Sensorik zur Erfassung der Schließstellung des Schließkörpers. Die Sensorik kann beispielsweise optisch, d. h. z. B. über die Implementierung von Lichtschranken, ausgeführt sein.

Wie erwähnt, kann der Köder an einer Köderhalteeinrichtung zur Halterung eines Köders anordenbar oder angeordnet sein. Für den Fall, dass die Vorrichtung mit einer solchen Köderhalteeinrichtung ausgestattet ist, kann es zweckmäßig sein, wenn die Vorrichtung ferner eine Anbisserfassungseinrichtung zur Erfassung eines Köderanbisses umfasst. Die typischerweise in dem Gehäuseteil angeordnete Anbisserfassungseinrichtung ist dazu eingerichtet, bei Erfassung eines angebissenen Köders respektive eines Köderanbisses wenigstens eine akustische und/oder optische Anbissinformation zu erzeugen und über wenigstens ein Ausgabemittel auszugeben. Derart ist es ermöglicht, einen Köderanbiss durch einen Schädling zu erfassen und über akustische und/oder optische Signale auf einfache Weise anzuzeigen, was wiederum im Falle von Service- oder Reparaturarbeiten zweckmäßig sein kann. Dem Service- oder Reparaturpersonal kann sonach angezeigt werden, dass ein Köderanbiss erfolgte und somit eine Überprüfung dahin, ob ein neuer Köder in das Gehäuseteil bzw. in die Vorrichtung einzusetzen ist, erforderlich ist. Die Anbisserfassungseinrichtung umfasst demzufolge eine geeignete Sensorik zur Erfassung eines Köderanbisses. Die Sensorik kann beispielsweise das Gewicht des an der Köderhalteeinrichtung angeordneten Köders erfassen, wobei anbissbedingte Gewichtsänderungen, typischerweise Gewichtsreduzierungen, des Köders Rückschlüsse auf einen Köderanbiss zulassen. Gleichermaßen kann die Sensorik anbissbedingte, auf den Köder und/oder die Köderhalteeinrichtung wirkende Kräfte, typischerweise Zugkräfte, erfassen, welche ebenso Rückschlüsse auf einen Köderanbiss zulassen.

Die Anbisserfassungseinrichtung kann in Abhängigkeit der Anbissinformation, z. B. basierend auf der Erfassung des Gewichts des Köders, unterschiedliche akustische und/oder optische Signale erzeugen. Das Gewicht eines neuen, nicht angebissenen Köders kann z. B. mit optischen Signalen grüner Farbe und/oder mit dauerhaft konstant ausgegebenen optischen Signalen signalisiert werden, das Gewicht eines teilangebissenen Köders kann z. B. mit optischen Signalen gelber Farbe und/oder mit einer ersten Blinkfrequenz ausgegebenen optischen Signalen signalisiert werden, ist der Köder vollständig aufgefressen kann dies z. B. durch optische Signale roter Farbe und/oder mit einer im Vergleich zu der ersten Blinkfrequenz höheren zweiten Blinkfrequenz ausgegebenen optischen Signalen signalisiert werden.

Gleiches gilt selbstverständlich für die Ausgabe akustischer Signale, wobei insbesondere die Frequenz und/oder der Rhythmus eines Tons bzw. einer Tonfolge in Abhängigkeit der Anbissinformation, z. B. basierend auf der Erfassung des Gewichts des Köders, variierbar sind. Analoges gilt selbstverständlich für den Fall, dass die Anbisserfassungseinrichtung nicht über das Gewicht, sondern über andere Messgrößen, Rückschlüsse auf einen Köderanbiss zieht.

Ein akustisches Ausgabemittel kann z. B. als Lautsprecher ausgebildet sein oder wenigstens einen solchen umfassen. Ein optisches Ausgabemittel kann z. B. als, insbesondere mehrfarbige, Leuchtdiode oder Bildschirm ausgebildet sein oder wenigstens eine(n) solche(n) umfassen.

Das oder ein Ausgabemittel kann an oder in dem Gehäuseteil angeordnet sein, wobei es an einer freiliegenden Außenfläche des Gehäuseteils oder innerhalb eines durch das Gehäuseteil begrenzten Aufnahmeraums angeordnet ist. Insbesondere für optische Ausgabemittel gilt, dass, sofern diese innerhalb des Gehäuseteils, d. h. innerhalb eines durch das Gehäuseteil begrenzten Aufnahmeraums des Gehäuseteils angeordnet sind, das Gehäuseteil zumindest teilweise teiltransparent ausgebildet sein sollte, um die optischen Signale auch von außerhalb des Gehäuseteils erkennbar zu machen.

Das oder ein Ausgabemittel kann auch in ein externes mobiles Endgerät integriert sein. Sofern das oder ein Ausgabemittel in ein externes mobiles Endgerät integriert ist, kann die Schließstellungserfassungseinrichtung und/oder die Anbisserfassungseinrichtung dazu eingerichtet sein, mit dem externen mobilen Endgerät zu kommunizieren und die Schließstellungsinformation und/oder die Anbissinformation an das externe mobile Endgerät zur Ausgabe an dem dortigen Ausgabemittel zu übertragen. Service- oder Bedienpersonal kann derart auch ohne die Kanalisation zu betreten über das Erreichen der Schließstellung des Schließkörpers und/oder einen Köderanbiss informiert werden. Die beschriebene Kommunikation ist insbesondere funkbasiert, d. h. z. B. per Bluetooth, WLAN etc. realisiert, weshalb die Schließstellungserfassungseinrichtung und/oder die Anbisserfassungsein-richtung entsprechende funkbasierte Sendeeinrichtungen umfassen. Bei einem externen mobilen Endgerät kann es sich z. B. um ein Handy, Smartphone, Tablet, ein Notebook etc. handeln.

In Anbetracht der Vielzahl an gegebenenfalls in dem Gehäuseteil anzuordnenden elektrischen und/oder elektronischen Komponenten, d. h. insbesondere entsprechender Steuerungs- oder Erfassungseinrichtungen, kann es zweckmäßig sein, dass in dem oder einem durch das Gehäuseteil begrenzten Aufnahmeraum wenigstens eine Aufnahmekammer ausgebildet oder angeordnet ist, in welcher elektrische und/oder elektronische Komponenten der Vorrichtung, insbesondere Steuereinrichtungen und Erfassungseinrichtungen, anordenbar oder angeordnet sind. Die Aufnahmekammer bietet sonach einen Schutz dieser Komponenten gegenüber äußeren, d. h. insbesondere klimatischen und mechanischen, Einflüssen. Die Aufnahmekammer kann integral mit dem Gehäuseteil oder als separates Bauteil ausgeführt sein, welches gesondert in den gehäuseteilseitigen Aufnahmeraum einzusetzen ist. Die Aufnahmekammer kann ein über ein Deckelelement verschließbar oder verschlossen sein, wobei es sich hierbei auch um das weiter oben erwähnte gehäuseteilseitige Deckelement handeln kann, so dass über ein Entfernen des Deckelelements eine Zugangsmöglichkeit in die Aufnahmekammer geschaffen werden kann.

Die oder eine Aufnahmekammer, in welcher entsprechende elektrische und/oder elektronische Komponenten der Vorrichtung, insbesondere Steuereinrichtungen und Erfassungseinrichtungen, anordenbar oder angeordnet sind, kann einen, insbesondere zylinderartigen bzw. zylinderförmigen, ein Aufnahmekammervolumen zur Aufnahme elektrischer und/oder elektronischer Komponenten der Vorrichtung begrenzenden Aufnahmekammergrundkörper aufweisen, welcher zumindest abschnittsweise in den gehäuseteilseitigen Aufnahmeraum ragt.

Die Aufnahmekammer ist zweckmäßig lösbar an dem Gehäuseteil befestigbar oder befestigt. Die Aufnahmekammer kann sonach an oder in dem Gehäuseteil angeordnet und von diesem entfernt werden. Selbstverständlich ragt der Aufnahmekammergrundkörper nur in dem an dem Gehäuseteil befestigten Zustand der Aufnahmekammer in den gehäuseteilseitigen Aufnahmeraum. Die lösbare Befestigung der Aufnahmekammer an dem Gehäuseteil kann durch, insbesondere formschlüssiges, Zusammenwirken wenigstens eines gehäuseteilseitigen Befestigungsabschnitts mit wenigstens einem aufnahmekammergrundkörperseitigen Befestigungsabschnitt ausbildbar oder ausgebildet sein. Die Aufnahmekammer und das Gehäuseteil sind hier also jeweils mit wenigstens einem Befestigungsabschnitt ausgestattet, über deren Zusammenwirken sich eine stabile bzw. unverlierbare, gleichwohl lösbare Befestigung der Aufnahmekammer an dem Gehäuseteil realisieren lässt. Unter einem, insbesondere formschlüssigen, Zusammenwirken jeweiliger Befestigungsabschnitte ist insbesondere ein zumindest abschnittsweises Ineinander- oder Übereinandergreifen entsprechender Befestigungsabschnitte zu verstehen.

Die Aufnahmekammer kann dabei zwischen einer Befestigungsstellung und einer Lösestellung drehbar gelagert an dem Gehäuseteil anordenbar oder angeordnet sein. In der Befestigungsstellung wirken der wenigstens eine gehäuseteilseitige Befestigungsabschnitt und der wenigstens eine aufnahmekammergrundkörperseitige Befestigungsabschnitt, insbesondere formschlüssig, zusammen, so dass die Aufnahmekammer lösbar an dem Gehäuseteil befestigt ist. In der Lösestellung wirken der wenigstens eine gehäuseteilseitige Befestigungsabschnitt und der wenigstens eine aufnahmekammergrundkörperseitige Befestigungsabschnitt nicht zusammen, so dass die Aufnahmekammer von dem Gehäuseteil lösbar ist. Die Befestigung der Aufnahmekammer an dem Gehäuseteil kann sonach durch Drehbewegungen der Aufnahmekammer um eine Drehachse, welche typischerweise mit der Zentralachse der Aufnahmekammer zusammenfällt, relativ zu dem Gehäuseteil hergestellt und wieder aufgehoben werden. Die Aufnahmekammer kann also durch Drehbewegungen relativ zu dem Gehäuseteil von der Befestigungsstellung in die Lösestellung, und umgekehrt, überführt werden.

Der oder wenigstens ein gehäuseteilseitiger Befestigungsabschnitt kann z. B. als ein von einem zylinderartigen Abschnitt des Gehäuseteils radial abragendes Ringscheibenelement oder Ringsegmentscheibenelement mit wenigstens einem von diesem axial abragenden schulterartigen Befestigungsvorsprung ausgebildet sein. Der oder wenigstens ein aufnahmekammergrundkörperseitiger Befestigungsabschnitt kann als ein von einem zylinderartigen Ansatz des Aufnahmekammergrundkörpers radial abragendes Ringscheibenelement oder Ringsegmentscheibenelement mit einem zu dem an dem gehäuseteilseitigen Befestigungsabschnitt gebildeten Befestigungsvorsprung korrespondierenden, d. h. insbesondere gegengleich ausgebildeten bzw. ausgerichteten, axial abragenden schulterartigen Befestigungsvorsprung ausgebildet sein.

Zur Realisierung entsprechender Drehbewegungen der Aufnahmekammer weist die Aufnahmekammer im Bereich eines oberen freiliegenden Deckabschnitts wenigstens einen Werkzeugangriffsbereich zum formschlüssigen Eingreifen eines Werkzeugs, über welches Werkzeug sich Drehbewegungen auf die Aufnahmekammer übertragen lassen, um die Aufnahmekammer von der Befestigungsstellung in die Lösestellung, und umgekehrt, zu überführen, auf. Durch die Anordnung bzw. Ausbildung wenigstens eines entsprechenden Werkzeugangriffsbereichs im Bereich eines oberen freiliegenden Deckabschnitts der Aufnahmekammer ist der Werkzeugangriffsbereich stets (von oben) zugänglich. Die geometrische Gestalt des Werkzeugangriffsbereichs ist derart, dass ein, z. B. T-Förmiges, Werkzeug formschlüssig an diesem angreifen kann, so dass Drehbewegungen auf die Aufnahmekammer übertragen werden können.

Der Werkzeugangriffsbereich ist insbesondere auch im ordnungsgemäß in einen Kanalschacht eingesetzten Zustand der Vorrichtung gut, d. h. insbesondere von oben, zugänglich. Durch geeignete Formgebung und Dimensionierung eines entsprechenden Werkzeugs ist es nicht zwingend notwendig, dass ein Benutzer in den Kanalschacht hinabsteigt, um die Aufnahmekammer durch entsprechende Drehbewegungen von der Befestigungsstellung in die Lösestellung, oder umgekehrt, zu überführen. Die Aufnahmekammer kann sonach von außerhalb des Kanalschachts von dem Gehäuseteil gelöst und gegebenenfalls aus dem Kanalschacht entnommen werden. Dies kann beispielsweise zu Kontrollzwecken, z. B. dahin, ob ein Köderanbiss erfolgt ist, praktikabel sein, so dass Kontrollen erheblich vereinfacht und erheblich zügiger durchgeführt werden können.

Insbesondere, wenn der oder ein Köder über eine an der Aufnahmekammer angeordnete oder ausgebildete Köderhalteeinrichtung zur Halterung eines Köders gehaltert ist, kann die Aufnahmekammer samt Köderhalteeinrichtung und daran gehaltertem Köder ohne Einstieg in den Kanalschacht aus dem Kanalschacht entnommen, ein etwaiger Köderanbiss erkannt, gegebenenfalls ein Austausch oder Ersatz des oder eines Köders vorgenommen, und die Aufnahmekammer samt Köderhalteinrichtung sowie daran gehaltertem Köder wieder in den Kanalschacht eingebracht werden.

Aus vorstehendem Absatz ergibt sich, dass die oder allgemein eine Köderhalteeinrichtung zur Halterung eines Köders zweckmäßig an der Aufnahmekammer angeordnet oder ausgebildet ist. Die Köderhalteeinrichtung ist dabei insbesondere an einem in den gehäuseteilseitigen Aufnahmeraum ragenden Abschnitt der Aufnahmekammer angeordnet oder ausgebildet.

An der oder einer entsprechenden Aufnahmekammer kann wenigstens eine, insbesondere optische, Überwachungseinrichtung zur Überwachung zumindest eines Teils des durch das Gehäuseteil begrenzten Aufnahmeraums angeordnet oder ausgebildet sein. Die Überwachungseinrichtung ist im Allgemeinen derart an oder in der Aufnahmekammer angeordnet oder ausgebildet, dass sich eine möglichst weiträumige Überwachung des durch das Gehäuseteil begrenzten Aufnahmeraums realisieren lässt. Die Überwachungseinrichtung umfasst typischerweise eine geeignete, insbesondere optische, Sensorik zur Überwachung zumindest eines Teils des durch das Gehäuseteil begrenzten Aufnahmeraums. Die Überwachungseinrichtung kann sonach als Infrarotsensorik bzw. -kamera ausgebildet sein oder wenigstens eine Infrarotsensorik bzw. -kamera umfassen. Selbstverständlich kann die Überwachungseinrichtung prinzipiell auch andersartig ausgeführt sein. Denkbar wäre z. B. die Implementierung einer Überwachungseinrichtung in Form einer Videokamera oder dergleichen.

Unabhängig von der konkreten Ausführung der oder allgemein einer entsprechenden Überwachungseinrichtung ist es sonach möglich, sämtliche Vorgänge in dem oder einem Bereich des durch das Gehäuseteil begrenzten Aufnahmeraums zu erfassen und auszuwerten. Insbesondere können Nagetier bedingte Vorgänge quantitativ und/oder qualitativ erfasst und ausgewertet bzw. beurteilt werden. Quantitativ und/oder qualitativ zu überwachende Vorgänge von besonderem Interesse sind beispielsweise Zutritte von Schädlingen in den Aufnahmeraum, Austritte von Schädlingen aus dem Aufnahmeraum, das Verhalten, d. h. insbesondere das Anbiss- und/oder Bewegungsverhalten, jeweiliger in den Aufnahmeraum zugetretener Schädlinge in dem Aufnahmeraum etc. Im Allgemeinen kann die Frequentierung des Aufnahmeraums pro bestimmter Zeiteinheit quantitativ und/oder qualitativ erfasst und ausgewertet bzw. beurteilt werden. Da von der Überwachungseinrichtung erfasste Überwachungsinformationen bzw. -daten selbstverständlich über eine geeignete, insbesondere funkbasierte, Kommunikationsverbindung an ein benutzerseitiges, insbesondere mobiles, externes Endgerät übertragen werden können, lässt sich über eine entsprechende Überwachungseinrichtung ein "Monitoring" sämtlicher Vorgänge in dem durch das Gehäuseteil begrenzten Aufnahmeraum des Gehäuseteils ohne das Erfordernis eines Einstiegs in den Kanalschacht bzw. in die Kanalisation realisieren. Die Kommunikation ist insbe-sondere funkbasiert, d. h. z. B. per Bluetooth, WLAN etc. realisiert, weshalb die Überwachungseinrichtung eine entsprechende funkbasierte Sendeeinrichtung umfasst. Bei einem, insbesondere mobilen, externen Endgerät kann es sich wiederum z. B. um ein Handy, Smartphone, Tablet, Notebook etc. handeln.

Die oder allgemein eine Überwachungseinrichtung kann über einen in der Aufnahmekammer angeordneten oder ausgebildeten, insbesondere wiederaufladbaren, elektrischen Energiespeicher mit elektrischer Energie versorgt werden. Als entsprechender elektrischer Energiespeicher kommt beispielsweise ein elektrochemischer bzw. galvanischer Energiespeicher in Form einer, insbesondere wiederaufladbaren, Batterie in Frage. Denkbar ist auch ein induktiver, d. h. ein mittels elektromagnetischer Induktion, wiederaufladbarer Energiespeicher. Prinzipiell kann die elektrische Energieversorgung einer entsprechenden Überwachungseinrichtung auch über einen kabelgebundenen Anschluss dieser an ein Energieversorgungsnetz realisiert werden.

Analoges gilt im Übrigen für die elektrische Energieversorgung anderer in der Aufnahmekammer angeordneter oder ausgebildeter elektrischer und/oder elektronischer Komponenten der Vorrichtung.

Die Vorrichtung kann wenigstens ein Schwallschutzelement zum Schutz des Eindringens von Wasser in den oder einen durch das Gehäuseteil begrenzten Aufnahmeraum, insbesondere in einen oberhalb der köderplattformseitig begrenzten Durchgangsöffnung liegenden oberen Bereich des Aufnahmeraums, bei einem schwallartig bzw. plötzlich ansteigenden Wasserpegel in dem Kanalschacht, in welchem das Gehäuseteil einzusetzen bzw. eingesetzt ist, umfassen. Das Schwallschutzelement ist typischerweise unterhalb der Köderplattform angeordnet. Das Schwallschutzelement kann zumindest abschnittsweise innerhalb oder außerhalb des Gehäuseteils angeordnet sein.

Das Schwallschutzelement kann einen Grundkörper aufweisen, welcher wenigstens ein Wasserschwallaufnahmevolumen zur Aufnahme einer bestimmten Menge an in dem oder einem Kanalschacht strömendem Wasser begrenzt. Der Grundkörper des Schwallwasserschutzelements kann z. B. zylinderartig bzw. zylinderförmig ausgebildet sein. Denkbar sind auch vieleckige (polygonale), insbesondere viereckige, Grundformen. Der oder allgemein wenigstens ein Schließkörper ist dabei zumindest abschnittsweise innerhalb des Grundkörpers des Schwallschutzelements bewegbar gelagert, derart, dass er bei einem mit dem Eintritt von Wasser in das wenigstens eine Wasserschwallaufnahmevolumen einhergehenden Anstieg des Wasserpegels in dem Wasserschwallaufnahmevolumen von der Offenstellung in die Schließstellung bewegt wird. In der Schließstellung liegt der Schließkörper typischerweise mit einem entsprechenden, insbesondere kalotten- oder kegelförmigen Schließabschnitt, abschnittsweise dichtend an an den köderplattformseitigen Rändern, welche die köderplattformseitig begrenzte Durchgangsöffnung begrenzen, ausgebildeten Anlageabschnitten an. Bei dem Schließkörper handelt es sich dabei zweckmäßig, jedoch in Anbetracht obiger Ausführungen im Zusammenhang mit entsprechenden mit einem Schließkörper koppelbaren oder gekoppelten Antriebseinrichtungen nicht notwendig um einen Schwimmkörper.

Der Grundkörper des Schwallschutzelements kann im Bereich seiner der Köderplattform abgewandten Seite eine wenigstens eine Schwallwassereintrittsöffnung aufweisende Bodenfläche umfassen. Der Schließkörper kann in der Offenstellung zumindest abschnittsweise in der Schwallwassereintrittsöffnung angeordnet sein. Bei Anstieg des Wasserpegels in dem Kanalschacht hebt sich der, insbesondere als Schwimmkörper ausgebildete, Schließkörper von der Schwallwassereintrittsöffnung ab, so dass Wasser in das Wasserschwallaufnahmevolumen eintreten kann, bis der Schließkörper bedingt durch den Anstieg des Wasserpegels in dem Wasserschwallaufnahmevolumen schließlich, wie beschrieben, von der Offenstellung in die Schließstellung bewegt wird. Selbstverständlich ist es auch denkbar, dass der Grundkörper des Schwallschutzelements im Bereich seiner der Köderplattform abgewandten Seite völlig offen ist. Insbesondere in diesem Fall kann der Schließkörper über eine geeignete Halterung zu haltern zu sein.

Der Grundkörper des Schwallschutzelements kann eine Anzahl an, z. B. stegartig ausgebildeten, Füßen aufweisen, welche der Lagerung des Grundkörpers, gegebenenfalls auch dem auf diesem angeordneten Gehäuseteil nebst der darin angeordneten oder befestigten Bestandteile der Vorrichtung, dienen.

Grundsätzlich gilt, dass das Gehäuseteil mit Versteifungsstrukturen zur Erhöhung der mechanischen Stabilität des Gehäuseteils versehen sein kann. Entsprechende Versteifungsstrukturen können, z. B. ring- oder rippenartig, ausgebildet sein. Entsprechende Versteifungsstrukturen können als separate Bauelemente, welche entsprechend an dem Gehäuseteil anzusetzen bzw. mit diesem zu verbinden sind, vorliegen oder integral mit dem Gehäuseteil ausgebildet sein.

Um einem Nagetier einen über den Schließkörper erfolgenden Zutritt auf die Köderplattform zu erleichtern, kann der Schließkörper zumindest abschnittsweise mit wenigstens einer Halt und/oder Haftung für ein den Schließkörper betretendes Nagetier bietenden Oberflächenstrukturierung und/oder Oberflächenbeschichtung und/oder Oberflächenauflage versehen sein. Eine entsprechende Oberflächenstrukturierung bzw. Oberflächenbeschichtung bzw. Oberflächenauflage hemmt oder verhindert ein Abrutschen des Nagetiers von dem Schließkörper, dient sonach im Sinne einer "Einstiegshilfe" und erleichtert einem Nagetier den Zugang auf die Köderplattform, im Allgemeinen den Zugang in das Innere des Gehäuseteils. Selbstverständlich dient eine entsprechende Oberflächenstrukturierung und/oder Oberflächenbeschichtung und/oder Oberflächenauflage einem Nagetier umgekehrt auch im Sinne einer "Ausstiegshilfe" und erleichtert einem Nagetier sonach auch das Verlassen der Köderplattform, im Allgemeinen den Ausgang aus dem Inneren des Gehäuseteils.

Die oder wenigstens eine entsprechende Halt und/oder Haftung für ein den Schließkörper betretendes Nagetier bietende, typischerweise dreidimensionale, Oberflächenstrukturierung kann beispielsweise durch Riffel- und/oder Rippen- und/oder Sickenstrukturen in der Oberfläche des Schließkörpers gebildet sein. Eine entsprechende Oberflächenstrukturierung kann eine sprossen- oder stufenartige Strukturierung eines Oberflächenabschnitts des Schließkörpers bilden. Auch eine gewisse Aufrauhung der Oberfläche kann als entsprechende Oberflächenstrukturierung dienen. Die oder wenigstens eine Halt und/oder Haftung für ein den Schließkörper betretendes Nagetier bietende Oberflächenbeschichtung kann beispielsweise durch eine gummiartige Beschichtung gebildet sein. Im Allgemeinen können jedwede die Haftung eines Nagetiers auf dem Schließkörper verbessernde Beschichtungen, z. B. basierend auf natürlichen oder synthetischen Kautschuken, Silikonen etc., zumindest abschnittsweise auf die Oberfläche des Schließkörpers aufgebracht sein. Die oder wenigstens eine Oberflächenauflage kann beispielsweise durch eine zumindest abschnittsweise auf der Oberfläche des Schließkörpers befestigte, gummiartige Oberflächenauflage gebildet sein. Eine entsprechende Oberflächenauflage ist in geeigneter Weise an dem Schließkörper zu befestigen, wozu sämtliche form- und/oder kraft- und/oder stoffschlüssigen Befesti-gungsarten in Frage kommen; lediglich beispielhaft wird auf Anklipsen, Ankleben, Anschrauben, Anprägen etc. verwiesen.

Für den beispielhaften Fall eines kalotten- bzw. kugelsegmentförmigen Schließkörpers kann eine entsprechende Oberflächenstrukturierung und/oder Oberflächenbeschichtung und/oder Oberflächenauflage zumindest abschnittsweise auf einem kreisscheibenförmigen Abschnitt des kugelsegmentförmigen Schließkörpers angeordnet oder ausgebildet sein.

Zur Realisierung der weiter oben beschriebenen, relativ zu der Köderplattform bewegbaren Lagerung des Schließkörpers, ist es denkbar, dass der Schließkörper vermittels wenigstens eines bewegbar, insbesondere schwenkbar, an oder in dem Gehäuseteil, insbesondere an der Köderplattform, gelagerten klammer- oder spangenartigen Halteelements bewegbar relativ zu der Köderplattform gelagert ist. Dabei ist ein entsprechendes auch als Halteklammer oder Haltespange zu bezeichnendes Halteelement typischerweise einerseits, insbesondere einends, an dem Gehäuseteil bzw. der Köderplattform und andererseits, insbesondere andernends, an dem Schließkörper befestigt. Über die Anbindung des Schließkörpers an dem Halteelement, die Anbindung des Halteelements an dem Gehäuseteil bzw. der Köderplattform sowie die geometrischen Abmessungen, d. h. insbesondere die Form, des Halteelements definiert sich eine bestimmte Bewegungsbahn, die der Schließkörper bei einer Bewegung von der Offenstellung in die Schließstellung, und umgekehrt, durchläuft.

Das spangen- oder klammerartige Halteelement kann wenigstens zwei parallel oder winklig zueinander verlaufende Halteelementabschnitte umfassen, wobei wenigstens ein Halteelementabschnitt zumindest in der Offenstellung des Schließkörpers durch die köderplattformseitig begrenzte Durchgangsöffnung greift. Entsprechende Halteelementabschnitte und somit das gesamte Halteelement kann beispielsweise L-förmig gebogen sein, d.h. eine (im Wesentlichen) L-förmige geometrische Gestalt aufweisen.

Eine weitere mögliche Realisierung der bewegbaren Lagerung eines Schließkörpers kann vermittels einer Klappeneinrichtung erfolgen. Eine entsprechende Klappeneinrichtung kann wenigstens ein, relativ zu der Köderplattform bewegbar, insbesondere schwenkbar, gelagertes Klappenelement umfassen, welches in einer Offenstellung derart von der Köderplattform weg bewegt ist, dass die wenigstens eine köderplattformseitig begrenzte Durchgangsöffnung freigegeben ist, und in einer Schließstellung derart gegen die Köderplattform bewegt ist, dass die wenigstens eine köderplattformseitig begrenzte Durchgangsöffnung verschlossen ist. Der Schließkörper kann hier in Gestalt eines entsprechenden Klappenelements integraler Bestandteil der Klappeneinrichtung sein. Selbstverständlich ist es alternativ auch möglich, einen separaten Schließkörper an einem entsprechenden Klappenelement zu befestigen. Selbstverständlich kann auch in dieser Ausführungsform ein Schließkörper als Schwimmkörper ausgebildet sein oder wenigstens einen Schwimmkörper umfassen.

Eine entsprechende Klappeneinrichtung kann auch mehrere Klappenelemente umfassen, welche in einer jeweiligen Offenstellung derart von der Köderplattform weg bewegt sind, dass die wenigstens eine köderplattformseitig begrenzte Durchgangsöffnung freigegeben ist, und in einer jeweiligen Schließstellung derart gegen die Köderplattform bewegt sind, dass die wenigstens eine köderplattformseitig begrenzte Durchgangsöffnung durch die Klappenelemente gemeinsam verschlossen ist.

Einen besonders zweckmäßigen Bestandteil der Vorrichtung kann eine Befestigungseinrichtung darstellen, über welche das Gehäuseteil, insbesondere lösbar, an einer Wandung einer Kanalisation, insbesondere eines Kanalschachts, befestigbar ist. Eine entsprechende Befestigungseinrichtung kann wenigstens ein das Gehäuseteil außenumfangsseitig umgreifendes, insbesondere ringförmiges, erstes Befestigungselement und wenigstens ein zweites Befestigungselement zur Befestigung des ersten Befestigungselements an der Wandung einer Kanalisation umfassen. Über eine entsprechende Befestigungseinrichtung lässt sich somit eine, insbesondere im Hinblick auf hochwasser- oder schwallwasserbedingte, auf das Gehäuseteil wirkende Kräfte, stabile Befestigung des Gehäuseteils an einer Wandung einer Kanalisation bzw. eines Kanalschachts ermöglichen. Die Befestigung des zweiten Befestigungselements an der Wandung einer Kanalisation bzw. eines Kanalschachts kann beispielsweise über von dem zweiten Befestigungselement ausgehende oder seitens des zweiten Befestigungselements, gegebenenfalls mit einem Gewinde versehene, horizontale bzw. vertikale Bohrungen durchsetzende Befestigungsbolzen bzw. -schrauben realisiert sein, welche, z. B. durch Mauern oder Schrauben, stabil in der Wandung einer Kanalisation bzw. eines Kanalschachts verankerbar sind.

Sämtliche Bestandteile der Befestigungseinrichtung sind zweckmäßig aus einem oder mehreren mechanisch stabilen sowie korrosionsstabilen Materialien, z. B. Edelstählen, bzw. Materialstrukturen gebildet oder umfassen solche Materialien bzw. Materialstrukturen. Wie sich im Weiteren ergibt, kann eine entsprechende Befestigungseinrichtung auch einen Auftriebsschutz des Gehäuseteils gewährleisten.

Ganz allgemein gilt, dass die Befestigungseinrichtung ein- oder mehrteilig ausgeführt sein kann. Das erste und das zweite, d. h. allgemein wenigstens ein weiteres Befestigungselement, können sonach einstückig miteinander ausgebildet oder mehrstückig ausgebildet und entsprechend aneinander befestigt sein. Zur Befestigung jeweiliger Befestigungselemente aneinander kommen grundsätzlich sämtliche (beschädigungs- bzw. zerstörungsfrei) lösbaren oder unlösbaren form- und/oder kraft- und/oder stoffschlüssigen Befestigungsarten in Betracht.

Zur Realisierung einer Auftriebssicherung kann das zweite Befestigungselement wenigstens einen das Gehäuseteil oberseitig unter Ausbildung einer Auftriebssicherung zumindest abschnittsweise übergreifenden Befestigungselementabschnitt umfassen. Das Gehäuseteil ist sonach gegen hochwasser- bzw. schwallwasserbedingte Auftriebskräfte geschützt und in seiner, insbesondere vertikalen, Positionierung lagefest an bzw. in der Kanalisation befestigt. Mit anderen Worten kann der das Gehäuseteil oberseitig übergreifende Befestigungselementabschnitt hochwasser- bzw. schwallwasserbedingte Auftriebskräfte aufnehmen.

Selbstverständlich ist es möglich, mehrere entsprechende Befestigungselementabschnitte vorzusehen. So können beispielsweise wenigstens zwei, insbesondere winklig, bevorzugt V-förmig, zueinander verlaufende Befestigungselementabschnitte vorhanden sein. Ein Befestigungselementabschnitt kann grundsätzlich eine beliebige geometrische Gestalt aufweisen. Lediglich beispielhaft wird auf schenkel- bzw. strebenartige Befestigungselementabschnitte verwiesen.

Entsprechende Befestigungselementabschnitte können an der freiliegenden Oberseite des Gehäuseteils, insbesondere formschlüssig (beschädigungs- bzw. zerstörungsfrei) lösbar, befestigbar oder befestigt sein. Die Befestigung erfolgt also insbesondere durch einen Formschluss, d. h. über das formschlüssige Zusammenwirken von Formschlusselementen seitens der Befestigungselementabschnitte mit hierzu korrespondierenden Formschlusselementen seitens des Gehäuseteils. An jeweiligen Befestigungselementabschnitten ausgebildete Formschlusselemente können z. B. als Ausnehmung oder Durchbrechung ausgebildet sein, an dem Gehäuseteil ausgebildete Formschlusselemente können beispielsweise durch, insbesondere vertikale, Vorsprünge ausgebildet sein, welche in dem aneinander befestigten Zustand in oder durch entsprechende Ausnehmungen bzw. Durchbrechungen greifen. Selbstverständlich ist eine gemischte oder umgekehrte Konfiguration entsprechender Ausnehmungen bzw. Durchbrechungen und Vorsprünge möglich.

Der oder wenigstens ein entsprechender Befestigungselementabschnitt kann als separates Bauelement an einem profilartigen Grundkörper des zweiten Befestigungselements form- und/oder kraft- und/oder stoffschlüssig (beschädigungs- bzw. zerstörungsfrei) lösbar oder unlösbar befestigbar oder befestigt sein. Lediglich beispielhaft wird in diesem Zusammenhang auf eine Klemm-, Schraub- oder Schweißbefestigung verwiesen. Denkbar ist es auch, dass der oder wenigstens ein entsprechender Befestigungselementabschnitt einstückig mit dem oder einem profilartigen Grundkörper des zweiten Befestigungselements ausgebildet ist.

Der oder wenigstens ein Befestigungselementabschnitt kann zumindest abschnittsweise mit wenigstens einer, insbesondere querschnittsreduzierenden, Versteifungsstruktur zur Erhöhung der mechanischen Stabilität des Befestigungselementabschnitts ausgebildet sein. Derart kann die Materialstärke und somit das Gewicht der Befestigungseinrichtung ohne Einbußen der mechanischen Stabilität der Befestigungseinrichtung reduziert werden. Entsprechende Versteifungsstrukturen können beispielsweise durch Rippen, Sicken etc. gebildet sein.

Alternativ zu der Befestigung des Gehäuseteils vermittels einer entsprechenden Befestigungseinrichtung ist es denkbar, das Gehäuseteil vermittels einer Spanneinrichtung gegen die Wandungen einer Kanalisation bzw. eines Kanalschachts zu verspannen und derart zu befestigen. Die Spanneinrichtung kann mehrere, typischerweise äquidistant verteilt angeordnete, radial von dem Gehäuseteil abragende Spannelemente umfassen, welche dieses gegen entsprechende Wandungen verspannen.

Weiter alternativ zu der Befestigung des Gehäuseteils vermittels einer entsprechenden Befestigungseinrichtung ist es denkbar, wenigstens eine Führungseinrichtung zur, insbesondere linear, bewegbaren Führung des in einen Kanalschacht eingesetzten Gehäuseteils entlang einer bzw. relativ zu einer Wandung des Kanalschachts vorzusehen. Das Gehäuseteil ist hier also nicht lagefest an einer Wandung des Kanalschachts befestigt, sondern vermittels einer entsprechenden Führungseinrichtung entlang einer bzw. relativ zu einer Wandung des Kanalschachts, insbesondere linear, bewegbar geführt. Über eine derartige Führungseinrichtung ist es sonach möglich, dass sich das in einen Kanalschacht eingesetzte Gehäuseteil nebst darin und/oder darin angeordneten Komponenten der Vorrichtung, insbesondere linear, bewegbar geführt, innerhalb des Kanalschachts bewegt. Bewegungen des Gehäuseteils erfolgen typischerweise entlang einer vertikal verlaufenden, insbesondere linearen, Bewegungsachse, d. h. z. B. entlang einer Symmetrie- oder Zentralachse des Kanalschachts. Das Gehäuseteil ist über die Führungseinrichtung gegen ein Verkanten in dem Kanalschacht gesichert bewegbar geführt; die Führungseinrichtung verhindert also ein Verkanten des Gehäuseteils in dem Kanalschacht.

Im Weiteren werden verschiedene beispielhafte Ausführungsformen entsprechender Führungseinrichtungen beschrieben, welche sich insbesondere in der funktionellen und konstruktiven Ausgestaltung jeweiliger einer jeweiligen Führungseinrichtung zugehöriger Führungselemente unterscheiden.

Eine entsprechende Führungseinrichtung kann z. B. wenigstens ein, typischerweise mehrere, rad- oder rollenartige(s) Führungselement(e) umfassen, über welche(s) das Gehäuseteil abrollartig entlang der Wandung des Kanalschachts bewegbar an der Wandung des Kanalschachts führbar oder geführt ist. Entsprechende rad- oder rollenartige Führungselemente können unmittelbar an der Wandung des Kanalschachts anliegen, so (kanalschacht)wandungsseitig keine besonderen Vorkehrungen zur Realisierung der bewegbaren Führung des Gehäuseteils notwendig sind. Im Falle mehrerer rad- oder rollenartiger Führungselemente sind diese typischerweise äquidistant verteilt an dem bzw. um das Gehäuseteil angeordnet oder ausgebildet. Bei entsprechenden rad- oder rollenartigen Führungs-elementen kann es sich z. B. um Räder oder Rollen, handeln. Im Allgemeinen kommen jedwede Führungselemente, die ein entsprechendes Abrollen entlang einer Wandung eines Kanalschachts ermöglichen, in Betracht.

Entsprechende rad- oder rollenartige Führungselemente können an einer an dem Gehäuseteil angeordneten oder ausgebildeten Halteeinrichtung gelagert sein. Die rad- oder rollenartigen Führungselemente können über die Halteeinrichtung, insbesondere spannkraftbeaufschlagt, gegen die Wandung des Kanalschachts verspannbar oder verspannt sein. Durch eine derartige Halterung und Verspannung ist eine sichere vertikale Positionierung des Gehäuseteils in einem Kanalschacht möglich. Die Spannkraft ist typischerweise so gewählt, dass ein unkontrolliertes Absinken des Gehäuseteils verhindert, vertikale Bewegungen des Gehäuseteils, insbesondere in Richtung eines Kanalschachtdeckels bzw. in Richtung einer oberen Kanalschachtöffnung, gleichwohl ermöglicht sind. Bewegungen des Gehäuseteils in Richtung eines Kanalschachtdeckels bzw. in Richtung einer oberen Kanalschachtöffnung können insbesondere durch, z. B. schwallwasserbedingte, Auftriebskräfte hervorgerufen sein.

Eine entsprechende Halteeinrichtung kann wenigstens einen klapp- oder schwenkbar an dem Gehäuseteil gelagerten, d. h. angeordneten oder ausgebildeten, Haltearm umfassen, welcher gegen eine Wandung eines Kanalschachts klapp- oder schwenkbar ist. Der Haltearm kann mit wenigstens einem Spannelement, insbesondere einem Federelement, z. B. in Form einer Druckfeder, gekoppelt sein, über welches Spannelement eine das Führungselement gegen die Wandung des Kanalschachts verspannende Spannkraft, insbesondere Federkraft, auf den Haltearm ausübbar oder ausgeübt ist. Entsprechende Spannelemente sind typischerweise zwischen dem Gehäuseteil und einem Haltearm angeordnet oder ausgebildet. Über eine derartig ausgebildete Halteeinrichtung lässt sich das Gehäuseteil in eine Vielzahl an Kanalschächten mit unterschiedlichen Durchmessern einsetzen und (winklig) gegen die Kanalschachtwandungen verspannen.

Alternativ oder ergänzend kann eine entsprechende Halteeinrichtung wenigstens einen, insbesondere teleskopartig, verlängerbaren Haltearm umfassen, welcher radial (bezüglich der Symmetrie- oder Zentralachse des Gehäuseteils oder des jeweiligen Kanalschachts) gegen eine Wandung eines Kanalschachts verlängerbar ist. Der Haltearm kann mit wenigstens einem Spannelement, insbesondere einem Federelement, z. B. in Form einer Druckfeder, gekoppelt sein, über welches Spannelement eine das Führungselement gegen die Wandung des Kanalschachts verspannende Spannkraft, insbesondere Federkraft, auf den Haltearm ausübbar oder ausgeübt ist. Auch über eine derartig ausgebildete Halteeinrichtung lässt sich das Gehäuseteil in eine Vielzahl an Kanalschächten mit unterschiedlichen Durchmessern einsetzen und (radial) gegen die Kanalschachtwandungen verspannen.

Eine entsprechende Führungseinrichtung kann auch wenigstens ein gehäuseteilseitiges, insbesondere zahnrad- oder zahnstangenartiges, Linearführungselement und wenigstens ein (kanalschacht)wandungsseitiges, insbesondere zahnrad- oder zahnstangenartiges, korrespondierendes bzw. mit diesem zusammenwirkendes, zahnrad- oder zahnstangenartiges, Linearführungselement umfassen, über welche das Gehäuseteil linear bewegbar an der Wandung des Kanalschachts führbar oder geführt ist. In diesem Fall umfasst die Führungseinrichtung sonach auch wandungsseitige Führungselemente in Form entsprechender, insbesondere zahnrad- oder zahnstangenartiger, Linearführungselemente. Entsprechende gehäuseteilseitige und wandungsseitige Linearführungselemente stehen typischerweise in einem mechanischen Eingriff bzw. einer mechanischen Wirkverbindung, d. h. diese wirken unter Ausbildung einer entsprechenden Linearführung zusammen. Neben zahnrad- oder zahnstangenartigen Linearführungselementen kommen sowohl gehäuseteilseitig als auch wandungsseitig jedwede Linearführungselemente in Betracht, welche eine entsprechende Linearführung eines Gehäuseteils relativ zu einer Kanalschachtwandung ermöglichen.

Eine entsprechende Führungseinrichtung kann wenigstens eine mit wenigstens einem Führungselement koppelbare oder gekoppelte, insbesondere motorische, Antriebseinrichtung umfassen, welche dazu eingerichtet ist, eine das wenigstens eine Führungselement in eine uni- oder bidirektionale Antriebsbewegung versetzende Antriebskraft auf das wenigstens eine Führungselement zu übertragen. Eine entsprechende Antriebseinrichtung kann an oder in dem Gehäuseteil angeordnet oder ausgebildet sein. Eine entsprechende Antriebseinrichtung kann alternativ oder ergänzend auch an oder in einem entsprechenden Führungselement, z. B. integriert in ein rad- oder rollenartiges Führungselement oder in ein Zahnrad, angeordnet oder ausgebildet sein. Bei einer entsprechenden Antriebseinrichtung kann es sich z. B. um einen Elektromotor handeln. Die Energieversorgung des Elektromotors kann analog der Energieversorgung anderer elektrischer bzw. elektronischer Komponenten der Vorrichtung erfolgen.

Eine entsprechende Führungseinrichtung kann auch wenigstens ein in einem Kanalschacht befestigbares oder befestigtes und an dem Gehäuseteil angeordnetes oder dieses, insbesondere axial, durchsetzendes profil- oder stangenartiges Führungselement umfassen. Das Gehäuseteil ist hier auch relativ zu dem profil- stangenartigen Führungselement, insbesondere linear, bewegbar geführt. Dies beinhaltet typischerweise auch eine Befestigung des Gehäuseteils an dem profil- stangenartigen Führungselement, welches wiederum kanalschachtseitig befestigt, d. h. z. B. eingemauert, verschraubt, ist. Das profil- oder stangenartige Führungselement muss nicht zwingend unmittelbar an einer Kanalschachtwandung anliegen, sondern kann, z. B. zentrisch, innerhalb des Kanalschachts angeordnet oder ausgebildet sein. Ein ein Gehäuseteil, typischerweise axial, durchsetzendes profil- stangenartiges Führungselement hindert die weiter oben beschriebene Funktion der Vorrichtung, d. h. insbesondere die Bewegung eines entsprechenden Schließkörpers, nicht.

Zur Realisierung oder Unterstützung von Bewegungen des Gehäuseteils in dem Kanalschacht kann an dem Gehäuseteil wenigstens ein Schwimmkörper ausgebildet oder angeordnet sein. Die Positionierung entsprechender Schwimmkörper ist typischerweise oberhalb des Schließkörpers, sodass in dem Kanalschacht aufsteigendes Wasser einen gehäuseteilseitigen Schwimmkörper erst erreicht, wenn sich der Schließkörper bereits in der Schließstellung befindet. Unter einem Schwimmkörper ist, wie weiter oben im Zusammenhang mit dem Schließkörper erwähnt, ein Körper zu verstehen, welcher auf einer Wasseroberfläche aufschwimmt und nicht untergeht. Es ist möglich, separate Schwimmkörper an dem Gehäuseteil anzuordnen oder das Gehäuseteil bereits mit integrierten Schwimmkörpern auszubilden. Dies kann konstruktiv z. B. durch eine wenigstens einen Hohlraum definierende oder aufweisende Gehäuseteilwandung realisiert sein. Der Hohlraum ist beispielsweise mit Luft gefüllt. Alternativ oder ergänzend kann eine Gehäuseteilwandung auch aus einem Material geringer Dichte gefertigt sein, welches sonach aufgrund des Dichteunterschieds auf einer Wasseroberfläche aufschwimmt und nicht untergeht. Ein solches Material kann z. B. Kunststoff, insbesondere geschäumter, Kunststoff sein. Konkret kann es sich dabei also z. B. um geschäumte Thermoplaste, wie z. B. geschäumtes Polyethylen oder geschäumtes Polystyrol (Styropor) handeln. Eine Bewegung des Gehäuseteils nach oben wäre hier durch einen Anstieg des Wasserstands in dem die Vorrichtung aufnehmenden Kanalschacht induziert. Entsprechend wäre eine Bewegung des Gehäuseteils nach unten durch einen Abfall des Wasserstands in dem die Vorrichtung aufnehmenden Kanalschacht induziert. Selbstverständlich können entsprechende Bewegungen des Gehäuseteils bei Vorhandensein entsprechender Antriebseinrichtungen über solche (mit)gesteuert werden.

Insbesondere in diesem Zusammenhang ist auch die Möglichkeit einer Aufhängung des Gehäuseteils in dem Kanalschacht, d. h. an einer Wandung des Kanalschachts, beispielsweise nach Art einer Hängelampe denkbar. In diesem Fall ist eine geeignete Aufhängeeinrichtung vorzusehen, über welche das Gehäuseteil an einer, insbesondere horizontal orientierten oder verlaufenden, Wandung aufhängbar ist, vorzusehen.

In dem Gehäuseteil können mehrere, d. h. wenigstens zwei, Köderplattformen angeordnet sein, wobei wenigstens ein Schließkörper relativ zu wenigstens einer Köderplattform bewegbar gelagert ist, wobei der Schließkörper in einer Offenstellung derart von der jeweiligen wenigstens einen Köderplattform weg bewegt ist, dass die jeweilige wenigstens eine köderplattformseitig begrenzte Durchgangsöffnung freigegeben ist, und in einer Schließstellung derart gegen die jeweilige wenigstens eine Köderplattform bewegt ist, dass die jeweilige wenigstens eine köderplattformseitig begrenzte Durchgangsöffnung verschlossen ist. Das eingangs beschriebene Prinzip des hermetisch dichtenden Verschlusses einer köderplattformseitig begrenzten Durchgangsöffnung über einen in eine entsprechende Schließstellung bewegten Schließkörper gilt hier also gleichermaßen. Der Schließkörper dichtet bzw. schließt eine jeweilige Durchgangsöffnung in der Schließstellung typischerweise hermetisch ab. Entsprechend ist der oberhalb der Durchgangsöffnung befindliche Bereich des Gehäuseteils in der Schließstellung des Schließkörpers sonach typischerweise hermetisch abgedichtet bzw. abgeschlossen.

Jeweilige Köderplattformen sind typischerweise über- bzw. untereinander angeordnet. Je nach Geometrie der jeweiligen Köderplattformen können mehrere Köderplattformen zumindest abschnittsweise parallel angeordnet sein. Zwischen zwei (unmittelbar) benachbart angeordneten Köderplattformen ist typischerweise ein eine Zwischenebene definierender Zwischenraum gebildet. Jeweilige Zwischenräume müssen bezüglich ihrer Form, ihres Volumens etc. nicht gleich, sondern können unterschiedlich sein. Dies gilt für den beispielhaften Fall von mehr als zwei Köderplattformen und somit wenigstens zwei entsprechenden Zwischenräumen. Jeweilige Zwischenräume kommunizieren über jeweilige köderplattformseitig begrenzte Durchgangsöffnungen miteinander; es besteht sonach eine Durchgangsmöglichkeit von einer "untersten" Köderplattform bis zu einer "obersten" Köderplattform.

Entsprechende Zwischenräume können eine strömungsbezogene "Beruhigung", allgemein eine Beeinflussung der Strömung, von in dem Gehäuseteil aufsteigenden Wasser bedingen. Das in das Gehäuseteil einströmende und in diesem aufsteigende Wasser muss sich sonach den Weg über mehrere Zwischenebenen nach oben "bahnen", was typischerweise zu einer "Beruhigung" der Strömung des Wassers führt. Jeweilige Köderplattformen können zudem zumindest abschnittsweise mit einer die Strömung, insbesondere die Art der Strömung bzw. die Strömungsgeschwindigkeit, von entlang dieser strömendem bzw. in dem Gehäuseteil aufsteigendem Wasser beeinflussenden Oberflächenstrukturierung, z. B. in Form von Strömungs beeinflussenden Rippen und/oder Sicken, versehen sein.

Durch das Vorhandensein mehrerer Zwischenräume ist zudem die Möglichkeit gegeben, das Gehäuseteil mit einer im Vergleich größeren Anzahl an Ködern auszustatten, da Köder prinzipiell in mehreren Ebenen angeordnet werden können. Das Gehäuseteil kann insofern im Vergleich auch von mehr Nagetieren frequentiert werden.

Zudem kann die mechanische Stabilität, insbesondere die Steifigkeit, des Gehäuseteils durch das Vorhandensein mehrerer Zwischenräume erhöht werden. Das Gehäuseteil kann durch die in diesem angeordneten Köderplattformen zusätzlich "ausgesteift" werden.

Jeweilige durch jeweilige Köderplattformen begrenzte Durchgangsöffnungen können relativ zueinander versetzt angeordnet sein. Allgemein kann wenigstens eine köderplattformseitig begrenzte Durchgangsöffnung einer ersten Köderplattform versetzt zu der wenigstens einen köderplattformseitig begrenzten Durchgangsöffnung einer zu der ersten Köderplattform benachbart angeordneten weiteren Köderplattform angeordnet sein. Beispielsweise kann eine Durchgangsöffnung einer ersten Köderplattform in einem Randbereich der ersten Köderplattform ausgebildet und eine Durchgangsöffnung einer der ersten Köderplattform benachbarten weiteren Köderplattform in einem entgegengesetzt angeordneten Randbereich der weiteren Köderplattform ausgebildet sein. Durch die versetzte Anordnung jeweiliger Durchgangsöffnungen ist ebenso eine "Beruhigung", allgemein eine Beeinflussung der Strömung, von in dem Gehäuseteil, z. B. mäanderartig, aufsteigendem Wasser möglich. Die versetzte Anordnung jeweiliger Durchgangsöffnungen erleichtert zudem die Bewegung eines Schädlings zwischen jeweiligen Zwischenräumen bzw. Zwischenebenen.

Wenigstens eine Köderplattform kann zumindest abschnittsweise mit einem geneigt oder gebogen bzw. gekrümmt relativ zu wenigstens einer weiteren, insbesondere benachbart, angeordneten weiteren Köderplattform verlaufenden Köderplattformabschnitt ausgebildet sein. Durch entsprechende geneigte bzw. gebogene bzw. gekrümmte Verläufe entsprechender Köderplattformen kann ebenso eine Beeinflussung der Strömung von in dem Gehäuseteil aufsteigendem Wasser realisiert werden. Geneigte bzw. gebogene bzw. gekrümmte Verläufe entsprechender Köderplattformen können zudem im Sinne von Auf- bzw. Abstiegsrampen den Auf- bzw. Abgang von Schädlingen zwischen jeweiligen Zwischenräumen bzw. Zwischenebenen erleichtern.

Als weitere Maßnahme zur Beeinflussung der Strömung von in dem Gehäuseteil aufsteigendem

Wasser, kann wenigstens eine Köderplattform zumindest abschnittsweise mit diese dursetzenden bohrungsartigen Öffnungen bzw. Perforationen ausgebildet sein. Jeweilige allgemein ähnlich einer Loch(blech)struktur ausgebildete Öffnungen einer Köderplattform können die Strömung von aufsteigendem Wasser "dämpfen" und somit ebenso "beruhigen". Die Öffnungen sind zusätzlich zu jeweiligen Durchgangsöffnungen vorhanden und unterscheiden sich insbesondere in ihrer Größe, d. h. insbesondere ihrem Durchmesser, von jeweiligen Durchgangsöffnungen; die Öffnungen sind klein im Vergleich zu jeweiligen Durchgangsöffnungen. Rundliche Öffnungen können beispielsweise einen Durchmesser zwischen 50 µm und 3 mm aufweisen. Selbstverständlich können verschiedene Öffnungen mit unterschiedlichen Geometrien vorhanden sein.

Allgemein, d. h. grundsätzlich unabhängig von der Vorsehung mehrerer Köderplattformen, ist zu beachten, dass sich bei Einströmen bzw. Aufsteigen von Wasser in das bzw. in dem Gehäuseteil aufgrund des gegebenen Volumens (Innenvolumens) und der Dichtheit des Gehäuseteils in dem Gehäuseteil ein Gegendruck ausbildet, welcher dem einströmenden bzw. aufsteigenden Wasser entgegengesetzt ist respektive dem Einströmen bzw. Aufsteigen von Wasser entgegen wirkt. Dies ergibt sich dadurch, dass die in dem Gehäuseteil befindliche Luft durch das Einströmen und Aufsteigen von Wasser komprimiert wird. Das Aufsteigen von Wasser in dem Gehäuseteil wird sonach aufgrund des sich ausbildenden Gegendrucks zunehmend erschwert. Dieses Prinzip ist selbstverständlich auch bei Vorhandensein mehrerer Köderplattformen gegeben, so dass dem in dem Gehäuseteil aufsteigendem Wasser bei Erreichen einer bestimmten Köderplattform ein derart hoher Gegendruck entgegengesetzt ist, dass es bei der gegebenen Strömung nicht mehr weiter aufsteigen kann.

Weiterhin allgemein, d. h. grundsätzlich unabhängig von der Vorsehung mehrerer Köderplattformen, ist es denkbar, dass die oder wenigstens eine Köderplattform sich zumindest abschnittsweise spiral- oder wendelförmig zumindest abschnittsweise durch das Gehäuseteil erstreckend ausgebildet ist. Über eine entsprechend spiral- oder - ähnlich einer Wendeltreppe - wendelförmig ausgebildete Köderplattform kann sich ein in das Gehäuseteil eingedrungener Schädling auf einfache Weise innerhalb des Gehäuseteils bewegen, z. B. um zu einem Köder zu gelangen. Spiral- bzw. wendelförmige Köderplattformen können ebenso einen Einfluss auf die Strömung von in dem Gehäuseteil aufsteigenden Wasser haben. Für den Fall mehrerer Köderplattformen ist es möglich, dass eine oder mehrere Köderplattform(en) zumindest abschnittsweise mit einem entsprechenden spiral- bzw. wen-delförmigen Verlauf ausgebildet sind.

Die Erfindung betrifft ferner einen Kanalschacht, allgemein ein schachtartiges Bauwerk oder einen schachtartigen Bauwerkabschnitt, umfassend wenigstens eine wie beschriebene Vorrichtung. Bei einem entsprechenden Kanalschacht kann es sich insbesondere um einen Abwasserkanalschacht oder einen Kabelkanalschacht handeln. Hinsichtlich des Kanalschachts gelten sämtliche Ausführungen im Zusammenhang mit der Vorrichtung analog.

Weitere Vorteile, Merkmale und Einzelheiten der Erfindung ergeben sich aus dem im Folgenden beschriebenen Ausführungsbeispiel sowie anhand der Zeichnungen. Dabei zeigen:
Fig. 1 - 4 jeweils eine Prinzipdarstellung einer Vorrichtung zur Halterung eines Köders gemäß einem Ausführungsbeispiel der Erfindung; und
Fig. 5 - 9 jeweils eine Prinzipdarstellung einer Vorrichtung zur Halterung eines Köders gemäß einem weiteren Ausführungsbeispiel der Erfindung;
Fig. 10 - 13 jeweils eine Prinzipdarstellung einer Vorrichtung zur Halterung eines Köders gemäß einem weiteren Ausführungsbeispiel der Erfindung;
Fig. 14 - 26 jeweils eine Prinzipdarstellung einer Vorrichtung zur Halterung eines Köders gemäß einem weiteren Ausführungsbeispiel der Erfindung; und
Fig. 27 - 29 jeweils eine Prinzipdarstellung einer Vorrichtung zur Halterung eines Köders gemäß einem weiteren Ausführungsbeispiel der Erfindung.

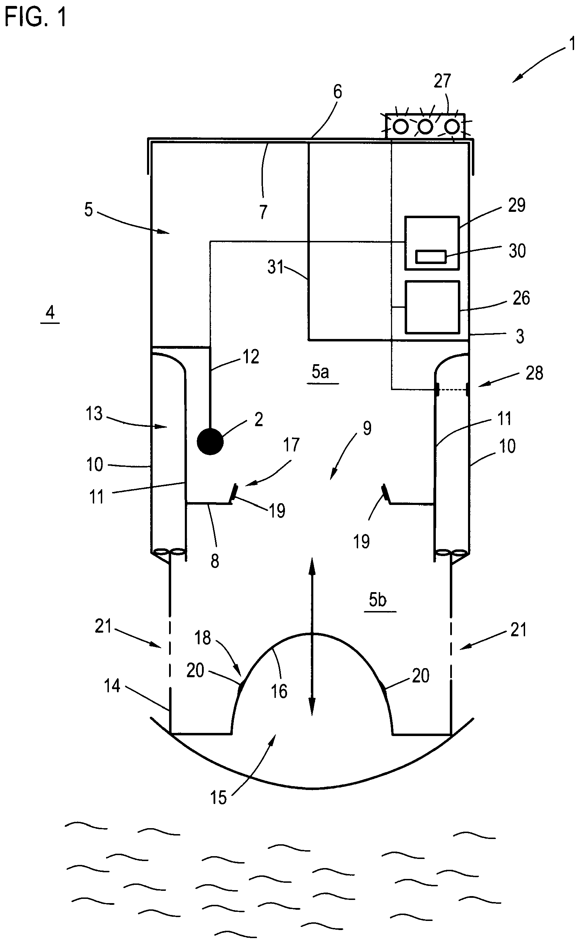

Fig. 1 zeigt eine Prinzipdarstellung einer Vorrichtung 1 zur Halterung eines Köders 2 gemäß einem Ausführungsbeispiel der Erfindung. Der Köder 2 enthält Substanzen, d. h. insbesondere Gifte und Wirkstoffe, die ein Ableben von Schädlingen herbeiführen und/oder ein Vermehren von Schädlingen verhindern.

Die Vorrichtung 1 umfasst ein Gehäuseteil 3. Das Gehäuseteil 3 ist in eine Kanalisation 4, d. h. z. B. einen Abwasserkanal- bzw. Abwasserkanalschacht, eingesetzt. Die Befestigung des Gehäuseteils 3 erfolgt über eine in den Fig. 1 - 4 nicht näher gezeigte gehäuseteilseitige Befestigungseinrichtung, über welche das Gehäuseteil 3, insbesondere lösbar, an einer Wandung der Kanalisation 4 befestigt ist. Die Befestigungseinrichtung 35 kann haken- oder profilartig ausgebildete Befestigungsmittel umfassen, so dass das Gehäuseteil 3 in der Wandung der Kanalisation 4 oder entsprechenden kanalisationsseitigen Steigeinrichtungen (nicht gezeigt), wie z. B. Steigeisen, befestigt werden kann.

Das Gehäuseteil 3 ist aus einem korrosionsstabilen Material, wie z. B. einem Stahlblech und (im Wesentlichen) als hohlzylindrischer Körper ausgebildet, d. h. das Gehäuseteil 3 begrenzt einen (im Wesentlichen) zylindrischen Aufnahmeraum 5.

Im Bereich einer oberen Stirnseite des Gehäuseteils 3 ist ein Deckelelement 6 vorgesehen. Das Gehäuseteil 3 ist sonach stirnseitig über ein Deckelelement 6 verschließbar. Über ein Entfernen des Deckelelements 6 kann eine Zugangsmöglichkeit in den Aufnahmeraum 5 geschaffen werden. Das Deckelelement 6 weist einen Gewindeabschnitt (nicht gezeigt), das Gehäuseteil 3 weist einen hierzu gegengleichen Gewindeabschnitt (ebenso nicht gezeigt) auf, so dass das Deckelelement 6 mit dem Gehäuseteil 3 verschraubt werden kann. Zwischen dem Deckelelement 6 und dem Gehäuseteil 3 ist ferner ein Dichtelement 7 angeordnet, welches eine Abdichtung des Gehäuseteils 3 im Bereich der oberen Stirnseite ermöglicht.

In dem Aufnahmeraum 5 ist eine, typischerweise ringförmige, Köderplattform 8 ausgebildet. Die Köderplattform 8 begrenzt eine, typischerweise kreisrunde, Durchgangsöffnung 9. Die Durchgangsöffnung 9 definiert sonach einen oberhalb dieser liegenden oberen Bereich 5a des Aufnahmeraums 5 und einen unterhalb dieser liegenden unteren Bereich 5b des Aufnahmeraums 5. Die konstruktive Anbindung der Köderplattform 8 an das Gehäuseteil 3 erfolgt über bezüglich der Außenwand 10 des Gehäuseteils 3 radial nach innen versetzte Innenwände 11.

Der Köder 2 ist in dem oberen Bereich des Aufnahmeraums 5 angeordnet. Hierfür ist eine Köderhalteeinrichtung 12 zur Halterung des Köders 2 vorgesehen, an deren freien Ende der Köder 2 gehaltert angeordnet ist. Prinzipiell könnte der oder ein weiterer Köder 2 jedoch auch unmittelbar auf der Köderplattform 9 angeordnet sein.

Zwischen der Außenwand 10 des Gehäuseteils 3 und den hierzu radial nach innen versetzten Innenwänden 11 sind gehäuseteilseitige Führungsabschnitte 13 in Form von länglichen Führungsaufnahmen gebildet. Die gehäuseteilseitigen Führungsabschnitte 12 wirken mit hierzu korrespondierenden Führungselementen 14 in Form von länglichen Führungsstegen eines Schließkörpers 15 zusammen. Durch das Zusammenwirken der gehäuseteilseitigen Führungsabschnitte 13 mit den schließkörperseitigen Führungselementen 14 ist eine Linearführung und somit eine bewegbare Lagerung des Schließkörpers 15 realisiert, welche es ermöglicht, den Schließkörper 15 relativ zu der Köderplattform 8 zu bewegen. Die Lagerung des Schließkörpers 15 beinhaltet eine unverlierbare Anordnung bzw. Verbindung des Schließkörpers 15 an dem bzw. mit dem Gehäuseteil 3.

Im Rahmen der bewegbaren Lagerung des Schließkörpers 15 ist eine Offenstellung und eine Schließstellung vorgesehen. Der Schließkörper 15 ist also insbesondere zwischen einer in Offenstellung und einer Schließstellung bewegbar gelagert bzw. geführt. Der Schließkörper 15 kann also zwischen einer Offenstellung und einer Schließstellung, sowie gegebenenfalls umgekehrt, relativ zu der Köderplattform 9 bewegt werden.

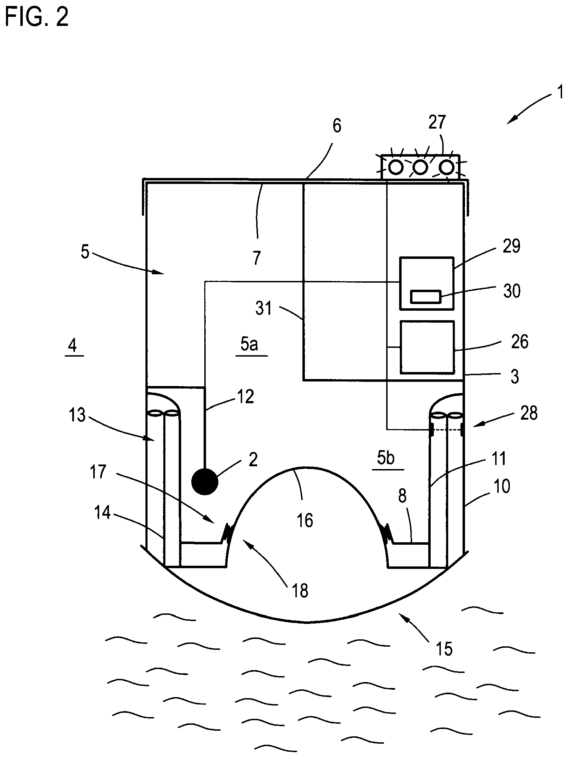

In der in Fig. 1 gezeigten Offenstellung ist der Schließkörper 15 derart von der Köderplattform 8 weg bewegt, dass die köderplattformseitig begrenzte Durchgangsöffnung 9 freigegeben ist. Mithin kann ein Schädling in der Offenstellung die Durchgangsöffnung 9 passieren, um z. B. von dem unteren Bereich 5b des Aufnahmeraums 5 in den oberen Bereich 5a des Aufnahmeraums 5, oder umgekehrt, zu gelangen. In der in Fig. 2 gezeigten Schließstellung ist der Schließkörper 15 derart gegen die Köderplattform 8 bewegt, dass die-köderplattformseitig begrenzte Durchgangsöffnung 9 verschlossen ist. Entsprechend kann ein Schädling in der Schließstellung die Durchgangsöffnung 8 nicht passieren, um z. B. von dem unteren Bereich 5b des Aufnahmeraums 5 in den oberen Bereich 5a des Aufnahmeraums 5, oder umgekehrt, zu gelangen.

Um den in dem oberen Bereich 5a des Aufnahmeraums 5 angeordneten Köder 2 zu erreichen, muss ein Schädling zunächst in das Gehäuseteil 3 gelangen. Hierfür sind in den schließkörperseitigen Führungselementen 14 Durchgänge 21 ausgebildet. Die Durchgänge 21 ermöglichen einen Zutritt in den unteren Bereich 5b des Aufnahmeraums 5. Um den Köder 2 zu erreichen, muss der Schädling im Weiteren durch die köderplattformseitig begrenzte Durchgangsöffnung 9 auf die Köderplattform 8 und somit in den oberen Bereich 5a des Aufnahmeraums 5 gelangen. Nach Anbiss des Köders 2 kann der Schädling durch Passieren der Durchgangsöffnung 9 von dem oberen Bereich 5a des Aufnahmeraums 5 in den unteren Bereich 5b des Aufnahmeraums 5 gelangen und die Vorrichtung 1 über entsprechende Durchgänge 21 verlassen.

Der in der Schließstellung des Schließkörpers 15 realisierte Verschluss der köderplattformseitig begrenzten Durchgangsöffnung 9 verhindert insbesondere ein, z. B. bei Hoch- oder Schwallwasser mögliches, unerwünschtes Eindringen von Wasser in den oberen Bereich 5a des Aufnahmeraums 5, in dem der Köder 2 angeordnet ist. Mithin ist in der Schließstellung des Schließkörpers 15 die Gefahr einer Kontamination des in dem Kanalschacht befindlichen Wassers mit den in dem Köder 2 enthaltenen Substanzen beseitigt.

Ersichtlich weist der Schließkörper 15 einen kalottenförmigen Schließabschnitt 16 auf, welcher in der Schließstellung abschnittsweise dichtend an an den köderplattformseitigen Rändern, welche die köderplattformseitig begrenzte Durchgangsöffnung 9 begrenzen, ausgebildeten Anlageabschnitten 17 anliegt. Durch die dichtende Anlage entsprechender an dem kalottenförmigen Schließabschnitt 16 ausgebildeter Gegenanlageabschnitte 18, an entsprechenden köderplattformseitigen Anlageabschnitten 17 ist ein Eindringen Wasser in den oberen Bereich 5a des gehäuseteilseitigen Aufnahmeraums 5 verhindert. An den köderplattformseitigen Anlageabschnitten 17 sind zum Zwecke der Abdichtung ferner Dichtelemente 19 in Form von Dichtlippen ausgebildet. Mit dem gleichem Zweck sind auch an den schließkörperseitigen Gegenanlageabschnitten 18 Dichtelemente 20 in Form von Dichtringen ausgebildet. Ersichtlich sind weitere, nicht näher bezeichnete Dichtelemente in Form von Dichtlippen auch im Bereich der Öffnung des gehäuseteilseitigen Führungsabschnitts 13 sowie an seitlichen Bereichen des Schließkörpers 15 vorgesehen.

Die Bewegung des Schließkörpers 15 von der Offenstellung in die Schließstellung erfolgt in dem in den Fig. 1, 2 gezeigten Ausführungsbeispiel durch einen Anstieg des Wasserstands in dem Kanalschacht 4. Dies hängt damit zusammen, dass der Schließkörper 15 als Schwimmkörper ausgebildet ist. Der Schließkörper 15 weist also z. B. einen etwa mit Luft gefüllten Hohlraum (nicht gezeigt) auf. Alternativ oder ergänzend kann der Schließkörper 15 aus einem, insbesondere geschäumten, Kunststoffmaterial geringer Dichte gefertigt sein, welches aufgrund des Dichteunterschieds auf einer Wasseroberfläche aufschwimmt und nicht untergeht. Eine Bewegung des Schließkörpers 15 von der Offenstellung in die Schließstellung ist sonach automatisch durch einen Anstieg des Wasserstands in dem Kanalschacht induziert. Entsprechend ist eine Bewegung des Schließkörpers 15 von der Schließstellung in die Offenstellung durch einen Abfall des Wasserstands in dem Kanalschacht induziert.

Der Schließkörper 15 kann reversibel oder irreversibel bewegbar gelagert sein Die beschriebene Bewegung des Schließkörpers 15 von der Offenstellung in die Schließstellung kann sonach reversibel oder irreversibel sein. Eine reversibel bewegbare Lagerung des Schließkörpers 15 bedeutet, dass der Schließkörper 15 von alleine von der Offenstellung in die Schließstellung übergehen kann. Eine irreversibel bewegbare Lagerung bedeutet, dass der Schließkörper 15 in der Schließstellung, insbesondere lösbar, über eine Schließkörperhalteeinrichtung (nicht gezeigt) halterbar oder gehaltert ist, und somit von der Schließstellung nicht von alleine in die Offenstellung übergehen kann. Eine entsprechende Schließkörperhalteeinrichtung umfasst typischerweise wenigstens ein gehäuseteilseitiges und/oder schließkörperseitiges mechanisches und/oder magnetisches Haltemittel, welches zu einer mechanischen und/oder magnetischen Halterung des Schließkörpers 15 in der Schließstellung eingerichtet ist. Die gehäuseteilseitigen bzw. schließkörperseitigen mechanischen oder magnetischen Haltemittel können sonach derart zusammenwirken, dass der Schließkörper 15 sicher in der Schließstellung gehaltert und ohne weiteres nicht aus dieser lösbar ist.

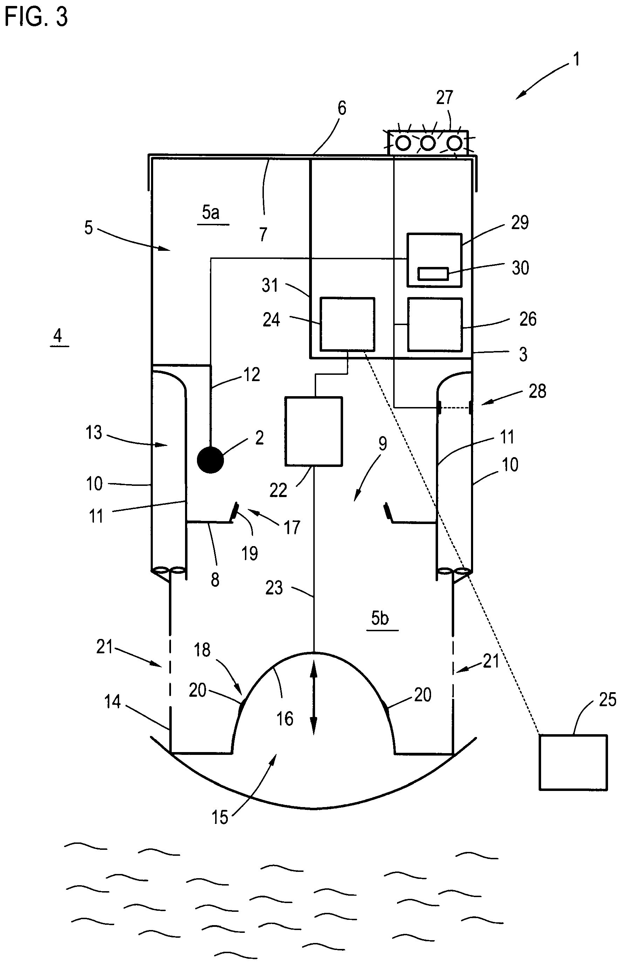

Fig. 3 zeigt eine Vorrichtung 1 gemäß einem weiteren Ausführungsbeispiel der Erfindung. Im Unterschied zu dem in den Fig. 1, 2 gezeigten Ausführungsbeispiel umfasst die Vorrichtung 1 hier eine mit dem Schließkörper 15 gekoppelte motorische Antriebseinrichtung 22 in Form eines Elektromotors, welche(r) dazu eingerichtet ist, den Schließkörper 15 von der Offenstellung in die Schließstellung, und/oder umgekehrt, zu bewegen. Eine Bewegung des Schließkörpers 15 von der Offenstellung in die Schließstellung kann also hier gezielt durch eine mit dem Schließkörper 15 gekoppelte motorische Antriebseinrichtung induziert werden. Die Kopplung zwischen der motorischen Antriebseinrichtung 22 und dem Schließkörper 15 ist über ein Zugmittel 23 in Form einer Kette realisiert. Selbstverständlich kann der Schließkörper 15 auch in diesem Ausführungsbeispiel als Schwimmkörper ausgebildet sein.

Die Steuerung des Betriebs der motorischen Antriebseinrichtung 22 erfolgt über eine dieser zugeordnete Steuereinrichtung 24, welche zur Erzeugung von den Betrieb der motorischen Antriebseinrichtung 22 steuernden Steuerinformationen eingerichtet ist.

Die Steuereinrichtung 24 ist weiter dazu eingerichtet, die Steuerinformationen in Abhängigkeit einer von einer Wasserstandserfassungseinrichtung 25 zur Erfassung des Wasserstands in dem die Vorrichtung 1 aufnehmenden Kanalschacht gelieferten, den oder einen Wasserstand in dem Kanalschacht beschreibenden Wasserstandsinformation zu erzeugen. Mithin kann eine Steuerung des Betriebs der motorischen Antriebseinrichtung 22 in Abhängigkeit des über eine entsprechende Wasserstandserfassungseinrichtung 25 erfassten und in einer entsprechenden Wasserstandsinformation abgebildeten Wasserstands in dem die Vorrichtung 1 aufnehmenden Kanalschacht erfolgen.

In dem in Fig. 3 gezeigten Ausführungsbeispiel ist die Wasserstandserfassungseinrichtung 25 extern, d. h. räumlich getrennt zu der Vorrichtung 1 angeordnet. Demzufolge ist die Steuereinrichtung 24 auch dazu eingerichtet, mit der (externen) Wasserstandserfassungseinrichtung 25, z. B. funkbasiert, zu kommunizieren. Hierfür umfasst die Steuereinrichtung 24 eine geeignete Empfangseinrichtung und die Wasserstandserfassungseinrichtung 25 eine geeignete Sendeeinrichtung. Die oder eine entsprechende Wasserstandserfassungseinrichtung 25 kann jedoch prinzipiell auch in die Vorrichtung 1 integriert sein.

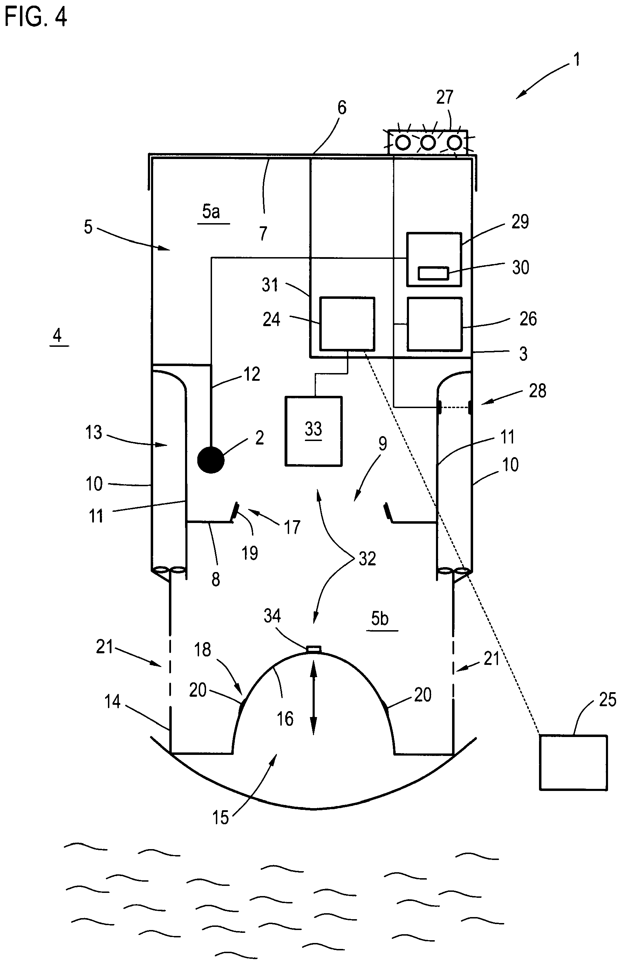

Fig. 4 zeigt eine Vorrichtung 1 gemäß einem weiteren Ausführungsbeispiel der Erfindung. Im Unterschied zu dem in Fig. 3 gezeigten Ausführungsbeispiel ist hier keine motorische Antriebseinrichtung 22, sondern eine magnetische Antriebseinrichtung 32 vorgesehen. Die magnetische Antriebseinrichtung 32 umfasst einen in dem oberen Bereich 5a des Aufnahmeraums 5 angeordneten elektromagnetisches Magnetelement 33 und ein schließkörperseitig angeordnetes permanentmagnetisches Magnetelement 34. Das gehäuseteilseitige permanentmagnetische Magnetelement 33 übt bei Bestromung eine derart hohe magnetische Anziehungskraft auf das schließkörperseitige permanentmagnetische Magnetelement 34 aus, dass der Schließkörper 15 von der Offenstellung in die Schließstellung bewegt wird. Der Betrieb des permanentmagnetischen Magnetelements 33, d. h. insbesondere dessen Bestromung, wird gleichermaßen über die Steuereinrichtung 24 gesteuert. Es gelten die diesbezüglichen Ausführungen im Zusammenhang mit der Steuerung des Betriebs der motorischen Antriebseinrichtung 22 analog.

Alternativ zu der in dem in Fig. 4 gezeigten Ausführungsbeispiel gezeigten Konfiguration entsprechender elektromagnetischer Magnetelemente bzw. permanentmagnetischer Magnetelemente ist es auch möglich, gehäuseteilseitig permanentmagnetische Magnetelemente 34 und schließkörperseitig elektromagnetische Magnetelemente 33 vorzusehen. Denkbar ist es auch, sowohl gehäuseteilseitig als auch schließkörperseitig elektromagnetische oder permanentmagnetische Magnetelemente 33, 34 vorzusehen. Die in den in den Fig. gezeigten Ausführungsbeispielen gezeigte Vorrichtung 1 umfasst ferner eine Schließstellungserfassungseinrichtung 26 zur Erfassung der Schließstellung des Schließkörpers 15. Die Schließstellungserfassungseinrichtung 26 ist dazu eingerichtet, bei Erfassung der Schließstellung des Schließkörpers 15 wenigstens eine akustische und/oder optische Schließstellungsinformation zu erzeugen und über ein Ausgabemittel 27, bei welchem es sich z. B. um einen Lautsprecher und/oder eine, insbesondere mehrfarbige, LED handelt, auszugeben. Die Schließstellungserfassungseinrichtung 26 umfasst eine über eine Implementierung von Lichtschranken realisierte, optische Sensorik 28 zur Erfassung der Schließstellung des Schließkörpers 15.

Die in den in den Fig. gezeigten Ausführungsbeispielen gezeigte Vorrichtung 1 umfasst daneben eine Anbisserfassungseinrichtung 29 zur Erfassung eines Köderanbisses. Die Anbisserfassungseinrichtung 29 ist dazu eingerichtet, bei Erfassung eines angebissenen Köders 2 wenigstens eine akustische und/oder optische Anbissinformation zu erzeugen und über das Ausgabemittel 27 auszugeben. Die Anbisserfassungseinrichtung 29 umfasst demzufolge eine Sensorik 30 zur Erfassung eines Köderanbisses. Die Sensorik 30 kann beispielsweise das Gewicht des an der Köderhalteeinrichtung 12 angeordneten Köders 2 erfassen, wobei anbissbedingte Gewichtsänderungen des Köders 2 Rückschlüsse auf einen Köderanbiss zulassen. Gleichermaßen kann die Sensorik 30 anbissbedingte, auf den Köder 2 und die Köderhalteeinrichtung 12 wirkende Kräfte erfassen, welche ebenso Rückschlüsse auf einen Köderanbiss zulassen.

Die Anbisserfassungseinrichtung 29 kann in Abhängigkeit der Anbissinformation, z. B. basierend auf der Erfassung des Gewichts des Köders 2, unterschiedliche akustische und/oder optische Signale erzeugen. Im Hinblick auf die Ausgabe entsprechender Informationen in Form von optischen Signalen ist es denkbar, dass das Gewicht eines neuen, nicht angebissenen Köders 2 kann z. B. mit optischen Signalen grüner Farbe und/oder mit dauerhaft konstant ausgegebenen optischen Signalen signalisiert werden, das Gewicht eines teilangebissenen Köders 2 kann z. B. mit optischen Signalen gelber Farbe und/oder mit einer ersten Blinkfrequenz ausgegebenen optischen Signalen signalisiert werden, ist der Köder 2 vollständig aufgefressen, kann dies z. B. durch optische Signale roter Farbe und/oder mit einer im Vergleich zu der ersten Blinkfrequenz höheren zweiten Blinkfrequenz ausgegebenen optischen Signalen signalisiert werden. Gleiches gilt selbstverständlich für die Ausgabe akustischer Signale, wobei insbesondere die Frequenz und/oder der Rhythmus eines Tons bzw. einer Tonfolge in Abhängigkeit des Gewichts des Köders 2 respektive der auf den Köder 2 oder die Köderhalteeinrichtung 12 wirkenden Kräfte variierbar sind.

Entgegen der in den in den Fig. gezeigten Ausführungsbeispielen gezeigten Anordnung des Ausgabemittels an dem Gehäuseteil 3, d. h. an der Oberseite des Deckelelements 6, ist es auch möglich, dass das oder ein Ausgabemittel 27 in ein externes mobiles Endgerät, wie z. B. ein Smartphone, integriert ist. In diesem Fall ist die Schließstellungserfassungseinrichtung 26 und/oder die Anbisserfassungseinrichtung 29 dazu eingerichtet, mit dem externen mobilen Endgerät zu kommunizieren und die Schließstellungsinformation und/oder die Anbissinformation an das externe mobile Endgerät zur Ausgabe an dem dortigen Ausgabemittel zu übertragen. Die Kommunikation ist insbesondere funkbasiert, d. h. z. B. per Bluetooth, WLAN etc. realisiert, weshalb die Schließstellungserfassungseinrichtung 26 und/oder die Anbisserfassungseinrichtung 29 entsprechende funkbasierte Sende-einrichtungen umfassen.

Ersichtlich ist in dem Aufnahmeraum 5 eine Aufnahmekammer 31 ausgebildet, in welcher elektrische und/oder elektronische Komponenten der Vorrichtung 1, d. h. insbesondere die Steuereinrichtung 24 und entsprechende Erfassungseinrichtungen 26, 29 sowie gegebenenfalls Einrichtungen zu deren elektrischer Versorgungen, wie z. B. elektrische Energiespeicher, angeordnet sind. Die Aufnahmekammer 31 bietet einen Schutz dieser Komponenten gegenüber äußeren, d. h. insbesondere klimatischen und mechanischen, Einflüssen.

Sowohl die Schließstellungserfassungseinrichtung 26 als auch die Anbisserfassungseinrichtung 29 sind optional und für das mittels der Vorrichtung 1 realisierte erfindungsgemäße Grundprinzip nicht zwingend erforderlich.

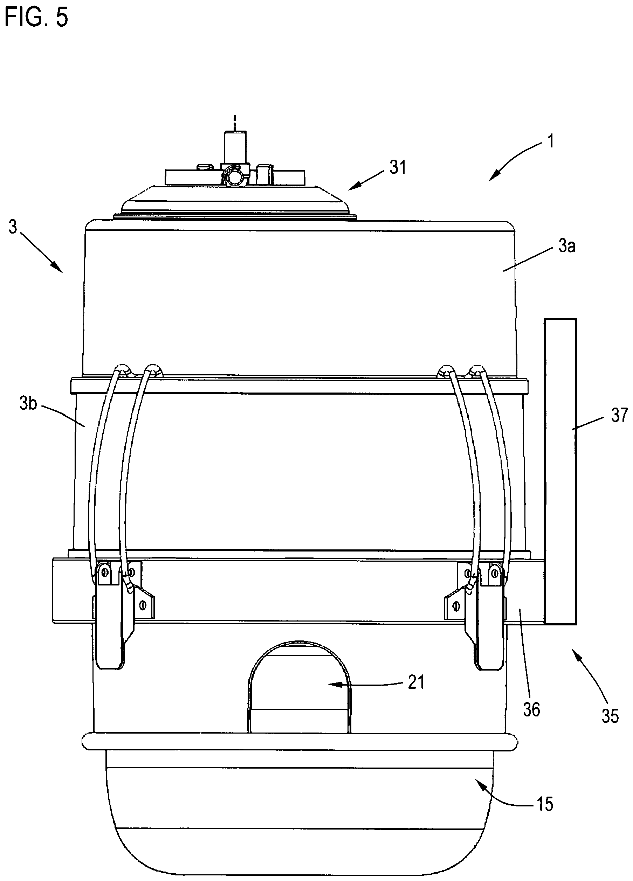

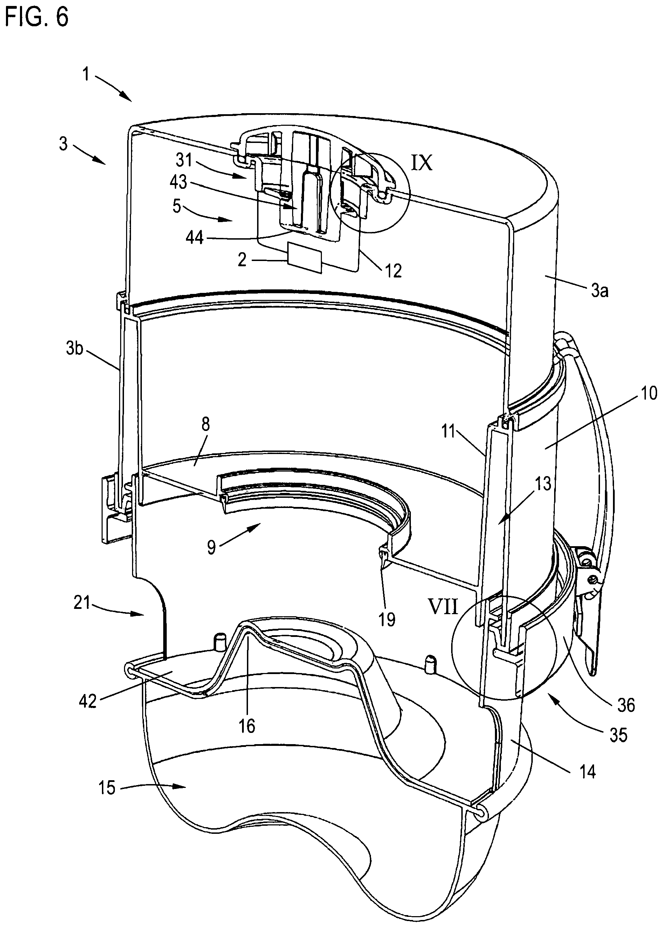

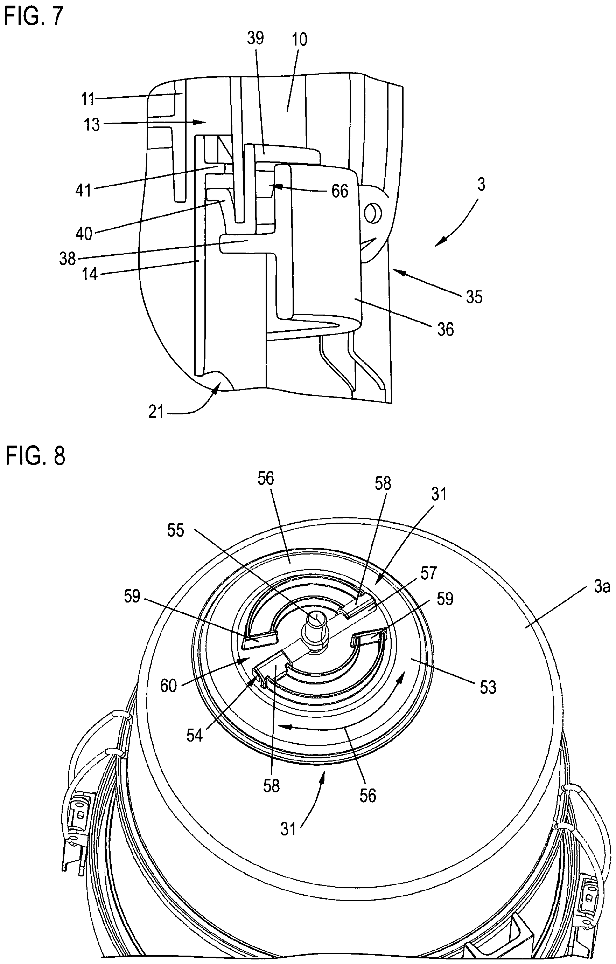

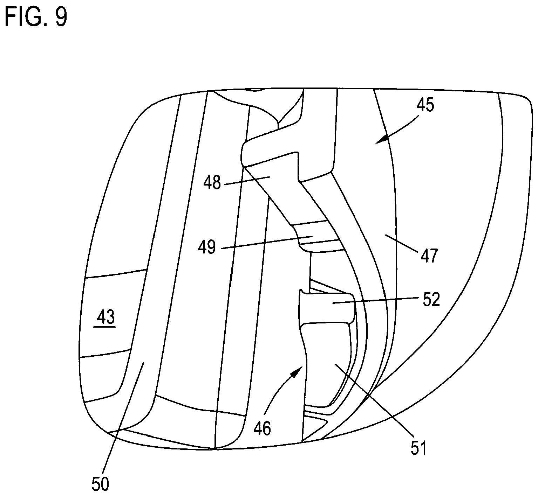

Die Fig. 5 - 9 zeigen jeweils eine Prinzipdarstellung einer Vorrichtung 1 zur Halterung eines Köders 2 gemäß einem weiteren Ausführungsbeispiel der Erfindung. Ersichtlich handelt es sich bei Fig. 5 um eine perspektivische Ansicht der Vorrichtung 1, bei Fig. 6 um einen Längsschnitt durch die in Fig. 5 gezeigte Vorrichtung 1, bei Fig. 7 um eine vergrößerte Ansicht der in Fig. 6 gezeigten Einzelheit VII, bei Fig. 8 um eine Aufsicht auf die Vorrichtung 1 und bei Fig. 9 um eine vergrößerte Ansicht der in Fig. 6 gezeigten Einzelheit IX.

Wie sich aus dem in den Fig. 5 - 9 gezeigten Ausführungsbeispiel ergibt, kann das der Vorrichtung 1 zugehörige Gehäuseteil 3 auch mehrteilig ausgeführt sein. Das Gehäuseteil 3 ist hier aus einem oberen Gehäuseteilsegment 3a und einem unteren Gehäuseteilsegments 3b ausgeführt. Die Gehäuseteilsegmente 3a, 3b können über nicht näher bezeichnete Halteklammern aneinander befestigt sein. Selbstverständlich sind andere Befestigungsprinzipien zur Befestigung der Gehäuseteilsegmente 3a, 3b aneinander möglich.

An dem Außenumfang des unteren Gehäuseteilsegments 3b ist im Bereich des dem oberen Gehäuseteilsegment 3a abgewandten Endes zudem eine gehäuseteilseitige Befestigungseinrichtung 35, über welche das Gehäuseteil 3, insbesondere lösbar, an einer Wandung der Kanalisation 4 befestigbar bzw. befestigt ist, angeordnet.

Die Befestigungseinrichtung 35 umfasst hier ein äußeres, z. B. aus Stahl, gebildetes Ringelement 36. Das Ringelement 36 lässt sich über eine in Fig. 5 gezeigte profilartige Halterung 37 an der Wandung eines Kanalschachts befestigen. Wie sich aus Fig. 7 ergibt, geht von dem Ringelement 36 in radialer Richtung ein ringscheibenförmiger Haltesteg 38 ab. Der Haltesteg 38 stützt ein an der Außenwand 10 des Gehäuseteils 3, d. h. der Außenwand 10 des unteren Gehäuseteilsegments 3b, befestigtes Sicherungselement 39 ab. Das hier ebenso ringförmig ausgeführte Sicherungselement 39 ist vermittels eines Rastmechanismus an dem Gehäuseteil 3, d. h. der gehäuseteilseitigen Außenwand 10, befestigt. Der Rastmechanismus ist durch das Zusammenwirken gehäuseaußenwandseitiger Rastelemente in Form von nicht näher gezeigten Rastvorsprüngen und sicherungselementseitigen Gegenrastelementen in Form von Rastausnehmungen 66 realisiert, in welchen die gehäuseaußenwandseitigen Rastelemente verrasten können. Selbstverständlich ist auch eine umgekehrte Anordnung, d. h. gehäuseaußenwandseitige Rastelemente in Form von Rastausnehmungen und sicherungselementseitige Rastelemente in Form von Rastvorsprüngen, denkbar.

Ein unterhalb des Haltestegs 38 gebildeter Bereich des Ringelements 36 dient in der Schließstellung des Schließkörpers 15 als Anlagefläche für ein außenumfangsseitig an dem Schließkörper angeordnetes bzw. ausgebildetes, nicht näher bezeichnetes Dichtelement.

Das Sicherungselement 39 dient der unverlierbaren Anordnung des Schließkörpers 15 an dem Gehäuseteil 3. Dies ist dadurch realisiert, dass ein sicherungselementseitiger, hier winklig ausgeführter Fortsatz 40 derart in die zwischen der gehäuseteilseitigen Außenwand 10 und den hierzu radial nach innen versetzten Innenwänden 11 gebildeten gehäuseteilseitigen Führungsabschnitte 13 greift, dass der Schließkörper 15 bedingt durch einen von dem oberen Abschnitt der schließkörperseitigen Führungselemente 14 radial abragenden Fortsatz 41 daran gehindert ist, aus dem Führungsabschnitt 13 zu gleiten.

In Fig. 6 ist zu erkennen, dass die von dem Schließabschnitt 16 des Schließkörpers 15 abgehenden Flächen 42 leicht geneigt, d. h. z. B. um 3 bis 5°, ausgeführt sind, so dass auf dem Schließkörper 15 befindliches Wasser radial nach außen abfließen kann.

In dem eine Oberseite bzw. Stirnseite des Gehäuseteils 3, d. h. des oberen Gehäuseteilsegments 3a, bildenden Bereich ist eine zylinderartige Aufnahmekammer 31 angeordnet. Die Aufnahmekammer 31 weist einen einen zylinderartigen, ein Aufnahmekammervolumen 43 zur Aufnahme elektrischer und/oder elektronischer Komponenten der Vorrichtung 1 begrenzenden Aufnahmekammergrundkörper 44 auf. Ersichtlich ragt der Aufnahmekammergrundkörper 44 abschnittsweise in den gehäuseteilseitigen Aufnahmeraum 5.

An einem in den gehäuseteilseitigen Aufnahmeraum 5 ragenden unteren Abschnitt des Aufnahmekammergrundkörpers 44 ist eine Köderhalteinrichtung 12 zur Halterung des Köders 2 angeordnet.

Die Aufnahmekammer 31 ist lösbar an dem Gehäuseteil 3, d. h. hier dem oberen Gehäuseteilsegment 3a, befestigbar. Die lösbare Befestigung der Aufnahmekammer 31 an dem Gehäuseteil 3 ist durch formschlüssiges Zusammenwirken gehäuseteilseitiger Befestigungsabschnitte 45 mit aufnahmekammergrundkörperseitigen Befestigungsabschnitten 46 ausbildbar oder ausgebildet. Die Aufnahmekammer 31 und das Gehäuseteil 3 sind also jeweils mit Befestigungsabschnitten 45, 46 ausgestattet, über deren Zusammenwirken sich eine stabile bzw. unverlierbare, gleichwohl lösbare Befestigung der Aufnahmekammer 31 an dem Gehäuseteil 3 realisieren lässt. Wie sich insbesondere anhand von Fig. 9 ergibt, ist unter einem formschlüssigen Zusammenwirken jeweiliger Befestigungsabschnitte 45, 46 ein zumindest abschnittsweises Ineinander- oder Übereinandergreifen entsprechender Befestigungsabschnitte 45, 46 zu verstehen.

Die Aufnahmekammer 31 ist zwischen einer Befestigungsstellung und einer Lösestellung drehbar gelagert an dem Gehäuseteil 3 angeordnet. In der Befestigungsstellung wirken die gehäuseteilseitigen Befestigungsabschnitte 45 und die aufnahmekammergrundkörperseitigen Befestigungsabschnitte 46 formschlüssig zusammen, so dass die Aufnahmekammer 31 lösbar an dem Gehäuseteil 3 befestigt ist. In der Lösestellung wirken die gehäuseteilseitigen Befestigungsabschnitte 45 und die aufnahmekammergrundkörperseitigen Befestigungsabschnitte nicht zusammen, so dass die Aufnahmekammer 31 von dem Gehäuseteil 3 lösbar ist. Die Befestigung der Aufnahmekammer 31 an dem Gehäuseteil 3 kann sonach durch Drehbewegungen der Aufnahmekammer 31 um eine Drehachse, welche typischerweise mit der Zentralachse der Aufnahmekammer 31 zusammenfällt, relativ zu dem Gehäuseteil 3 hergestellt und wieder aufgehoben werden. Die Aufnahmekammer 31 kann also durch Drehbewegungen relativ zu dem Gehäuseteil 3 von der Befestigungsstellung in die Lösestellung, und umgekehrt, überführt werden.

Wie sich aus Fig. 9 ergibt, sind die gehäuseteilseitigen Befestigungsabschnitte 45 als ein von einem axial ausgerichteten zylinderartigen Abschnitt 47 des Gehäuseteils 3 radial nach innen abragendes Ringsegmentscheibenelement 48 mit wenigstens einem von diesem axial abragenden schulterartigen Befestigungsvorsprung 49 ausgebildet. Die aufnahmekammergrundkörperseitigen Befestigungsabschnitte 46 sind als ein von einem zylinderartigen Ansatz 50 des Aufnahmekammergrundkörpers 44 radial nach außen abragendes Ringsegmentscheibenelement 51 mit einem zu dem an dem gehäuseteilseitigen Befestigungsabschnitt 45 gebildeten Befestigungsvorsprung 49 korrespondierenden, d. h. gegengleich ausgebildeten bzw. ausgerichteten, axial abragenden schulterartigen Befestigungsvorsprung 52 ausgebildet.

Zur Realisierung entsprechender Drehbewegungen der Aufnahmekammer 31 relativ zu dem Gehäuseteil 3 weist die Aufnahmekammer 31 im Bereich eines in Fig. 8 gezeigten oberen freiliegenden Deckabschnitts 53 einen Werkzeugangriffsbereich 54 auf, in welchen ein hier T-förmiges Werkzeug 55 mit einem Eingriffsabschnitt 57 formschlüssig eingreifen kann. Über das wie in Fig. 8 gezeigt in den Werkzeugangriffsbereich 54 eingreifende Werkzeug 55 lassen sich Drehbewegungen auf die Aufnahmekammer 31 übertragen, um die Aufnahmekammer 31 von der Befestigungsstellung in die Lösestellung, und umgekehrt, zu überführen. Ersichtlich ist der Werkzeugangriffsbereich 54 hier mit ringsegmentförmigen Werkzeugaufnahmen 58 ausgebildet, in welche der querschnittlich rundlich gestaltete werkzeugseitige Eingriffsabschnitt 57 eingreifen kann, so dass Drehbewegungen des Werkzeugs 55 gegen den Uhrzeigersinn zu Drehbewegungen der Aufnahmekammer 31 gegen den Uhrzeigersinn führen. Dem Eingriffsabschnitt 57 umfangsmäßig gegenüber liegend angeordnet ist ein Anschlagabschnitt 59 ausgebildet. Zwischen dem Eingriffsabschnitt 58 und dem Anschlagabschnitt 59 ist ein sich umfangsmäßig erstreckender Spaltraum 60 gebildet, über welchen das Werkzeug 55 in den Werkzeugangriffsbereich 54 eingeführt werden kann, um mit diesem entsprechend zusammenzuwirken.

Durch die Anordnung bzw. Ausbildung des Werkzeugangriffsbereichs 54 im Bereich eines oberen freiliegenden Deckabschnitts 53 der Aufnahmekammer 31 ist der Werkzeugangriffsbereich 54 stets (von oben) zugänglich. Die geometrische Gestalt des Werkzeugangriffsbereichs 54 ist an die Gestalt des Werkzeugs 55 angepasst. Vorliegend ist die geometrische Gestalt des Werkzeugangriffsbereichs 54 derart, dass ein T-Förmiges Werkzeug 55 formschlüssig an diesem angreifen kann, so dass über durch den Doppelpfeil 56 angedeutete Drehbewegungen des Werkzeugs 55 Drehbewegungen auf die Aufnahmekammer 31 übertragen werden können.

Entsprechend ist der Werkzeugangriffsbereich 54 im ordnungsgemäß in einen Kanalschacht eingesetzten Zustand der Vorrichtung 1 gut, d. h. insbesondere von oben, zugänglich. Durch geeignete Formgebung und Dimensionierung eines entsprechenden Werkzeugs 55 ist es nicht zwingend notwendig, dass ein Benutzer in den Kanalschacht hinabsteigt, um die Aufnahmekammer 31 durch entsprechende Drehbewegungen von der Befestigungsstellung in die Lösestellung, oder umgekehrt, zu überführen. Die Aufnahmekammer 31 kann sonach von außerhalb des Kanalschachts von dem Gehäuseteil 3 gelöst und gegebenenfalls aus dem Kanalschacht entnommen werden. Dies kann zu Kontrollzwecken, z. B. dahin, ob ein Köderanbiss erfolgt ist, praktikabel sein, so dass Kontrollen erheblich vereinfacht und erheblich zügiger durchgeführt werden können.

Insbesondere, da der Köder 2 über die an der Aufnahmekammer 31 angeordnete Köderhalteeinrichtung 12 gehaltert ist, kann die Aufnahmekammer 31 samt Köderhalteeinrichtung 12 und daran gehaltertem Köder 2 ohne Einstieg in den Kanalschacht aus dem Kanalschacht entnommen, ein etwaiger Köderanbiss erkannt, gegebenenfalls ein Austausch oder Ersatz des oder eines Köders 2 vorgenommen und die Aufnahmekammer 31 samt Köderhalteinrichtung 12 sowie daran gehaltertem Köder 2 wieder in den Kanalschacht eingebracht werden.

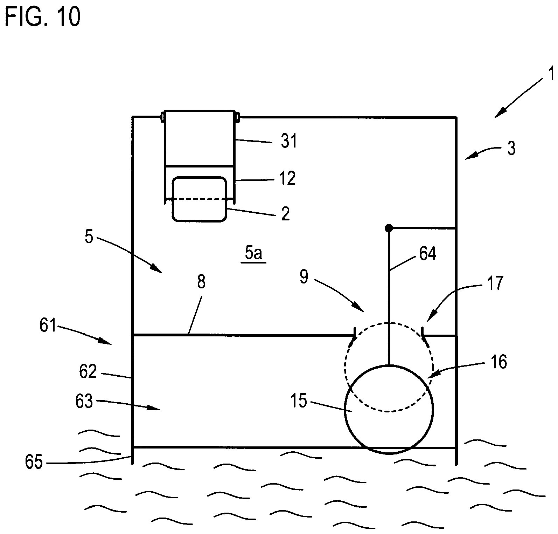

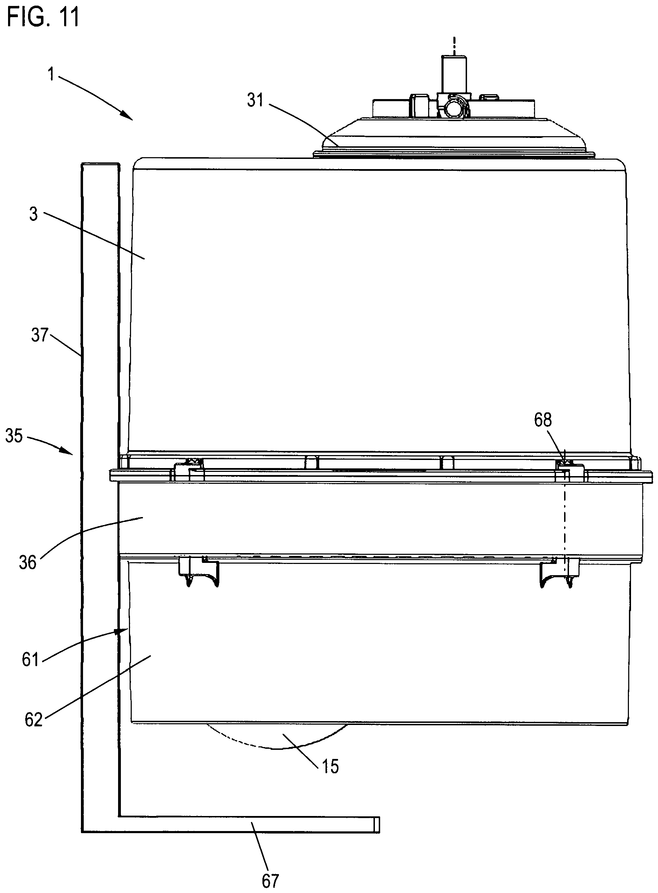

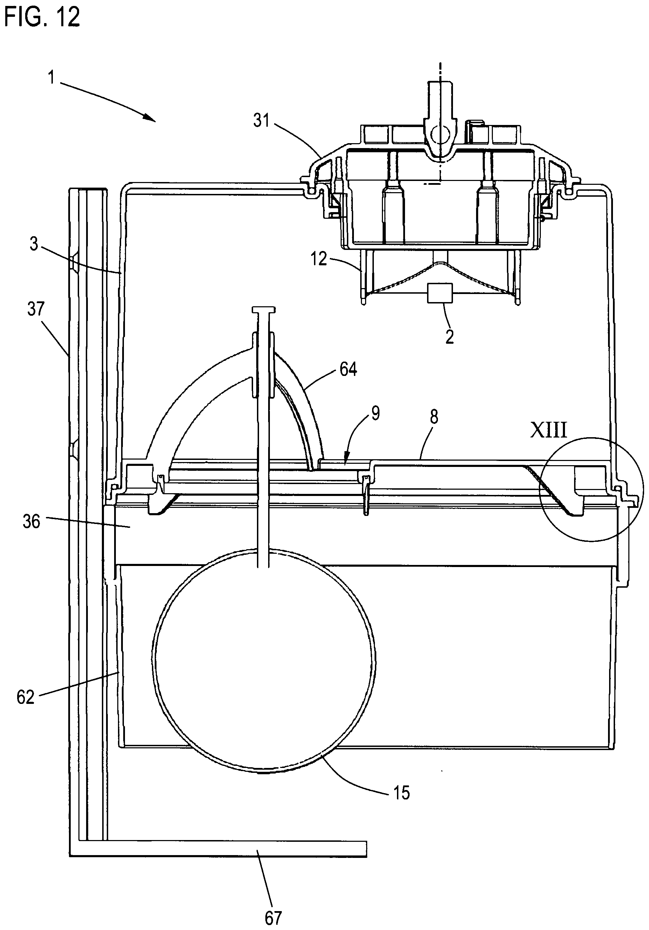

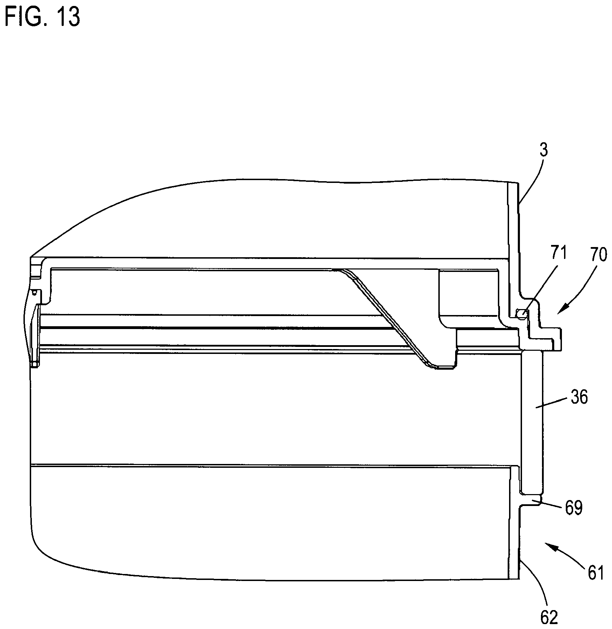

Die Fig. 10 - 13 zeigen jeweils eine Prinzipdarstellung einer Vorrichtung 1 zur Halterung eines Köders 2 gemäß einem weiteren Ausführungsbeispiel der Erfindung. Fig. 10 zeigt eine reine Prinzipdarstellung des Ausführungsbeispiels der Vorrichtung 1, Fig. 11 zeigt eine perspektivische Darstellung des Ausführungsbeispiels der Vorrichtung 1, Fig. 12 einen Längsschnitt durch die in Fig. 11 gezeigte Darstellung und Fig. 13 eine vergrößerte Ansicht der in Fig. 12 gezeigten Einzelheit.

Die in den Fig. 10 - 13 gezeigte Vorrichtung 1 umfasst zusätzlich ein Schwallschutzelement 61 zum Schutz des Eindringens von Wasser in den durch das Gehäuseteil 3 begrenzten Aufnahmeraum 5, insbesondere in einen oberhalb der köderplattformseitig begrenzten Durchgangsöffnung 9 liegenden oberen Bereich 5a des Aufnahmeraums 5, bei einem schwallartig bzw. plötzlich ansteigenden Wasserpegel in dem Kanalschacht, in welchem das Gehäuseteil 3 einzusetzen bzw. eingesetzt ist.

Das Schwallschutzelement 61 ist unterhalb der gehäuseteilseitigen Köderplattform 8 angeordnet. Das Schwallschutzelement 61 weist einen ring- bzw. zylinderförmigen Grundkörper 62 auf, welcher ein Wasserschwallaufnahmevolumen 63 zur Aufnahme einer bestimmten Menge an in dem oder einem Kanalschacht strömendem Wasser begrenzt. Ein, z. B. durch Starkregen bedingter, schwallartiger plötzlicher Anstieg des Wasserpegels in dem Kanalschacht führt sonach dazu, dass das Wasser zunächst von unten in das Wasserschwallaufnahmevolumen 63 eindringt und dieses füllt.

Der hier als Schwimmkörper ausgebildete Schließkörper 15 ist innerhalb des Grundkörpers 62 des Schwallschutzelements 61, d. h. innerhalb des Wasserschwallaufnahmevolumens 63, bewegbar gelagert, derart, dass er bei einem mit dem Eintritt von Wasser in das Wasserschwallaufnahmevolumen 63 einhergehenden Anstieg des Wasserpegels in dem Wasserschwallaufnahmevolumen 63 von der in den Fig. 10, 11 gezeigten Offenstellung in die in Fig. 10 strichliert angedeutete Schließstellung bewegt wird. Die bewegbare Lagerung des Schließkörpers 15 ist über eine gehäuseteilseitige Halterung 64, hier in Form einer winkligen Galgenhalterung, denkbar wäre gleichermaßen auch eine reine Hängehalterung, wie z. B. in Fig. 10 gezeigt, realisiert bzw. unterstützt.

In der Schließstellung liegt der Schließkörper 15 mit einem Schließabschnitt 16 abschnittsweise dichtend an an den köderplattformseitigen Rändern, welche die köderplattformseitig begrenzte Durchgangsöffnung 9 begrenzen, ausgebildeten Anlageabschnitten 17 an. Durch die dichtende Anlage des Schließkörpers 15 an entsprechenden köderplattformseitigen Anlageabschnitten 17 ist ein Eindringen Wasser in den oberen Bereich 5a des gehäuseteilseitigen Aufnahmeraums 5 verhindert. Es besteht keine Möglichkeit, dass Wasser in den oberen Bereich 5a des Aufnahmeraums 5 gelangt und dort durch die in dem Köder 2 enthaltenen Substanzen kontaminiert wird.

Der Grundkörper 62 des Schwallschutzelements 61 ist hier offen, d. h. ohne Bodenfläche gezeigt. Selbstverständlich ist es jedoch möglich, dass der Grundkörper 62 im Bereich seiner der Köderplattform 8 abgewandten Seite eine wenigstens eine Schwallwassereintrittsöffnung aufweisende Bodenfläche umfasst. Der Schließkörper 15 kann dann in der Offenstellung zumindest abschnittsweise in der Schwallwassereintrittsöffnung angeordnet sein. Bei Anstieg des Wasserpegels hebt sich der, wie erwähnt, als Schwimmkörper ausgebildete Schließkörper 15 von der Schwallwassereintrittsöffnung ab, so dass Wasser in das Wasserschwallaufnahmevolumen 63 eintreten kann, bis der Schließkörper 15 schließlich, wie beschrieben, von der Offenstellung in die Schließstellung bewegt wird.

Der Grundkörper 62 des Schwallschutzelements 61 umfasst in dem in Fig. 10 gezeigten Ausführungsbeispiel eine Anzahl an, z. B. stegartig ausgebildeten, Füßen 65, welche der Lagerung des Grundkörpers 62, gegebenenfalls auch dem auf diesem angeordneten Gehäuseteil 3 nebst der darin angeordneten oder befestigten Bestandteile der Vorrichtung 1, dienen. Selbstverständlich kann der Grundkörper 62 jedoch boden- bzw. stirnseitig auch vollkommen plan ausgeführt sein und somit auf entsprechende Füße 65 verzichtet werden.

Anhand von Fig. 11 ist nochmals ersichtlich, dass sich die Vorrichtung 1 über eine entsprechende Befestigungseinrichtung 35 an der Wandung eines Kanalschachts befestigen lässt. Die Befestigungseinrichtung 35 umfasst dazu ein äußeres, z. B. aus Stahl gebildetes, Ringelement 36. Das Ringelement 36 lässt sich, wie erwähnt, über eine profilartige Halterung 37 an der Wandung eines Kanalschachts befestigen. Ersichtlich wird bei dem in Fig. 11 gezeigten Ausführungsbeispiel auf entsprechende Füße 65 seitens des Schwallschutzelements 61 verzichtet. Um eine stabile Lagerung der Vorrichtung 1 auf einem Untergrund zu realisieren, ist die profilartige Halterung 37 verlängert ausgeführt und umfasst einen von dieser winklig, insbesondere lotrecht, abragenden Lagerungsschenkel 67, welcher sonach als Standfuß der Vorrichtung 1 bezeichnet bzw. erachtet werden kann.

Die Befestigung des Schwallschutzelements 61 an dem Gehäuseteil 3 erfolgt hier durch Schraubverbindungen. Entsprechend ist sowohl das Schwallschutzelement 61 als auch das Gehäuseteil 3, hier jeweils außenumfangsseitig, mit Schraubenaufnahmen 68 versehen, welche von nicht näher gezeigten schraubenartigen Verbindungselementen, insbesondere Gewindeschrauben, durchsetzt werden können. Selbstverständlich ist es auch denkbar, entsprechende Schraubenaufnahmen 68 jeweils innenumfangsseitig vorzusehen.

Aus der in Fig. 12 gezeigten Schnittansicht ergibt sich, dass das Ringelement 36 zwischen dem Schwallschutzelement 61 und dem Gehäuseteil 3 angeordnet ist. Anhand der in Fig. 13 gezeigten Einzelheit ist ersichtlich, dass das Schwallschutzelement 61 dafür mit entsprechend radial abragenden ringförmigen Haltestegen 69 versehen ist, welche eine unter Lagerstelle für das Ringelement 36 bilden. Das Gehäuseteil 3 ist im Bereich seines dem Schwallschutzelement 61 zugewandten freien Endes mit einer radialen Erweiterung 70 versehen, in welche das Ringelement 36 mit dem Bereich seines dem Gehäuseteil 3 zugewandten Endes eingreift. Zwischen dem Gehäuseteil 3 und dem Ringelement 36 ist ein Dichtelement 71, hier in Form eines Dichtrings, angeordnet bzw. ausgebildet.

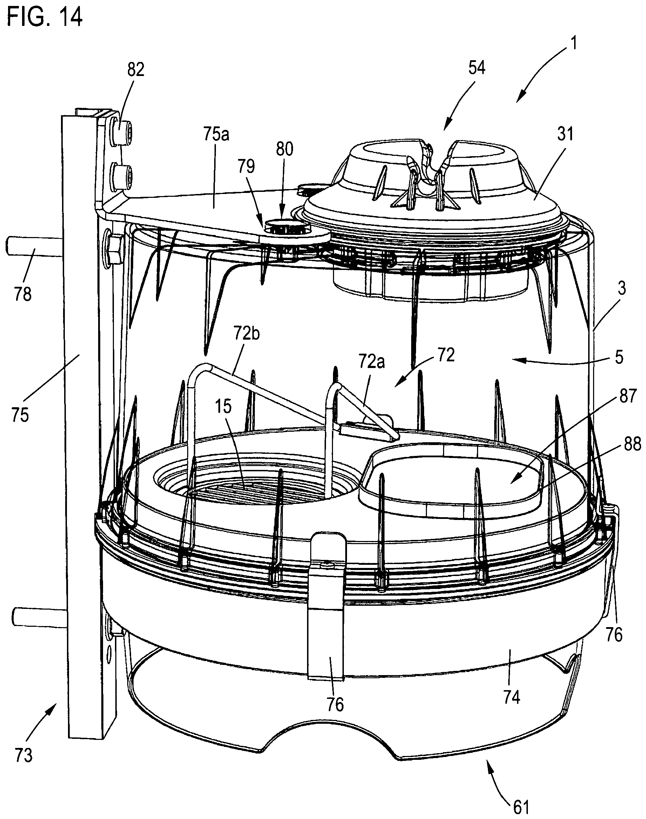

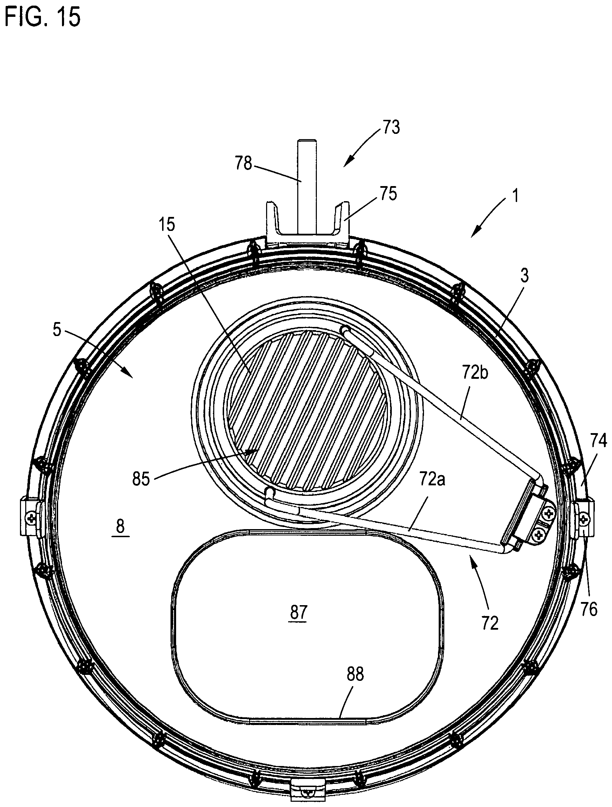

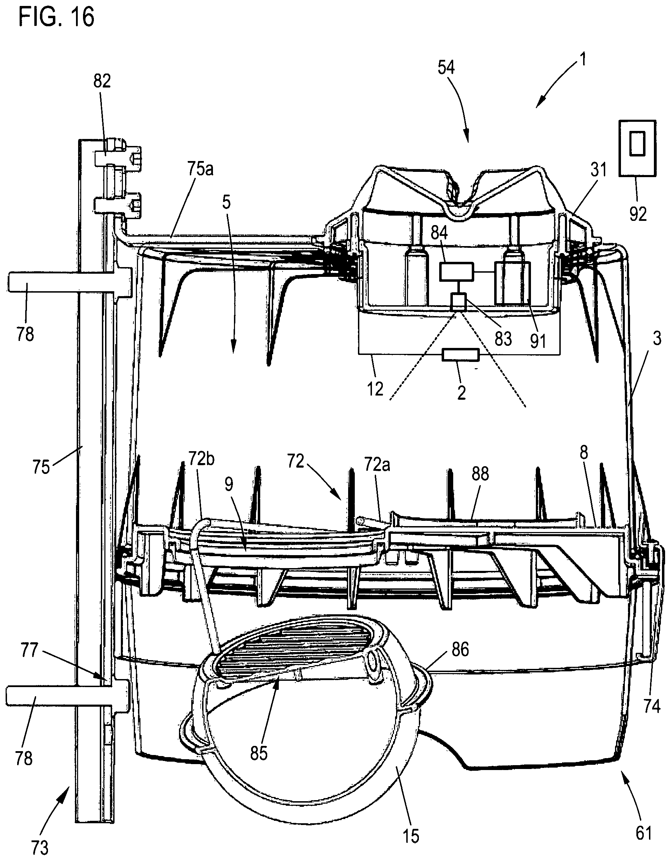

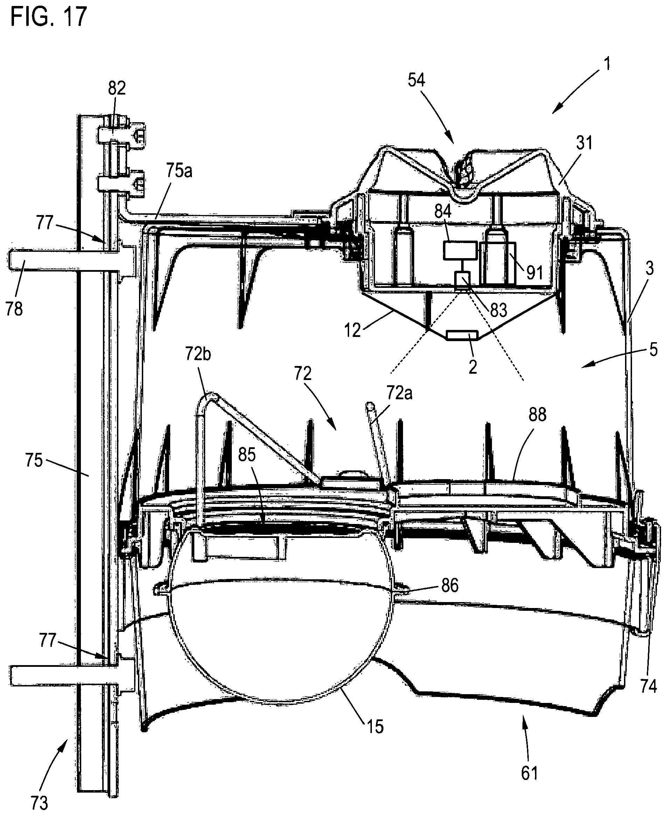

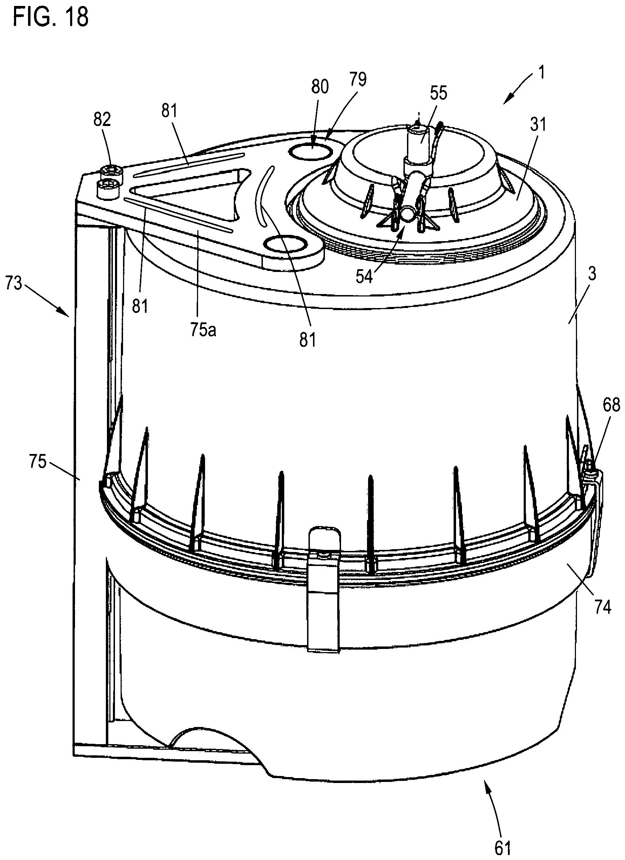

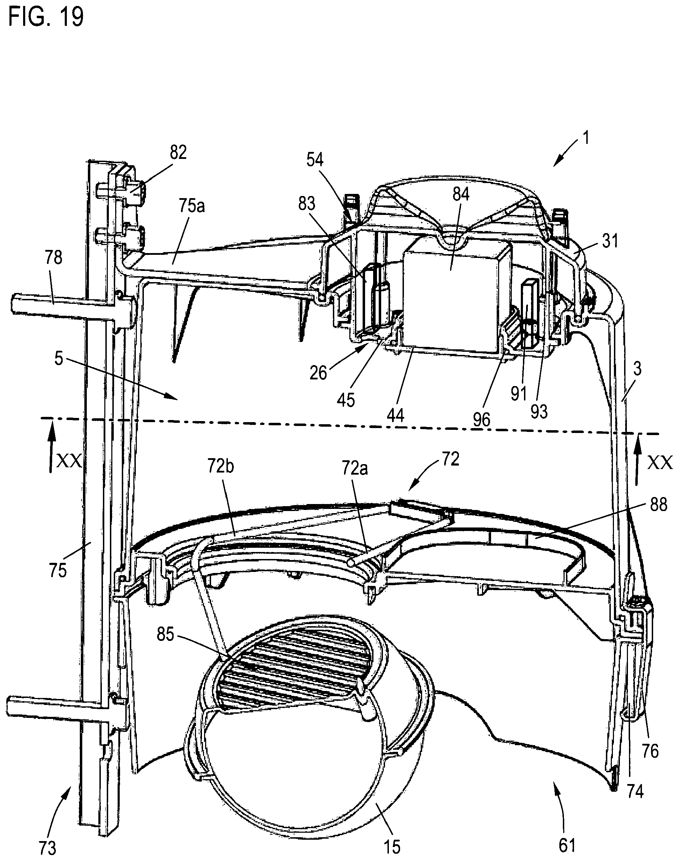

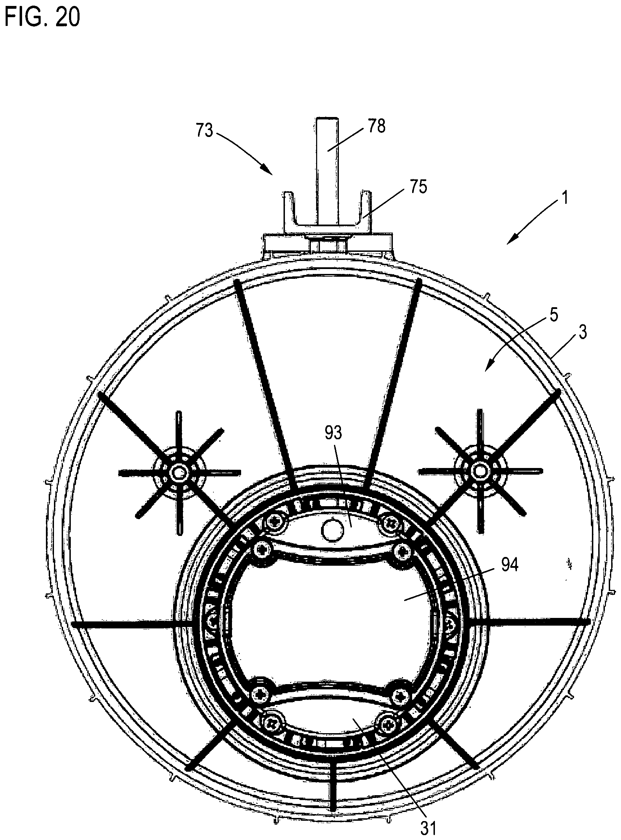

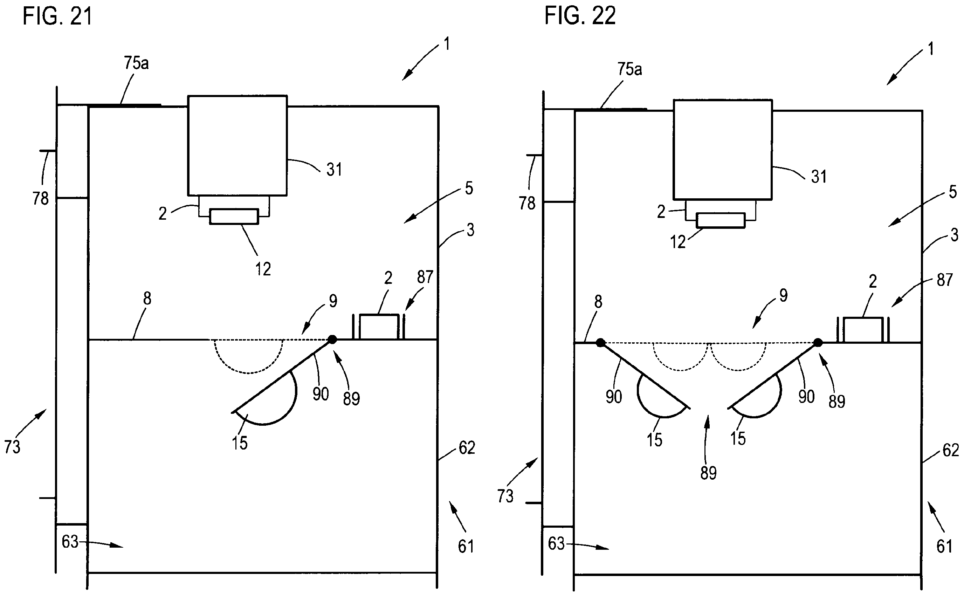

Fig. 14 - 26 zeigen jeweils eine Prinzipdarstellung einer Vorrichtung 1 zur Halterung eines Köders 2 gemäß weiteren Ausführungsbeispielen der Erfindung. Ersichtlich handelt es sich bei Fig. 14 um eine perspektivische Ansicht eines Vorrichtung 1 gemäß einem weiteren Ausführungsbeispiel (das Gehäuseteil 3 ist hier aus Gründen der Veranschaulichung transparent dargestellt), bei Fig. 15 um einen Querschnitt durch die in Fig. 14 gezeigte Vorrichtung 1, bei den Fig. 16, 17 jeweils um einen Längsschnitt durch die in Fig. 14 gezeigte Vorrichtung 1, bei Fig. 18 um eine perspektivische Ansicht einer Vorrichtung 1 gemäß einem weiteren Ausführungsbeispiel, bei den Fig. 19 um einen Längsschnitt durch eine Vorrichtung 1 gemäß einem weiteren Ausführungsbeispiel, bei Fig. 20 um einen Querschnitt durch die in Fig. 19 gezeigte Vorrichtung 1 und bei den Fig. 21 bis 26um Vorrichtungen 1 gemäß weiteren Ausführungsbeispielen.

Anhand der Fig. 14, 15 ist eine relativ zu der Köderplattform 8 bewegbare Lagerung des Schließkörpers 15 vermittels eines bewegbar, insbesondere schwenkbar, dem Gehäuseteil 3, d. h. an der Köderplattform 8, gelagerten klammer- oder spangenartigen Halteelements 72 gezeigt. Das auch als Halteklammer oder Haltespange zu bezeichnende Halteelement 72 ist einerseits, insbesondere einends, an dem Gehäuseteil 3 bzw. der Köderplattform 8 und andererseits, insbesondere andernends, an dem Schließkörper 15 befestigt. Über die Anbindung des Schließkörpers 15 an dem Halteelement 72, die Anbindung des Halteelements 72 an dem Gehäuseteil 3 bzw. der Köderplattform 8 sowie die geometrischen Abmessungen, d. h. insbesondere die Form, des Halteelements 72 definiert sich eine bestimmte Bewegungsbahn, die der Schließkörper 15 bei einer Bewegung von der Offenstellung in die Schließstellung, und umgekehrt, durchläuft (vgl. hierzu insbesondere die Fig. 16, 17, welche den Schließkörper 15 in der Offenstellung (Fig. 16) und in der Schließstellung (Fig. 17) zeigen.

Das Halteelement 72 umfasst zwei winklig zueinander verlaufende Halteelementabschnitte 72a, 72b. Anhand von Fig. 15 ist zu erkennen, dass die Halteelementabschnitte 72a, 72b in der Offenstellung des Schließkörpers 15 durch die köderplattformseitig begrenzte Durchgangsöffnung 9 greifen. Die Halteelementabschnitte 72a, 72b sind L-förmig gebogen. Das Halteelement 72 weist somit eine (im Wesentlichen) L-förmige geometrische Gestalt auf.

Anhand der in den Fig. 14 - 18 gezeigten Ausführungsbeispiele ist weiterhin eine besonders zweckmäßige Befestigungseinrichtung 73, über welche das Gehäuseteil 3, insbesondere lösbar, an einer Wandung einer Kanalisation 4, insbesondere eines Kanalschachts, befestigbar ist, gezeigt. Die Befestigungseinrichtung 73 umfasst ein das Gehäuseteil 3 außenumfangsseitig umgreifendes, ringförmiges, erstes Befestigungselement 74, welches über an dem Gehäuseteil 3 verschraubte Befestigungsspangen 76 an dem Gehäuseteil 3 befestigt ist, und wenigstens ein zweites Befestigungselement 75 zur Befestigung des ersten Befestigungselements 74 sowie des daran befestigten Gehäuseteils 3 an der Wandung einer Kanalisation 4 bzw. eines Kanalschachts. Über die Befestigungseinrichtung 73 lässt sich eine, insbesondere im Hinblick auf hochwasser- oder schwallwasserbedingte, auf das Gehäuseteil 3 wirkende Kräfte, stabile Befestigung des Gehäuseteils 3 an einer Wandung einer Kanalisation 4 bzw. eines Kanalschachts ermöglichen. Die Befestigung des zweiten Befestigungselements 75 an der Wandung einer Kanalisation 4 bzw. eines Kanalschachts ist über von dem zweiten Befestigungselement 75 ausgehende bzw. seitens des zweiten Befestigungselements 75, gegebenenfalls mit einem Gewinde versehene, horizontale bzw. vertikale Bohrungen 77 durchsetzende Befestigungsbolzen 78 bzw. -schrauben realisiert, welche, z. B. durch Mauern oder Schrauben, stabil in der Wandung einer Kanalisation 4 bzw. eines Kanalschachts verankerbar sind.

Ersichtlich ist die Befestigungseinrichtung 73 mehrteilig ausgeführt. Zur Realisierung eines Auftriebssicherung umfasst das zweite Befestigungselement 75 einen das Gehäuseteil 3 oberseitig unter Ausbildung einer Auftriebssicherung abschnittsweise übergreifenden Befestigungselementabschnitt 75a. Das Gehäuseteil 3 ist derart gegen hochwasser- bzw. schwallwasserbedingte Auftriebskräfte geschützt und in seiner, insbesondere vertikalen, Positionierung lagefest an der Kanalisation 4 befestigt.

Sämtliche Bestandteile der Befestigungseinrichtung 73 sind aus einem oder mehreren mechanisch stabilen sowie korrosionsstabilen Materialien, z. B. Edelstählen, bzw. Materialstrukturen gebildet oder umfassen solche Materialien bzw. Materialstrukturen.

Anhand des in Fig. 18 gezeigten Ausführungsbeispiels ist zu erkennen, dass mehrere entsprechende Befestigungselementabschnitte 75a vorhanden sein können. In Fig. 18 sind zwei winklig, bevorzugt V-förmig, zueinander verlaufende, schenkel- bzw. strebenartige Befestigungselementabschnitte 75a gezeigt, welche über eine weiteren schenkel- bzw. strebenartigen Befestigungselementabschnitt 75a miteinander verbunden sind.

Die in den in den Fig. 14 - 18 gezeigten Ausführungsbeispielen gezeigten Befestigungselementabschnitte 75a sind an der freiliegenden Oberseite des Gehäuseteils 3 formschlüssig (beschädigungs- bzw. zerstörungsfrei) lösbar befestigt. Die Befestigung erfolgt also durch einen Formschluss, d. h. über das formschlüssige Zusammenwirken von Formschlusselementen 79 seitens der Befestigungselementabschnitte 75a mit hierzu korrespondierenden Formschlusselementen 80 seitens des Gehäuseteils 3. An jeweiligen Befestigungselementabschnitten 75a ausgebildete Formschlusselemente 79 sind als Durchbrechung ausgebildet, an dem Gehäuseteil 3 ausgebildete Formschlusselemente 80 sind durch, insbesondere vertikale, Vorsprünge ausgebildet, welche in dem befestigten Zustand in oder durch entsprechende Durchbrechungen greifen.

Anhand des in Fig. 18 gezeigten Ausführungsbeispiels ist ersichtlich, dass jeweilige Befestigungselementabschnitte 75a mit, insbesondere querschnittsreduzierenden, Versteifungsstrukturen 81 zur Erhöhung der mechanischen Stabilität der Befestigungselementabschnitte 75a ausgebildet sind. Derart kann die Materialstärke und somit das Gewicht der Befestigungseinrichtung 73 ohne Einbußen der mechanischen Stabilität der Befestigungseinrichtung 73 reduziert werden. Bei entsprechenden Versteifungsstrukturen 81 handelt es sich in dem in Fig. 18 gezeigten Ausführungsbeispiel um Sicken.

Die jeweiligen Befestigungselementabschnitte 75a sind in den in den Fig. 14 - 18 gezeigten Ausführungsbeispielen als separate Bauelemente ausgebildet und an einem profilartigen Grundkörper des zweiten Befestigungselements 75 vermittels Schraubbolzen 82, d. h. einer Schraubbefestigung, (beschädigungs- bzw. zerstörungsfrei) lösbar befestigt. Selbstverständlich könnten die Befestigungselementabschnitte 75a auch einstückig mit dem zweiten Befestigungselement 75 ausgebildet sein.

In den Fig. 16, 17 ist eine optionale Überwachungseinrichtung 83 zur Überwachung zumindest eines Teils des durch das Gehäuseteil 3 begrenzten Aufnahmeraums 5 gezeigt. Die Überwachungseinrichtung 83 ist derart an der Aufnahmekammer 31 angeordnet, dass sich eine möglichst weiträumige Überwachung des Aufnahmeraums 5 realisieren lässt. Die Überwachungseinrichtung 83 umfasst eine geeignete optische Sensorik zur Überwachung des Aufnahmeraums 5. Die Überwachungseinrichtung 83 ist in den in den Fig. 16, 17 gezeigten Ausführungsbeispielen als Infrarotsensorik bzw. -kamera ausgebildet.

Über die Überwachungseinrichtung 83 ist es möglich, sämtliche Vorgänge in dem oder einem bestimmten Bereich bzw. Teilbereich des Aufnahmeraums 5 zu erfassen und auszuwerten. Insbesondere können Nagetier bedingte Vorgänge quantitativ und/oder qualitativ erfasst und ausgewertet bzw. beurteilt werden. Quantitativ und/oder qualitativ zu überwachende Vorgänge von besonderem Interesse sind beispielsweise Zutritte von Nagetieren in den Aufnahmeraum 5, Austritte von Nagetieren aus dem Aufnahmeraum 5, das Verhalten, d. h. insbesondere das Anbiss- und/oder Bewegungsverhalten, jeweiliger in den Aufnahmeraum 5 zugetretener Nagetiere in dem Aufnahmeraum 5 etc. Im Allgemeinen kann die Frequentierung des Aufnahmeraums 5 pro bestimmter Zeiteinheit quantitativ und/oder qualitativ erfasst und ausgewertet bzw. beurteilt werden. Da von der Überwachungseinrichtung 83 erfasste Überwachungsinformationen bzw. -daten selbstverständlich über eine über eine geeignete Kommunikationseinrichtung 91 ausgebildete, insbesondere funkbasierte, Kommunikationsverbindung an ein benutzerseitiges, insbesondere mobiles, externes Endgerät 92 übertragen werden können, lässt sich über eine entsprechende Überwachungseinrichtung 83 ein "Monitoring" sämtlicher Vorgänge in dem Aufnahmeraum 5 ohne das Erfordernis eines Einstiegs in den mit der Vorrichtung 1 bestückten Kanalschacht bzw. in die mit der Vorrichtung 1 bestückte Kanalisation 4 realisieren. Die Kommunikation ist zweckmäßig funk-basiert, d. h. z. B. per Bluetooth, WLAN etc. realisiert, weshalb die Überwa-chungseinrichtung 83 eine entsprechende funkbasierte Sendeeinrichtung (nicht gezeigt) umfasst bzw. mit einer solchen verbunden ist.

Die Überwachungseinrichtung 83 ist über einen in der Aufnahmekammer 31 angeordneten wiederaufladbaren elektrischen Energiespeicher 84 mit elektrischer Energie versorgt. Bei dem Energiespeicher 84 handelt es sich um einen elektrochemischen Energiespeicher in Form einer wiederaufladbaren Batterie. Denkbar wäre auch die Verwendung eines induktiven, d. h. eines mittels elektromagnetischer Induktion, wiederaufladbaren Energiespeichers.

Anhand des in den Fig. 14 - 17 gezeigten Ausführungsbeispiels ist ferner eine abschnittsweise Oberflächenstrukturierung 85 des hier kalotten- bzw. kugelsegmentförmigen Schließkörpers 15 zu erkennen. Die Oberflächenstrukturierung 85 erleichtert einem Nagetier einen über den Schließkörper 15 erfolgenden Zutritt auf die Köderplattform 8. Die Oberflächenstrukturierung 85 ist durch eine stufen- bzw. rippenartige Struktur des kreisscheibenförmigen Abschnitts des kugelsegmentförmigen Schließkörpers 15 ausgebildet und bietet einem den Schließkörper 15 betretenden Nagetier Halt bzw. Haftung. Die Oberflächenstrukturierung 85 hemmt oder verhindert ein Abrutschen des Nagetiers von dem Schließkörper 15 und dient sonach im Sinne einer "Einstiegshilfe" für einen Zugang auf die Köderplattform 8. Selbstverständlich dient eine entsprechende Oberflächenstrukturierung 85 einem Nagetier umgekehrt auch im Sinne einer "Ausstiegshilfe" für das Verlassen der Köderplattform 8. Weiter ist seitens des Schließkörpers 15 ein ringförmiger Abschnitt 86 vorhanden, welcher ebenso im Sinne einer entsprechenden "Einstiegshilfe" bzw. "Ausstiegshilfe" dient.

In Fig. 15 ist zudem ein durch eine von der Köderplattform 8 winklig, insbesondere vertikal, abragende Wandung 88 begrenzter Bereich 87 für einen Köder 2 gezeigt.

Das in den in den Fig. 19, 20 gezeigte Ausführungsbeispiel zeigt eine besondere Lagerung eines entsprechenden Energiespeichers 84. Der Energiespeicher 84 ist auf einer an einem in den Aufnahmeraum 5 ragenden Bodenabschnitt 93 der Aufnahmekammer 31 (lösbar) befestigten Bodenplatte 94 gelagert. Die Befestigung der Bodenplatte 94 an dem Bodenabschnitt 93 erfolgt über nicht näher bezeichnete Befestigungsschrauben (vgl. Fig. 20). Ersichtlich befindet sich ein Dichtelement 96 in Form eines Dichtrings zwischen der Bodenplatte 94 und dem Bodenabschnitt 93. Ein weiteres, nicht näher bezeichnetes Dichtelement befindet sich zwischen Aufnahmekammer 31 und Gehäuseteil 3.

Die Bodenplatte 94 ist mit winklig, insbesondere vertikal, abragenden Wandungen 95 versehen, welche einen Aufnahmebereich für den Energiespeicher 84 begrenzen. Der Energiespeicher 84 lässt sich typischerweise passgenau in dem Aufnahmebereich anordnen. Die Bodenplatte 94 samt dem auf dieser angeordneten Energiespeicher 84 kann insofern als separate an der Aufnahmekammer 31 befestigbare Baugruppe erachtet werden, welche, z. B. im Rahmen eines Austausch- oder Wiederaufladevorgangs des Energiespeichers 84, auf einfache Weise von der Aufnahmekammer 31 gelöst und wieder an dieser befestigt werden kann.

Ersichtlich ist die Überwachungseinrichtung 83 sowie die Kommunikationseinrichtung 91 seitlich des Energiespeichers 84 auf dem Bodenabschnitt 93 angeordnet. Für die Überwachungseinrichtung 83 ist bodenabschnittseitig eine Öffnung 95 vorgesehen.

Anhand der in den Fig. 21, 22 gezeigten Ausführungsbeispiele ist eine weitere Möglichkeit der bewegbaren Lagerung eines Schließkörpers 15 vermittels einer Klappeneinrichtung 89 erkennbar. Eine entsprechende Klappeneinrichtung 89 umfasst gemäß dem in Fig. 21 gezeigten Ausführungsbeispiel ein, relativ zu der Köderplattform 8 bewegbar, insbesondere schwenkbar, gelagertes Klappenelement 90, welches in einer Offenstellung derart von der Köderplattform 8 weg bewegt ist, dass die köderplattformseitig begrenzte Durchgangsöffnung 9 freigegeben ist, und in einer strichliert dargestellten Schließstellung derart gegen die Köderplattform 8 bewegt ist, dass die köderplattformseitig begrenzte Durchgangsöffnung 9 verschlossen ist. Der Schließkörper 15 kann hier in Gestalt eines entsprechenden Klappenelements 90 integraler Bestandteil der Klappeneinrichtung 89 sein. Selbstverständlich wäre es auch möglich, einen separaten Schließkörper 15 an einem entsprechenden Klappenelement 90 zu befestigen. Der Schließkörper 15 kann als Schwimmkörper ausgebildet sein oder wenigstens einen Schwimmkörper umfassen.

Anhand des in Fig. 22 gezeigten Ausführungsbeispiels ist ersichtlich, dass eine entsprechende Klappeneinrichtung 89 auch mehrere Klappenelemente 90 umfassen kann, welche in einer jeweiligen Offenstellung derart von der Köderplattform 8 weg bewegt sind, dass die köderplattformseitig begrenzte Durchgangsöffnung 9 freigegeben ist, und in einer strichliert dargestellten jeweiligen Schließstellung derart gegen die Köderplattform 8 bewegt sind, dass die köderplattformseitig begrenzte Durchgangsöffnung 9 durch die Klappenelemente 90 gemeinsam verschlossen ist. In dem in Fig. 22 gezeigten Ausführungsbeispiel sind an jeweiligen Klappenelementen 90 jeweilige Schließkörper 15 angeordnet.

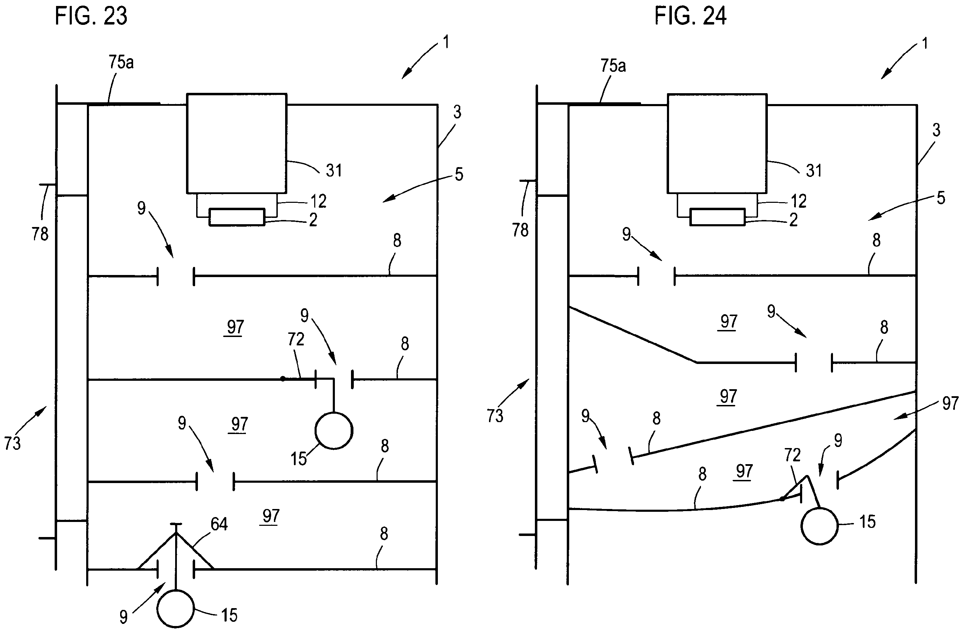

Anhand der in den Fig. 23 bis 26 gezeigten Ausführungsbeispiele ist zu erkennen, dass in dem Gehäuseteil 3 mehrere Köderplattformen 8 angeordnet sein können. Dabei ist jeweils wenigstens ein Schließkörper 15 vorgesehen, welcher relativ zu wenigstens einer Köderplattform 8 bewegbar gelagert ist, wobei der Schließkörper 15 in einer Offenstellung derart von der jeweiligen wenigstens einen Köderplattform 8 weg bewegt ist, dass die jeweilige wenigstens eine köderplattformseitig begrenzte Durchgangsöffnung 9 freigegeben ist, und in einer Schließstellung derart gegen die jeweilige wenigstens eine Köderplattform 8 bewegt ist, dass die jeweilige wenigstens eine köderplattformseitig begrenzte Durchgangsöffnung 9 verschlossen ist. Das beschriebene Prinzip des hermetisch dichtenden Verschlusses einer köderplattformseitig begrenzten Durchgangsöffnung 9 über einen in eine entsprechende Schließstellung bewegten Schließkörper 15 gilt hier also gleichermaßen.

Ersichtlich sind jeweilige Köderplattformen 8 über- bzw. untereinander angeordnet. Mehrere Köderplattformen 8 können zumindest abschnittsweise parallel angeordnet sein. Zwischen zwei benachbart angeordneten Köderplattformen 8 ist ein eine Zwischenebene definierender Zwischenraum 97 gebildet. Die Zwischenräume 97 kommunizieren über jeweilige köderplattformseitig begrenzte Durchgangsöffnungen 9 miteinander; es besteht sonach eine Durchgangsmöglichkeit zwischen den einzelnen Köderplattformen 8, d. h. von einer "untersten" Köderplattform 8 bis zu einer "obersten" Köderplattform 8.

Entsprechende Zwischenräume 97 bedingen eine strömungsbezogene "Beruhigung", allgemein eine Beeinflussung der Strömung, von in dem Gehäuseteil 3 aufsteigendem Wasser. Das in das Gehäuseteil 3 einströmende und in diesem aufsteigende Wasser muss sich sonach den Weg über mehrere Zwischenebenen nach oben bahnen, was zu einer "Beruhigung" der Strömung des Wassers führt. Jeweilige Köderplattformen 8 können zudem zumindest abschnittsweise mit einer die Strömung, insbesondere die Art der Strömung bzw. die Strömungsgeschwindigkeit, von entlang dieser strömenden bzw. in dem Gehäuseteil 3 aufsteigendem Wasser beeinflussenden Oberflächenstrukturierung (nicht gezeigt), z. B. in Form von Strömungs beeinflussenden Rippen und/oder Sicken, versehen sein.

Ersichtlich sind die durch jeweilige Köderplattformen 8 begrenzten Durchgangsöffnungen 9 relativ zueinander versetzt angeordnet. Durch die versetzte Anordnung jeweiliger Durchgangsöffnungen 9 ist ebenso eine "Beruhigung" von in dem Gehäuseteil 3 aufsteigendem Wasser möglich. Die versetzte Anordnung jeweiliger Durchgangsöffnungen 9 erleichtert zudem die Bewegung eines Nagetiers zwischen jeweiligen Zwischenräumen 97 bzw. Zwischenebenen.

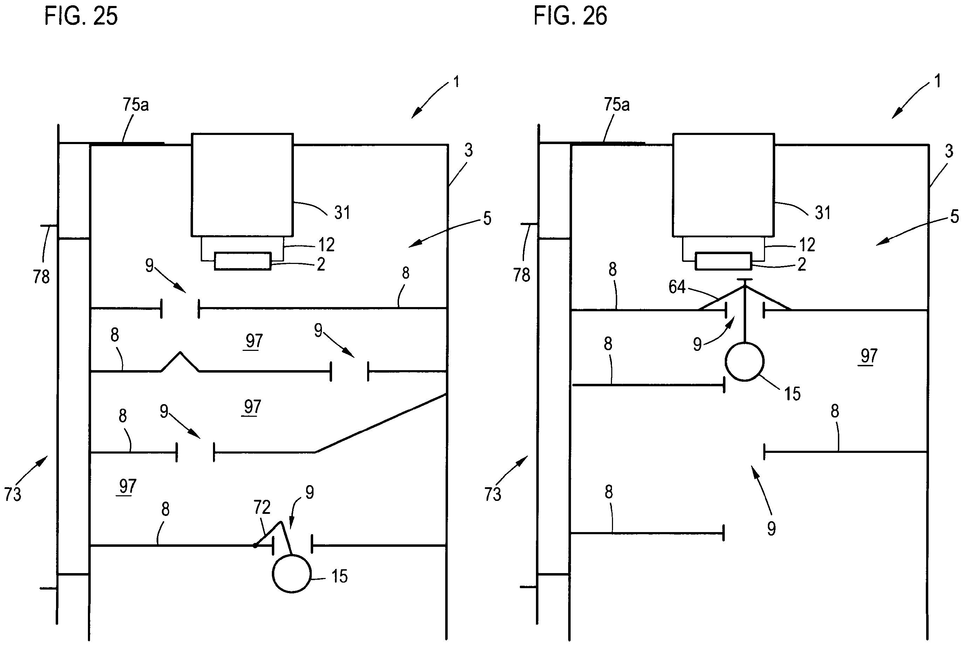

Anhand der Fig. 24, 25 ist zu erkennen, dass eine Köderplattform 8 zumindest abschnittsweise mit einem geneigt oder gebogen bzw. gekrümmt relativ zu wenigstens einer weiteren, insbesondere benachbart, angeordneten weiteren Köderplattform 8 verlaufenden Köderplattformabschnitt ausgebildet sein kann. Durch entsprechende geneigte bzw. gebogene bzw. gekrümmte Verläufe entsprechender Köderplattformen 8 kann ebenso eine Beeinflussung der Strömung von in dem Gehäuseteil 3 aufsteigendem Wasser realisiert werden. Geneigte bzw. gebogene bzw. gekrümmte Verläufe entsprechender Köderplattformen 8 erleichtern zudem im Sinne von Auf- bzw. Abstiegsrampen den Auf- bzw. Abgang von Nagetieren zwischen jeweiligen Zwischenräumen 97 bzw. Zwischenebenen.

Wie in Fig. 23 beispielhaft für die unterste Köderplattform 8 angedeutet, kann als weitere Maßnahme zur Beeinflussung der Strömung von in dem Gehäuseteil 3 aufsteigendem Wasser, eine Köderplattform 8 zumindest abschnittsweise mit diese dursetzenden, nicht näher bezeichneten bohrungsartigen Öffnungen bzw. Perforationen ausgebildet sein. Entsprechende allgemein einer Loch(blech)struktur ähnelnde Öffnungen können die Strömung von aufsteigendem Wasser "dämpfen" und somit ebenso "beruhigen". Die Öffnungen sind erkennbar zusätzlich zu jeweiligen Durchgangsöffnungen 9 vorhanden und unterscheiden sich insbesondere in ihrer Größe, insbesondere ihrem Durchmesser, von jeweiligen Durchgangsöffnungen 9; die Öffnungen sind klein im Vergleich zu jeweiligen Durchgangsöffnungen 9. Rundliche Öffnungen können beispielsweise einen Durchmesser zwischen 50 µm und 3 mm, insbesondere zwischen 100 µm und 2 mm, aufweisen.

Allgemein, d. h. grundsätzlich unabhängig von der Vorsehung mehrerer Köderplattformen 8, ist zu beachten, dass sich bei Einströmen bzw. Aufsteigen von Wasser in das bzw. in dem Gehäuseteil 3 aufgrund des gegebenen Volumens (Innenvolumens) und der Dichtheit des Gehäuseteils 3 in dem Gehäuseteil 3 ein Gegendruck ausbildet, welcher dem einströmenden bzw. aufsteigenden Wasser entgegengesetzt ist respektive dem Einströmen bzw. Aufsteigen von Wasser entgegen wirkt. Dies bedingt sich dadurch, dass die in dem Gehäuseteil 3 befindliche Luft durch das Einströmen und Aufsteigen von Wasser komprimiert wird. Das Aufsteigen von Wasser in dem Gehäuseteil 3 wird sonach aufgrund des sich ausbildenden Gegendrucks zunehmend erschwert.

Anhand des in Fig. 25 gezeigten Ausführungsbeispiels ist zu erkennen, dass wenigstens eine Köderplattform 8 sich zumindest abschnittsweise spiral- oder wendelförmig zumindest abschnittsweise durch das Gehäuseteil 3 erstreckend ausgebildet sein kann. Über eine entsprechend spiral- oder - ähnlich einer Wendeltreppe - wendelförmig ausgebildete Köderplattform 8 kann sich ein in das Gehäuseteil 3 eingedrungenes Nagetier auf einfache Weise innerhalb des Gehäuseteils 3 bewegen, z. B. um zu einem Köder 2 zu gelangen. Spiral- oder wendelförmige Köderplattformen 8 können ebenso einen Einfluss auf die Strömung von in dem Gehäuseteil 3 aufsteigendem Wasser haben.

Ersichtlich sind in den Fig. 23 bis 26 unterschiedliche Möglichkeiten der Lagerung entsprechender Schließkörper 15 gezeigt. Diese können selbstverständlich beliebig kombiniert werden. Auch die Anzahl und Anordnung jeweiliger Schließkörper 15 an jeweiligen Köderplattformen 8 ist selbstverständlich rein beispielhaft und kann beliebig kombiniert werden. Analoges gilt selbstverständlich für Anzahl und Anordnung jeweiliger Köderplattformen 8.

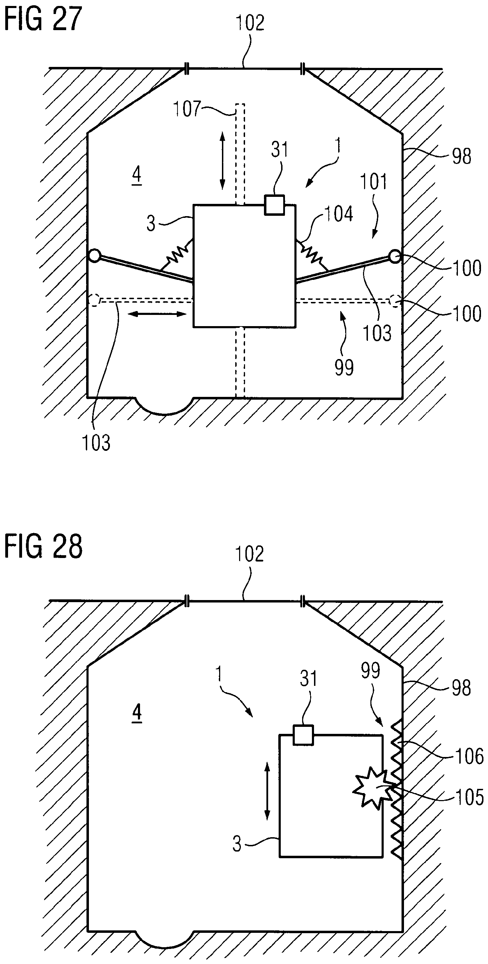

Anhand der in den Fig. 27 bis 29 gezeigten Ausführungsbeispiele ist die Möglichkeit einer, insbesondere linear, bewegbaren Führung des in einen Kanalschacht 98 eingesetzten Gehäuseteils 3 entlang einer bzw. relativ zu einer Wandung des Kanalschachts 98 ersichtlich. Das Gehäuseteil 3 ist hier also nicht über eine entsprechende Befestigungseinrichtung 35, 73 befestigt, sondern vermittels einer Führungseinrichtung 99, insbesondere linear, bewegbar entlang einer bzw. relativ zu einer Wandung des Kanalschachts 98 geführt. Über eine derartige Führungseinrichtung 99 ist es sonach möglich, dass sich das in den Kanalschacht 98 eingesetzte Gehäuseteil 3 nebst darin und/oder darin angeordneten Komponenten der Vorrichtung 1, insbesondere linear, bewegbar geführt, innerhalb des Kanalschachts 98 bewegt. Bewegungen des Gehäuseteils 3 erfolgen entlang einer durch den vertikal ausgerichteten Doppelpfeil angedeuteten, vertikal verlaufenden Bewegungsachse, d. h. z. B. entlang einer Symmetrie- oder Zentralachse des Kanalschachts 98. Das Gehäuseteil 3 ist über die Führungseinrichtung 99 gegen ein Verkanten in dem Kanalschacht 98 gesichert bewegbar geführt; die Führungseinrichtung 99 verhindert also ein Verkanten des Gehäuseteils 3 in dem Kanalschacht 98.

In dem Ausführungsbeispiel gemäß Fig. 27 ist eine Führungseinrichtung 99 dargestellt, welche mehrere verteilt an dem bzw. um das Gehäuseteil 3 angeordnete rad- oder rollenartige Führungselemente 100 umfasst, über welche das Gehäuseteil 3 abrollartig entlang der Wandung des Kanalschachts 98 bewegbar an der Wandung des Kanalschachts 98 geführt ist. Entsprechende rad- oder rollenartige Führungselemente 100 liegen unmittelbar an der Wandung des Kanalschachts 98 an, so wandungsseitig keine besonderen Vorkehrungen zur Realisierung der bewegbaren Führung des Gehäuseteils 3 notwendig sind. Bei den rad- oder rollenartigen Führungselementen 100 handelt es sich konkret um Räder bzw. Rollen.

Die rad- oder rollenartigen Führungselemente 100 sind an einer an dem Gehäuseteil 3 angeordneten oder ausgebildeten Halteeinrichtung 101 gelagert. Die rad- oder rollenartigen Führungselemente 100 sind dabei über die Halteeinrichtung 101 gegen die Wandung des Kanalschachts 98 verspannt. Durch eine derartige Halterung und Verspannung ist eine sichere vertikale Positionierung des Gehäuseteils 3 in dem Kanalschacht 98 möglich. Die Spannkraft ist so gewählt, dass ein unkontrolliertes Absinken des Gehäuseteils 3 verhindert, vertikale Bewegungen des Gehäuseteils 3, z. B. hervorgerufen durch schwallwasserbedingte Auftriebskräfte, insbesondere in Richtung eines Kanalschachtdeckels 102 bzw. in Richtung einer oberen Kanalschachtöffnung, gleichwohl ermöglicht sind.

Die Halteeinrichtung 101 umfasst klapp- bzw. schwenkbar an dem Gehäuseteil 3 gelagerte Haltearme 103, welche gegen die Wandung des Kanalschachts 98 klapp- oder schwenkbar sind. Die Haltearme 103 sind mit einem Spannelement 104, insbesondere einem Federelement, z. B. in Form einer Druckfeder, gekoppelt. Über die zwischen dem Gehäuseteil 3 und jeweiligen Haltearmen 103 angeordneten Spannelemente 104 ist eine die Führungselemente 100 gegen die Wandung des Kanalschachts 98 verspannende Spannkraft, insbesondere Federkraft, auf die Haltearme 103 ausgeübt. Über eine derartig ausgebildete Halteeinrichtung 101 lässt sich das Gehäuseteil 3 in eine Vielzahl an Kanalschächten 98 mit unterschiedlichen Durchmessern einsetzen und (winklig) gegen die Kanalschachtwandungen verspannen.

Strichliert dargestellt ist eine Halteeinrichtung 101, welche, insbesondere teleskopartig, verlängerbare Haltearme 103 umfasst, welche radial (bezüglich der Symmetrie- oder Zentralachse des Gehäuseteils 3 bzw. des Kanalschachts 98) gegen die Wandungen des Kanalschachts 98 verlängerbar (vgl. den horizontalen Doppelpfeil) sind. Diese Haltearme 103 können in analoger Weise mit entsprechenden Spannelementen 104, insbesondere Federelementen, z. B. in Form von Druckfedern, gekoppelt sein.

In dem Ausführungsbeispiel gemäß Fig. 28 ist eine Führungseinrichtung 99 gezeigt, welche ein gehäuseteilseitiges zahnradartiges Linearführungselement 105 und ein (kanalschacht)wandungsseitiges korrespondierendes bzw. mit diesem zusammenwirkendes zahnstangenartiges Linearführungselement 106 umfasst. Über die Führungseinrichtung 99 ist das Gehäuseteil 3 linear bewegbar an der Wandung des Kanalschachts 98 geführt. In diesem Fall umfasst die Führungseinrichtung 99 sonach auch wandungsseitige Führungselemente in Form entsprechender zahnstangenartiger Linearführungselemente 106. Die gehäuseteilseitigen und wandungsseitigen Linearführungselemente 105, 106 stehen in einem mechanischen Eingriff bzw. einer mechanischen Wirkverbindung, d. h. diese wirken unter Ausbildung einer entsprechenden Linearführung zusammen.

Für die in den Fig. 27 und 28 gezeigten Ausführungsbeispiele gilt gleichermaßen, dass die jeweiligen Führungseinrichtungen 99 eine mit wenigstens einem Führungselement 100 bzw. Linearführungselement 105, 106 koppelbare oder gekoppelte, insbesondere motorische, Antriebseinrichtung (nicht gezeigt) umfassen können, welche dazu eingerichtet ist, eine die Führungselemente 100 bzw. Linearführungselemente 105, 106 in eine uni- oder bidirektionale Antriebsbewegung versetzende Antriebskraft auf die Führungselemente 100 bzw. Linearführungselemente 105, 106 zu übertragen. Eine solche Antriebseinrichtung kann an oder in dem Gehäuseteil 3 angeordnet oder ausgebildet sein. Alternativ oder ergänzend kann eine entsprechende Antriebseinrichtung auch an oder in einem entsprechenden Führungselement 100 bzw. bzw. Linearführungselement 105, 106, d. h. z. B. integriert in ein rad- oder rollenartiges Führungselement 100 oder in ein Zahnrad, angeordnet oder ausgebildet sein. Bei einer entsprechenden Antriebseinrichtung kann es sich um einen Elektromotor handeln, dessen Energieversorgung analog der Energieversorgung anderer elektrischer bzw. elektronischer Komponenten der Vorrichtung 1 erfolgt.

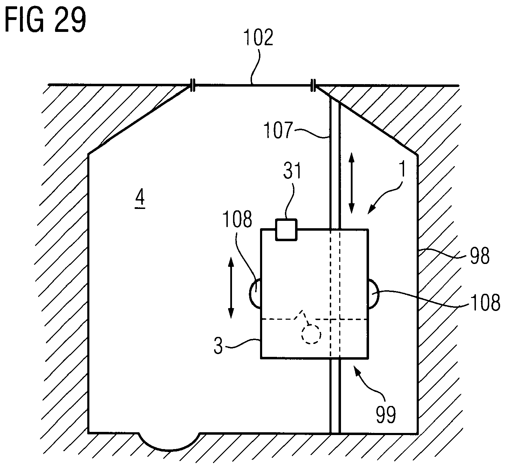

Anhand des Ausführungsbeispiels gemäß Fig. 29 ist zu erkennen, dass eine Führungseinrichtung 99 auch ein in dem Kanalschacht 98 befestigtes und an dem Gehäuseteil 3 angeordnetes bzw. dieses, insbesondere axial, durchsetzendes profil- oder stangenartiges Führungselement 107 umfassen kann. Das Gehäuseteil 3 ist hier auch relativ zu dem profilstangenartigen Führungselement 107 linear bewegbar geführt. Dies beinhaltet auch eine Befestigung des Gehäuseteils 3 an dem profil- stangenartigen Führungselement 107, welches wiederum kanalschachtseitig befestigt, d. h. z. B. eingemauert, verschraubt, etc., ist. Ersichtlich liegt das profil- oder stangenartige Führungselement 107 in dem Ausführungsbeispiel nicht unmittelbar an einer Kanalschachtwandung an, sondern ist konzentrisch innerhalb des Kanalschachts 98 angeordnet. Ein solches profil- oder stangenartiges Führungselement 107 kann insbesondere auch bei dem Ausführungsbeispiel gemäß Fig. 27 zweckmäßig sein, weshalb es dort strichliert, weil optional, ebenso dargestellt ist.

Anhand des Ausführungsbeispiels gemäß Fig. 29 ist ferner ersichtlich, dass zur Realisierung oder Unterstützung von Bewegungen des Gehäuseteils 3 in dem Kanalschacht 98 Schwimmkörper 108 vorhanden sein können. Die Positionierung der Schwimmkörper 108 an dem Gehäuseteil 3 ist oberhalb des strichliert, weil innerhalb des Gehäuseteil 3 befindlich, dargestellten Schließkörpers 15, sodass in dem Kanalschacht 98 aufsteigendes Wasser die gehäuseteilseitigen Schwimmkörper 108 erst erreicht, wenn sich der Schließkörper 15 bereits in der Schließstellung befindet. Wie in Fig. 29 dargestellt, ist es möglich, separate Schwimmkörper 108 an dem Gehäuseteil 3 anzuordnen.

Alternativ oder ergänzend kann das Gehäuseteil 3 bereits mit integrierten Schwimmkörpern 108 ausgebildet sein. Dies kann konstruktiv z. B. durch eine wenigstens einen Hohlraum definierende oder aufweisende Gehäuseteilwandung realisiert sein. Der Hohlraum ist beispielsweise mit Luft gefüllt. Denkbar ist es auch, eine Gehäuseteilwandung aus einem Material geringer Dichte zu fertigen, welches aufgrund des Dichteunterschieds auf einer Wasseroberfläche aufschwimmt und nicht untergeht. In allen Fällen ist eine Bewegung des Gehäuseteils 3 nach oben durch einen Anstieg des Wasserstands in dem Kanalschacht 98 und eine Bewegung des Gehäuseteils 3 nach unten durch einen Abfall des Wasserstands in dem Kanalschacht 98 induziert.

Für alle Ausführungsbeispiele gilt, dass das Gehäuseteil 3 mit Versteifungsstrukturen zur Erhöhung der mechanischen Stabilität des Gehäuseteils 3 versehen sein kann. Entsprechende Versteifungsstrukturen können, z. B. ring- oder rippenartig, ausgebildet sein. Entsprechende Versteifungsstrukturen können als separate Bauelemente, welche entsprechend an dem Gehäuseteil 3 anzusetzen bzw. mit diesem zu verbinden sind, vorliegen oder integral mit dem Gehäuseteil 3 ausgebildet sein.

Sämtliche in den Fig. gezeigten Ausführungsbeispiele der Vorrichtung 1 respektive einzelne oder mehrere Merkmale der in den in Fig. gezeigten Ausführungsbeispiele können untereinander beliebig kombiniert werden.

## Patentansprüche

1. Vorrichtung (1) zur Halterung eines Köders (2), insbesondere eines Köders für Nagetiere, umfassend:
- ein in einen Kanalschacht, insbesondere einen Abwasserkanalschacht oder einen Kabelkanalschacht, einsetzbares Gehäuseteil (3),
- wenigstens eine in dem Gehäuseteil (3) angeordnete Köderplattform (8), welche wenigstens eine Durchgangsöffnung (9) begrenzt, durch welche ein Nagetier zu einem auf der Köderplattform (8) angeordneten Köder (2) und/oder zu einem an wenigstens einer in dem Gehäuseteil (3) angeordneten Köderhalteeinrichtung (12) gehalterten Köder (2) gelangen kann, wobei die wenigstens eine Durchgangsöffnung (9) einen unterhalb dieser liegenden unteren Bereich (5b) des Gehäuseteils (5) und einen oberhalb dieser liegenden oberen Bereich (5a) des Gehäuseteils (5) definiert,
- wenigstens einen Schließkörper (15), welcher relativ zu der Köderplattform (8) bewegbar gelagert ist, wobei der Schließkörper (15) in einer Offenstellung derart von der Köderplattform (8) weg bewegt ist, dass die wenigstens eine köderplattformseitig begrenzte Durchgangsöffnung (9) freigegeben ist, und in einer Schließstellung derart gegen die Köderplattform (8) bewegt ist, dass die wenigstens eine köderplattformseitig begrenzte Durchgangsöffnung (9) verschlossen ist, **dadurch gekennzeichnet, dass** der obere Bereich (5a) des Gehäuseteils (5) in der Schließstellung des Schließkörpers (15) von dem unteren Bereich des Gehäuseteils (5) abgetrennt ist, so dass in der Schließstellung des Schließkörpers (15) ein Eindringen von Wasser in den oberen Bereich (5a) des Gehäuseteils (5) nicht möglich ist.

2. Vorrichtung nach Anspruch 1, **dadurch gekennzeichnet, dass** der Schließkörper (15) als Schwimmkörper ausgebildet ist oder wenigstens einen Schwimmkörper umfasst.

3. Vorrichtung nach Anspruch 1 oder 2, **gekennzeichnet durch** wenigstens eine mit dem Schließkörper (15) koppelbare oder gekoppelte Antriebseinrichtung, welche dazu eingerichtet ist, den Schließkörper (15) von der Offenstellung in die Schließstellung, und/oder umgekehrt, zu bewegen.

4. Vorrichtung nach einem der vorhergehenden Ansprüche, **gekennzeichnet durch** eine Schließstellungserfassungseinrichtung (26) zur Erfassung der Schließstellung des Schließkörpers (15), welche dazu eingerichtet ist, bei Erfassung der Schließstellung des Schließkörpers (15) wenigstens eine akustische und/oder optische Schließstellungsinformation zu erzeugen und über wenigstens ein Ausgabemittel (27) auszugeben.

5. Vorrichtung nach einem der vorhergehenden Ansprüche, **gekennzeichnet durch** wenigstens eine Köderhalteeinrichtung (12) zur Halterung eines Köders (2) sowie eine Anbisserfassungseinrichtung (29) zur Erfassung eines Köderanbisses, wobei die Anbisserfassungseinrichtung (29) dazu eingerichtet ist, bei Erfassung eines angebissenen Köders (2) wenigstens eine akustische und/oder optische Anbissinformation zu erzeugen und über wenigstens ein Ausgabemittel (27) auszugeben.

6. Vorrichtung nach Anspruch 4 oder 5, **dadurch gekennzeichnet, dass** das oder ein Ausgabemittel (27) in ein externes mobiles Endgerät integriert ist, wobei die Schließstellungserfassungseinrichtung (26) und/oder die Anbisserfassungseinrichtung (29) dazu eingerichtet ist, mit dem externen mobilen Endgerät zu kommunizieren und die Schließstellungsinformation und/oder die Anbissinformation an das externe mobile Endgerät zur Ausgabe an dem dortigen Ausgabemittel zu übertragen.

7. Vorrichtung nach einem der vorhergehenden Ansprüche, **dadurch gekennzeichnet, dass** in einem durch das Gehäuseteil (3) begrenzten Aufnahmeraum (5) wenigstens eine Aufnahmekammer (31) ausgebildet oder angeordnet ist, in welcher elektrische und/oder elektronische Komponenten der Vorrichtung (1), insbesondere Steuereinrichtungen und Erfassungseinrichtungen, anordenbar oder angeordnet sind.

8. Vorrichtung nach einem der vorhergehenden Ansprüche, **dadurch gekennzeichnet, dass** in oder an der oder in oder an wenigstens einer in einem durch das Gehäuseteil (3) begrenzten Aufnahmeraum (5) ausgebildeten oder angeordneten Aufnahmekammer (31), in welcher elektrische und/oder elektronische Komponenten der Vorrichtung (1), anordenbar oder angeordnet sind, wenigstens eine, insbesondere optische, Überwachungseinrichtung (83) zur Überwachung zumindest eines Teils des durch das Gehäuseteil (3) begrenzten Aufnahmeraums (5) angeordnet oder ausgebildet ist.

9. Vorrichtung nach einem der vorhergehenden Ansprüche, **gekennzeichnet durch** ein Schwallschutzelement (61) zum Schutz des Eindringens von Wasser in den oder einen durch das Gehäuseteil (3) begrenzten Aufnahmeraum (5), insbesondere in einen oberhalb der Durchgangsöffnung (9) liegenden oberen Bereich (5a) des Aufnahmeraums (5), bei einem schwallartig ansteigenden Wasserpegel in einem Kanalschacht, welches unterhalb der Köderplattform (8) anordenbar oder angeordnet ist.

10. Vorrichtung nach einem der vorhergehenden Ansprüche, **dadurch gekennzeichnet, dass** der Schließkörper (15) vermittels wenigstens eines bewegbar, insbesondere schwenkbar, an oder in dem Gehäuseteil (3), insbesondere an der Köderplattform (8), gelagerten klammerartigen Halteelements (72) bewegbar relativ zu der Köderplattform (8) gelagert ist.

11. Vorrichtung nach einem der vorhergehenden Ansprüche, **gekennzeichnet durch** eine Befestigungseinrichtung (73), über welche das Gehäuseteil (3), insbesondere lösbar, an einer Wandung einer Kanalisation (4), insbesondere eines Kanalschachts, befestigbar ist, wobei die Befestigungseinrichtung (73) wenigstens ein das Gehäuseteil (3) außenumfangsseitig umgreifendes, insbesondere ringförmiges, erstes Befestigungselement (74) und wenigstens ein zweites Befestigungselement (75) zur Befestigung des ersten Befestigungselements (74) an der Wandung einer Kanalisation (4) umfasst.

12. Vorrichtung nach einem der Ansprüche 1 bis 10, **gekennzeichnet durch** wenigstens eine Führungseinrichtung (99) zur, insbesondere linear, bewegbaren Führung des in einen Kanalschacht (98) eingesetzten Gehäuseteils (3) relativ zu einer Wandung des Kanalschachts (98).

13. Vorrichtung nach einem der vorhergehenden Ansprüche, **dadurch gekennzeichnet, dass** an oder in dem Gehäuseteil (3) wenigstens ein Schwimmkörper (108) ausgebildet oder angeordnet ist.

14. Vorrichtung nach einem der vorhergehenden Ansprüche, **dadurch gekennzeichnet, dass** in dem Gehäuseteil (3) mehrere Köderplattformen (8) angeordnet sind, wobei zwischen zwei benachbart angeordneten Köderplattformen (8) ein eine Zwischenebene definierender Zwischenraum (97) gebildet ist, wobei wenigstens ein Schließkörper (15) relativ zu wenigstens einer Köderplattform (8) bewegbar gelagert ist, wobei der Schließkörper (15) in einer Offenstellung derart von der wenigstens einen Köderplattform (8) weg bewegt ist, dass die wenigstens eine köderplattformseitig begrenzte Durchgangsöffnung (9) freigegeben ist, und in einer Schließstellung derart gegen die wenigstens eine Köderplattform (8) bewegt ist, dass die wenigstens eine köderplattformseitig begrenzte Durchgangsöffnung (9) verschlossen ist.

15. Kanalschacht, insbesondere Abwasserkanalschacht oder Kabelkanalschacht, umfassend wenigstens eine Vorrichtung (1) nach einem der vorhergehenden Ansprüche.

## Claims

1. Device (1) for holding a bait (2), in particular a bait for rodents, comprising:
- a housing part (3) insertable into a sewer shaft, in particular waste water sewer shaft or cable channel shaft,
- at least one bait platform (8) arranged in the housing part (3), the platform limiting at least one through-opening (9) through which a rodent can access a bait (2) arranged on the bait platform (8) or a bait (2) held on at least one bait-holding means (12) held in the housing part (3), wherein the at least one through-opening (9) defines a lower region (5b) of the housing part (5) located below said opening and an upper region (5a) of the housing part (5) located above said opening,
- at least one closing body (15), movably-mounted relative to the bait platform (8), wherein, in an open position, the closing body (15) is moved away from the bait platform (8) in such a way that the at least one through opening (9) delimited on the side of the bait platform is unblocked, and, in a closing position, is moved towards the bait platform (8) in such a way that the at least one through-opening (8) delimited on the side of the bait platform is blocked, **characterized in that**, in the closing position of the closing body (15), the upper region (5a) of the housing part (5) is separated from the lower region of the housing part (5), so that an intrusion of water into the upper region (5a) of the housing part (5) is not possible in the closing position of the closing body (15).

2. Device according to claim 1, **characterized in that** the closing body (15) is configured as a floating body or comprises at least one floating body.

3. Device according to claim 1 or claim 2, **characterized by** at least one drive device coupled or couplable with the closing body (15), which is configured to move the closing body (15) from the open position into the closing position, and/or vice versa.

4. Device according to one of the preceding claims, **characterized by** a closing position detection means (26) for the detection of the closing position of the closing body (15), which, upon detection of the closing position of the closing body (15), is configured to generate at least one acoustic and/or optical closing position information and to output said information via at least one output means (27).

5. Device according to one of the preceding claims, **characterized by** at least one bait holding means (12) for holding a bait (2), as well as a bite-detection means (29) for the detection of a bait being bitten-into, wherein the bite-detection means (29) is configured, upon detection of a bait being bitten into, to produce at least one acoustic and/or optical bitten-into information.

6. Device according to claim 4 or 5, **characterized in that** the or a output means (27) is integrate into an external mobile terminal, wherein the closing position detection means (29) is configured to communicate with the mobile terminal and to transmit the closing position information and/or the bitten-into information to the external mobile terminal for output on the local output means.

7. Device according to one of the preceding claims, **characterized in that** in a receiving space (5) delimited by the housing part (3), is arranged or formed at least one receiving chamber (31), in which electric or electronic components of the device, in particular control devices and detection devices are arrangeable or arranged.

8. Device according to one of the preceding claims, **characterized in that** at least one, in particular optical monitoring device (83) for monitoring at least one part of the receiving space (5) delimited by housing part (3) is formed in the or on the or in a or on at least one receiving chamber (31) arranged or formed in a receiving space (5) delimited by the housing part (3), in which electric or electronic components are arranged or can be arranged.

9. Device according to one of the preceding claims, **characterized by** a surge-protection element (61) for the protection against water entering the or a receiving space (5) delimited by the housing part (3), in particular entering an upper region (5a) of the receiving space (5), situated above the through-opening (9), in case of a surge-like increasing water line in a sewer shaft, which element is or can be arranged below the bait platform (8).

10. Device according to one of the preceding claims, **characterized in that** the closing body (15) is movably-supported relative to the bait platform (8), by means of at least one bracket-type holding element (72) which is movably, in particular pivotably supported on or in the housing part (3), in particular on the bait platform (8).

11. Device according to one of the preceding claims, **characterized by** a fastening device (73), via which the housing part (3) can be fastened, in particular releasably, in a wall of a sewer (4), in particular of a waste water sewer shaft, wherein the fastening device (73) comprises at least one first fastening element (74) engaging around the housing on the outer circumference, and at least one second fastening element (75) for fastening of the first fastening element (74) on the wall of a sewer (4).

12. Device according to one of claims 1 to 10, **characterized by** at least one guide device (99) for the, in particular linearly-, displaceable guidance of the housing part (3) placed into the sewer shaft relative to a wall of the sewer shaft (98).

13. Device according to one of the preceding claims, **characterized in that** at least one floating body (108) is arranged or formed on or in the housing part (3).

14. Device according to one of the preceding claims, **characterized in that** multiple bait platforms (8) are arranged in the housing part (3), wherein an intermediate space (97) defining an intermediate level is arranged between two adjacently-arranged bait platforms (8), wherein at least one closing body (15) is movably-supported relative to at least one bait platform (8), wherein the closing body (15) is moved, in an open position, away from the at least one bait platform in such a way that the at least one through-opening (9) delimited on the side of the bait platform is unblocked, and in a closing position is moved against the at least one bait platform (8) in such a way, that the at least one trough-opening (9) delimited on the side of the bait platform is closed.

15. Sewer shaft, in particular waste water sewer shaft or cable channel shaft, comprising at least one device (1) according to one of the preceding claims.

## Revendications

1. Dispositif (1) destiné à la fixation d'un appât (2), notamment un appât pour rongeurs, comprenant :
- une partie de boîtier (3) pouvant être placée dans un puits d'accès à un conduit, en particulier un puits d'accès à un conduit d'eaux usées ou un puits d'accès à un conduit de câbles,
- au moins une plateforme pour appât (8) disposée dans la partie de boîtier (3), qui limite au moins une ouverture de passage (9), par laquelle un rongeur peut accéder à un appât (2) disposé sur la plateforme pour appât (8) et/ou à un appât (2) fixé sur au moins un moyen de maintien d'appât (12) disposé dans la partie de boîtier (3), l'au moins une ouverture de passage (9) définissant une zone inférieure (5b) de la partie de boîtier (5) située au-dessous d'elle et une zone supérieure (5a) de la partie de boîtier (5) située au-dessus d'elle,
- au moins un corps de fermeture (15), qui est monté de manière déplaçable par rapport à la plateforme pour appât (8), le corps de fermeture (15) étant, dans une position d'ouverture, déplacé éloigné de la plateforme pour appât (8) de telle manière que l'au moins une ouverture de passage (9) limitée côté plateforme pour appât est débloquée, et, dans une position de fermeture, déplacé contre la plateforme pour appât (8) de telle manière que l'au moins une ouverture de passage (9) limitée côté plateforme pour appât est fermée, **caractérisé en ce que** la zone supérieure (5a) de la partie de boîtier (5) est séparée de la zone inférieure de la partie de boîtier (5) dans la position de fermeture du corps de fermeture (15), de sorte que, dans la position de fermeture du corps de fermeture (15), la pénétration d'eau dans la zone supérieure (5a) de la partie de boîtier (5) n'est pas possible.

2. Dispositif selon la revendication 1, **caractérisé en ce que** le corps de fermeture (15) est conçu sous la forme d'un corps flottant ou comprend au moins un corps flottant.

3. Dispositif selon la revendication 1 ou 2, **caractérisé par** au moins un moyen d'entraînement couplé ou pouvant être couplé au corps de fermeture (15) et configuré pour déplacer le corps de fermeture (15) de la position d'ouverture vers la position de fermeture, et/ou inversement.

4. Dispositif selon l'une des revendications précédentes, **caractérisé par** un moyen de détection de position de fermeture (26) destiné à détecter la position de fermeture du corps de fermeture (15) est configuré pour, lors de la détection de la position de fermeture du corps de fermeture (15), générer au moins une information acoustique et/ou optique de position de fermeture et l'émettre par le biais d'au moins un moyen de sortie (27).

5. Dispositif selon l'une des revendications précédentes, **caractérisé par** au moins un moyen de maintien d'appât (12) destiné à la fixation d'un appât (2) ainsi qu'un moyen de détection de morsure (29) destiné à détecter une morsure sur l'appât, le moyen de détection de morsure (29) étant configuré pour, lors de la détection d'un appât (2) mordu, générer au moins une information acoustique et/ou optique de morsure et l'émettre par le biais d'au moins un moyen de sortie (27).

6. Dispositif selon la revendication 4 ou 5, **caractérisé en ce que** le ou un moyen de sortie (27) est intégré dans un terminal mobile externe, le moyen de détection de position de fermeture (26) et/ou le moyen de détection de morsure (29) étant configuré(s) pour communiquer avec le terminal mobile externe et transmettre l'information de position de fermeture et/ou l'information de morsure au terminal mobile externe pour la sortie sur le moyen de sortie s'y trouvant.

7. Dispositif selon l'une des revendications précédentes, **caractérisé en ce qu'**au moins un compartiment de réception (31), dans lequel des composants électriques et/ou électroniques du dispositif (1), en particulier des moyens de commande et des moyens de détection, sont ou peuvent être disposés, est formé ou disposé dans un espace de réception (5) limité par la partie de boîtier (3).

8. Dispositif selon l'une des revendications précédentes, **caractérisé en ce que**, dans ou sur le compartiment de réception (31) ou dans ou sur au moins un compartiment de réception (31) formé ou disposé dans un espace de réception (5) limité par la partie de boîtier (3) et dans lequel des composants électriques et/ou électroniques du dispositif (1) sont ou peuvent être disposés, est disposé ou formé au moins un moyen de surveillance (83), en particulier optique, destiné à la surveillance d'au moins une partie de l'espace de réception (5) limité par la partie de boîtier (3).

9. Dispositif selon l'une des revendications précédentes, **caractérisé par** un élément de protection contre les projections (61) destiné à la protection contre la pénétration d'eau dans le ou un espace de réception (5) limité par la partie de boîtier (3), en particulier dans une zone supérieure (5a) de l'espace de réception (5) située au-dessus de l'ouverture de passage (9), lors d'une montée torrentielle du niveau d'eau dans un puits d'accès à un conduit, ledit élément de protection contre les projections étant ou pouvant être disposé au-dessous de la plateforme pour appât (8).

10. Dispositif selon l'une des revendications précédentes, **caractérisé en ce que** le corps de fermeture (15) est monté de manière déplaçable par rapport à la plateforme pour appât (8) au moyen d'au moins un élément de maintien (72) en forme de pince monté de manière déplaçable, en particulier pivotant, sur ou dans la partie de boîtier (3), en particulier sur la plateforme pour appât (8).

11. Dispositif selon l'une des revendications précédentes, **caractérisé par** un moyen de fixation (73), par le biais duquel la partie de boîtier (3) peut être fixée, en particulier de manière détachable, sur une paroi d'une canalisation (4), en particulier d'un puits d'accès à un conduit, le moyen de fixation (73) comprenant au moins un premier élément de fixation (74), en particulier annulaire, enveloppant la partie de boîtier (3) sur sa périphérie extérieure et au moins un second élément de fixation (75) destiné à fixer le premier élément de fixation (74) sur la paroi d'une canalisation (4).

12. Dispositif selon l'une des revendications 1 à 10, **caractérisé par** au moins un moyen de guidage (99) destiné au guidage déplaçable, en particulier de manière linéaire, de la partie de boîtier (3) placée dans un puits d'accès à un conduit (98) par rapport à une paroi du puits d'accès au conduit (98).

13. Dispositif selon l'une des revendications précédentes, **caractérisé en ce qu'**au moins un corps flottant (108) est formé ou disposé sur ou dans la partie de boîtier (3).

14. Dispositif selon l'une des revendications précédentes, **caractérisé en ce que** plusieurs plateformes pour appât (8) sont disposées dans la partie de boîtier (3), un espace intermédiaire (97) définissant un niveau intermédiaire étant formé entre deux plateformes pour appât (8) disposées l'une à côté de l'autre, au moins un corps de fermeture (15) étant monté de manière déplaçable par rapport à au moins une plateforme pour appât (8), le corps de fermeture (15) étant, dans une position d'ouverture, déplacé éloigné de l'au moins une plateforme pour appât (8) de telle manière que l'au moins une ouverture de passage (9) limitée côté plateforme pour appât est débloquée, et, dans une position de fermeture, déplacé contre l'au moins une plateforme pour appât (8) de telle manière que l'au moins une ouverture de passage (9) limitée côté plateforme pour appât est fermée.

15. Puits d'accès à un conduit, en particulier puits d'accès à un conduit d'eaux usées ou puits d'accès à un conduit de câbles, comprenant au moins un dispositif (1) selon l'une des revendications précédentes.
